(19) Europäisches Patentamt

European Patent Office

Office européen des brevets

(11) Numéro de publication: **0 179 822**
**B1**

(12) **FASCICULE DE BREVET EUROPEEN**

(45) Date de publication du fascicule du brevet:
**09.03.88**

(21) Numéro de dépôt: **85901949.9**

(22) Date de dépôt: **24.04.85**

(86) Numéro de dépôt international:
**PCT/CH 85/00065**

(87) Numéro de publication internationale:
**WO 85/05115** (21.11.85 Gazette 85/25)

(51) Int. Cl.⁴: **C 08 L  1/10,** C 08 B  3/04,
D 01 F  2/28

(54) **COMPOSITIONS ANISOTROPES EN ESTERS CELLULOSIQUES; PROCEDES POUR OBTENIR CES COMPOSITIONS; FIBRES EN ESTERS CELLULOSIQUES OU EN CELLULOSE.**

(30) Priorité: **27.04.84  FR 8406912**

(43) Date de publication de la demande:
**07.05.86 Bulletin 86/19**

(45) Mention de la délivrance du brevet:
**09.03.88 Bulletin 88/10**

(84) Etats contractants désignés:
**AT BE CH DE FR GB IT LI LU NL SE**

(56) Documents cités:
**EP - A - 0 103 398**
**GB - A - 309**
**GB - A - 29 246**

(73) Titulaire: **MICHELIN RECHERCHE ET TECHNIQUE,**
**Schützenmattstrasse 77 B.P. 96, CH-4051 Basel (CH)**

(72) Inventeur: **VILLAINE, Philippe, Raubbülstrasse, 5a,**
**CH-8600 Dübendorf (CH)**
Inventeur: **JANIN, Claude, 28, rue Colombier Lanore,**
**F-63200 Riom (FR)**

(74) Mandataire: **Doussaint, Jean-Marie, MICHELIN & CIE**
**Service K. Brevets, F-63040 Clermont-Ferrand Cedex**
**(FR)**

ACTORUM AG

**Description**

L'invention concerne les matières cellulosiques. Par «matière cellulosique» on entend soit les matières végétales contenant à la fois de la cellulose et d'autres produits, par exemple la lignine, soit la cellulose obtenue par tout procédé, notamment des procédés basés sur des matières végétales.

L'invention concerne notamment une composition anisotrope à base d'au moins un dérivé cellulosique comportant des groupes ester de la cellulose, au moins une partie de ces groupes ester étant des groupes formiate. L'invention concerne également les articles obtenus à partir de cette composition, le formiate de cellulose de ces articles pouvant être régénéré en cellulose. L'invention concerne également les procédés qui permettent d'obtenir ces compositions et ces articles, ainsi que des articles à propriétés mécaniques élevées, ces articles étant à base de cellulose et/ou d'au moins un dérivé cellulosique précédemment défini. De tels articles peuvent être par exemple des fibres, des films.

Les brevets allemands 189 836, 189 837, 561 119, les brevets français 638 431, 541 048, les brevets anglais 260 650, 275 641 et les brevets américains 1 656 119, 1 900 599 décrivent des procédés pour transformer la cellulose en formiate de cellulose par action d'acide formique en présence de composés minéraux divers qui peuvent être notamment l'acide chlorhydrique, l'acide sulfurique, l'anhydride phosphorique. Les procédés décrits dans ces documents conduisent à au moins un des inconvénients suivants:

— impossibilité d'obtenir une solution de formiate de cellulose;

— dégradation importante de la cellulose lors de la réaction d'estérification ou au stockage, surtout lorsque la température devient supérieure à 0°C, le formiate de cellulose ayant un degré de polymérisation nettement inférieur à celui de la cellulose, avant estérification;

— impossibilité d'obtenir des articles à caractéristiques mécaniques élevées.

Le brevet américain 2 363 091 décrit la réalisation d'esters mixtes formiate-acétate de cellulose par action d'anhydride mixte formique-acétique sur la cellulose en présence d'un catalyseur qui peut être par exemple l'acide phosphorique ou l'anhydride phosphorique, la quantité de ce catalyseur ne dépassant pas 30% du poids de la cellulose. Le procédé décrit dans ce brevet ne permet pas d'obtenir une dissolution de la cellulose.

Le brevet allemand 227 198 décrit la dissolution de cellulose par action d'acide acétique et d'acide phosphorique. Ce brevet ne mentionne pas la réalisation de solution de formiate de cellulose. De plus, ce procédé décrit ne permet pas d'obtenir des concentrations en acétate de cellulose suffisantes pour obtenir des solutions anisotropes.

Le brevet anglais 263 810 décrit la dissolution de cellulose par action d'acide phosphorique et d'un acide organique qui peut être l'acide acétique, l'acide propionique, l'acide butyrique. Ce brevet ne décrit pas la réalisation de solution de formiate de cellulose. De plus, la concentration des esters cellulosiques dans les solutions décrites dans ce brevet n'est pas suffisante pour obtenir des solutions anisotropes.

Les brevets anglais 309 (1911) et 29246 (1910) ainsi que le brevet suisse 56146, et le brevet allemand 249535 décrivent des procédés dans lesquels on met de la cellulose au contact d'un mélange d'acide formique et d'acide phosphorique concentrés. Les exemples décrits dans ces brevets montrent qu'il n'y a pas obtention d'une solution cellulosique ou que l'on obtient une solution isotrope.

La demande de brevet allemand (DOS) N° 3035084 décrit la réalisation de solutions anisotropes en dissolvant des esters cellulosiques dans des solutions aqueuses d'acides inorganiques. Ce procédé ne s'applique pas au formiate de cellulose. De plus, ce procédé est coûteux car il emploie comme matière première des esters cellulosiques et non de la cellulose. En outre, ces esters cellulosiques ont en général un degré de polymérisation notablement moins élevé que celui de la cellulose utilisée pour les obtenir. On peut ajouter que les propriétés mécaniques des articles décrits dans cette demande et réalisés à partir de ces esters sont peu élevées. Enfin, cette demande ne décrit aucune régénération de la cellulose à partir des solutions d'esters cellulosiques, d'ailleurs une telle régénération serait très lente avec les solutions décrites, et pratiquement impossible à réaliser en continu.

Le but de l'invention est d'éviter ces inconvénients.

En conséquence, l'invention concerne une composition à base d'au moins un dérivé cellulosique comportant des groupes ester de la cellulose, au moins une partie des groupes ester étant des groupes formiate, cette composition étant caractérisée en ce qu'elle est une solution anisotrope susceptible de donner des fibres ou des films et contenant:

a) le ou les dérivés cellulosiques, la concentration du dérivé cellulosique ou de l'ensemble des dérivés cellulosiques dans la solution étant au moins égale à 10,2% en poids, le degré de polymérisation DP de la cellulose dans le ou les dérivés cellulosiques étant supérieur à 150 et inférieur à 1500;

b) de l'acide formique ou au moins deux composés choisis dans le groupe constitué par les acides organiques monocarboxyliques, les anhydrides et halogénures de ces acides, un de ces composés étant l'acide formique;

c) au moins un acide phosphorique.

L'invention concerne également un procédé pour obtenir cette composition en dissolvant la cellulose, cette dissolution pouvant être effectuée sans diminuer de façon notable le degré de polymérisation de la cellulose.

Ce procédé, dit «procédé de dissolution», est caractérisé par les points suivants:

a) on réalise un mélange à partir d'au moins trois matières:

(I) une matière cellulosique;

(II) une matière constituée par au moins un composé choisi dans le groupe formé par les acides organiques monocarboxyliques, les anhydrides et les halogénures de ces acides, cette matière étant constituée au moins en partie par l'acide formique et/ou par un anhydride de l'acide formique et d'un autre acide organique;

(III) une matière constituée soit par l'anhydride phosphorique, soit par au moins un acide phosphorique, soit par l'anhydride phosphorique et par au moins un acide phosphorique;

b) la quantité d'eau présente pour réaliser le mélange est nulle ou telle que le rapport

$$R_{er} = \frac{P_e - P_{er}}{P_I + P_{II} + P_{III} + P_e - P_{er}}$$

soit inférieur à 15,0% et supérieur à –7,5%, $R_{er}$ étant exprimé en pourcentage (%), $P_e$ étant le poids d'eau éventuellement présente, $P_{er}$ étant le poids d'eau susceptible de réagir éventuellement avec la matière (II) et/ou la matière (III), $P_I$ étant le poids de la cellulose dans la matière (I), $P_{II}$ étant le poids de la matière (II) et $P_{III}$ étant le poids de la matière (III);

c) les rapports $R_I$, $R_{II}$, $R_{III}$ étant définis par:

$$R_I = \frac{P_I}{P_I + P_{II} + P_{III} + P_e - P_{er}},$$

$$R_{II} = \frac{P_{II}}{P_I + P_{II} + P_{III} + P_e - P_{er}},$$

$$R_{III} = \frac{P_{III}}{P_I + P_{II} + P_{III} + P_e - P_{er}},$$

les rapports $R_I$, $R_{II}$, $R_{III}$, $R_{er}$ dont la somme $R_I + R_{II} + R_{III} + R_{er}$ est égale par définition à 100% vérifient les relations suivantes dont les valeurs sont exprimées en %:
— si $R_{er}$ vérifie la relation:
 $12,5 \leqslant R_{er} < 15,0$
on a les relations:
 $10,0 \leqslant R_I \leqslant 14,5$; $2,0 \leqslant R_{II} \leqslant 10,0$
avec la relation: $R_{II} \leqslant 0,89 R_I - 2,89$;
— si $R_{er}$ vérifie la relation:
 $10,0 \leqslant R_{er} < 12,5$
on a les relations:
 $10,0 \leqslant R_I \leqslant 19,5$; $2,0 \leqslant R_{II} \leqslant 17,0$
avec la relation: $R_{II} \leqslant 1,78 R_I - 8,78$
 si $R_I$ vérifie la relation: $R_I < 14,5$,
ou avec la relation:
 $R_{II} \leqslant - 1,40 R_I + 37,30$
 si $R_I$ vérifie la relation: $R_I \geqslant 14,5$;
— si $R_{er}$ vérifie la relation:
 $7,5 \leqslant R_{er} < 10,0$
on a les relations:
 $10,0 \leqslant R_I \leqslant 31,0$; $2,0 \leqslant R_{II} \leqslant 23,0$
avec la relation: $R_{II} \leqslant 4,40 R_I - 32,00$
 si $R_I$ vérifie la relation $R_I \leqslant 12,5$,
ou avec la relation:
 $R_{II} \leqslant - 1,19 R_I + 41,50$
 si $R_I$ vérifie la relation: $R_I \geqslant 15,5$;
— si $R_{er}$ vérifie la relation:
 $5,0 \leqslant R_{er} < 7,5$
on a les relations:
 $10,0 \leqslant R_I \leqslant 37,0$; $2,0 \leqslant R_{II} \leqslant 27,5$

avec la relation: $R_{II} \leqslant 4,17 R_I - 26,67$
 si $R_I$ vérifie la relation: $R_I \leqslant 13,0$,
ou avec la relation:
 $R_{II} \leqslant - 1,14 R_I + 49,14$
 si $R_I$ vérifie la relation: $R_I \geqslant 19,0$;
— si $R_{er}$ vérifie la relation:
 $2,5 \leqslant R_{er} < 5,0$
on a les relations:
 $10,0 \leqslant R_I \leqslant 37,0$; $2,0 \leqslant R_{II} \leqslant 36,5$
avec la relation: $R_{II} \leqslant 4,63 R_I - 28,25$
 si $R_I$ vérifie la relation: $R_I \leqslant 14,0$,
ou avec la relation:
 $R_{II} \leqslant - 1,23 R_I + 55,60$
 si $R_I$ vérifie la relation: $R_I \geqslant 15,5$;
— si $R_{er}$ vérifie la relation:
 $- 2,5 < R_{er} < 2,5$
on a les relations:
 $10,0 \leqslant R_I \leqslant 38,0$; $2,0 \leqslant R_{II} \leqslant 40,0$
avec la relation: $R_{II} \leqslant 2,80 R_I + 5,00$
 si $R_I$ vérifie la relation: $R_I \leqslant 12,5$,
ou avec la relation:
 $R_{II} \leqslant - 1,14 R_I + 62,14$
 si $R_I$ vérifie la relation: $R_I \geqslant 19,5$;
— si $R_{er}$ vérifie la relation:
 $- 5,0 < R_{er} \leqslant - 2,5$
on a les relations:
 $10,0 \leqslant R_I \leqslant 35,0$; $2,0 \leqslant R_{II} \leqslant 45,0$
avec la relation: $R_{II} \leqslant - 1,30 R_I + 64,50$;
— si $R_{er}$ vérifie la relation:
 $- 7,5 < R_{er} \leqslant - 5,0$
on a les relations:
 $10,0 \leqslant R_I \leqslant 32,0$; $2,0 \leqslant R_{II} \leqslant 36,0$
avec la relation: $R_{II} \leqslant 4,00 R_I - 22,00$
 si $R_I$ vérifie la relation: $R_I \leqslant 14,5$;

d) le degré de polymérisation DP de la cellulose de la matière (I) est supérieur à 150 et inférieur à 1500;

e) on laisse l'estérification de la cellulose s'effectuer dans ce mélange pendant un temps suffisant pour obtenir la solution anisotrope.

L'invention concerne également les compositions obtenues selon ce procédé de dissolution.

L'invention concerne également un procédé pour obtenir des articles à base d'au moins un dérivé cellulosique, caractérisé en ce qu'on transforme la composition conforme à l'invention en articles et en ce qu'on élimine des articles au moins une partie des produits autres que le/ou les dérivés cellulosiques.

L'invention concerne également un procédé pour obtenir des articles à base de cellulose régénérée caractérisé en ce qu'on régénère au moins en partie la cellulose des articles obtenus avec le procédé précédent.

L'invention concerne également les articles obtenus conformément à ces procédés.

L'invention concerne également une fibre constituée au moins en partie par un filament à base d'au moins un dérivé cellulosique comportant des groupes ester de la cellulose, au moins une partie de ces groupes ester étant des groupes formiate, caractérisée en ce qu'elle a les propriétés suivantes:

a) le degré de substitution DS de la cellulose en groupes formiate est au moins égal à 2% et le degré de polymérisation DP de la cellulose est supérieur à 150 et inférieur à 1500;

b) la ténacité T et le module initial $M_i$ de la fibre

vérifient les relations suivantes, T et $M_i$ étant exprimés en cN/tex:

$$T > 20; M_i > 1\ 000;$$

c) ce filament présente une morphologie telle qu'il est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament.

L'invention concerne également une fibre, dite «fibre en cellulose régénérée», constituée au moins en partie par un filament à base de cellulose et/ou d'au moins un dérivé cellulosique comportant des groupes ester de la cellulose, au moins une partie de ces groupes ester étant des groupes formiate, caractérisée en ce qu'elle a les propriétés suivantes:

a) le degré de substitution DS de la cellulose en groupes formiate est nul ou inférieur à 2% et le degré de polymérisation DP de la cellulose est supérieur à 150 et inférieur à 1500;

b) le degré de polymérisation DP de la cellulose, la ténacité T et le module initial $M_i$ de la fibre vérifient les relations suivantes, T et $M_i$ étant exprimés en cN/tex:

Pour           DP< 200, on a T>20 et $M_i$>1 800;
pour    200⩽DP< 300, on a T>30 et $M_i$>2 000;
pour    300⩽DP< 400, on a T>40 et $M_i$>2 400;
pour    400⩽DP<1500, on a T>60 et $M_i$>2 600;

c) ce filament présente une morphologie telle qu'il est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament.

Les poids $P_I$, $P_{II}$, $P_{III}$ sont les poids de la cellulose et des matières (II), (III) supposées anhydres, c'est-à-dire que ces poids sont déterminés en déduisant le poids de l'eau qui peut éventuellement se trouver dans une ou plusieurs des matières (I), (II), (III) au moment de la réalisation du mélange. Le poids $P_e$ est le poids d'eau éventuellement amenée, au moment de la réalisation du mélange, avec au moins une des matières (I), (II), (III) et/ou indépendamment de ces matières.

Le terme «cellulose» employé pour la simplification de la description désigne l'«holocellulose», c'est-à-dire l'ensemble de l'α-cellulose et des hémicelluloses, présentes dans la matière cellulosique, cette matière cellulosique pouvant être éventuellement dépourvue d'hémicellulose.

Les acides organiques monocarboxyliques utilisés éventuellement pour la matière (II) en même temps que l'acide formique et/ou au moins un anhydride mixte de l'acide formique, sont notamment les acides non aromatiques dont le nombre d'atomes de carbone varie de 2 à 5 comme par exemple l'acide acétique, l'acide propionique, l'acide butyrique, l'acide pentanoïque. Les anhydrides des acides monocarboxyliques utilisés éventuellement pour la matière (II) peuvent être notamment les anhydrides des acides précédemment cités, les anhydrides pouvant être par exemple des anhydrides mixtes, notamment des anhydrides mixtes de l'acide formique. Les halogénures d'acides monocarboxyliques éventuellement utilisés pour la matière (II) sont notamment des chlorures. L'invention couvre les cas où ces acides organiques, ces anhydrides et halogénures d'acides organiques comportent des groupes de substitution, par exemple des groupes halogènes, des groupes alcoyles.

Les composés utilisés pour la matière (III) conformément à l'invention sont notamment les acides phosphoriques comme l'acide orthophosphorique ($H_3PO_4$), l'acide pyrophosphorique ($H_4P_2O_7$), l'anhydride phosphorique ($P_2O_5$) ou les mélanges de ces composés entre eux ou avec d'autres acides phosphoriques comme les acides polyphosphoriques tels que définis dans le livre «Nouveau traité de chimie minéral» publié sous la direction de Paul Pascal, tome X, Masson Editeur 1956.

Les rapports précédemment définis $R_I$, $R_{II}$, $R_{III}$, $R_{er}$, seront expliqués ultérieurement plus en détail dans les exemples. Lorsque la matière (II) et/ou la matière (III) sont susceptibles de réagir avec l'eau, $P_{er}$ a une valeur non nulle. Dans le cas contraire $P_{er}$ a une valeur nulle.

Pour la réalisation du mélange, les matières (I), (II), (III) et l'eau éventuelle utilisée peuvent être mélangées en même temps, ou on peut réaliser au moins un prémélange que l'on mélange ensuite avec le reste des matières, par exemple un prémélange des matières (II) et (III).

Les termes «composition anisotrope» et «composition isotrope» utilisés dans la description ont la signification suivante.

Une composition anisotrope présente une anisotropie optique, c'est-à-dire que cette composition dans l'état relaxé, donc sans contrainte dynamique, dépolarise la lumière et présente une transmission de la lumière et une texture colorée homogène, lorsqu'elle est placée entre une lamelle de verre et un couvre objet à la température ambiante et lorsqu'on l'observe à travers un microscope entre polariseurs linéaires croisés. Dans une composition isotrope, au contraire, le champ du microscope est noir. En général, cette composition anisotrope est telle que sa concentration soit supérieure à la concentration critique déterminée sur la courbe qui représente la relation entre la viscosité de la composition et la concentration du ou des dérivés cellulosiques dans la composition. Sur une telle courbe, la viscosité de la composition augmente lorsque la concentration du ou des dérivés cellulosiques augmente et ceci jusqu'à la concentration critique, parfois appelée «point critique», où la courbe présente une variation notable dans la pente. Lorsque la concentration dépasse la concentration critique, la viscosité de la composition commence par diminuer ou augmente moins rapidement lorsque la concentration du ou des dérivés cellulosiques augmente, ce qui se traduit sur la courbe notamment par un maximum ou par un point d'inflexion. La composition est dite en général «anisotrope» lorsque sa concentration en dérivé(s) cellulosique(s) est supérieure à la concentration critique. Une telle courbe montrant la relation entre la viscosité et la concentration d'une composition sera étudiée ultérieurement. Dans toute cette description le terme «viscosité» se réfère à une viscosité dynamique.

L'invention sera aisément comprise à l'aide des exemples non limitatifs qui suivent et des figures toutes schématiques relatives à ces exemples.

Sur le dessin:

les figures 1 et 2 représentent chacune un diagramme ternaire illustrant des conditions d'application du procédé de dissolution conforme à l'invention;

la figure 3 représente un diagramme ternaire illustrant un ensemble de compositions conformes à l'invention;

la figure 4 représente une courbe montrant la relation entre la viscosité d'une composition et la concentration de cette composition en dérivé cellulosique;

la figure 5 représente les spectres caractéristiques de deux standards utilisés pour des mesures aux rayons X de fibres conformes à l'invention;

la figure 6 représente de façon schématique une coupe d'un filament conforme à l'invention, cette coupe étant effectuée selon un plan contenant l'axe du filament;

la figure 7 représente de façon schématique une coupe du filament représentée à la figure 6, cette coupe étant effectuée selon un plan perpendiculaire à l'axe du filament, ce plan étant schématisé par la ligne VII-VII à la figure 6;

les figures 8 et 9 donnent les valeurs de la ténacité T (figure 8) et du module initial $M_i$ (figure 9) en fonction du degré de polymérisation DP de la cellulose, pour des fibres régénérées conformes à l'invention.

Pour la clarté de la description, les exemples qui suivent sont classés en trois chapitres:

I – Compositions cellulosiques: ce chapitre décrit des essais montrant la réalisation de ces compositions ainsi que les compositions obtenues.

II – Articles en dérivés cellulosiques: ce chapitre décrit des essais montrant la réalisation de ces articles ainsi que les articles obtenus.

III – Articles en cellulose régénérée: ce chapitre décrit des essais montrant la réalisation de ces articles ainsi que les articles obtenus.

Les essais décrits dans ces exemples peuvent être soit des essais conformes à l'invention, soit des essais non conformes à l'invention et donnés à titre comparatif.

I. *Compositions cellulosiques*

A. *Matières cellulosiques:*

Huit matières cellulosiques sont utilisées. Ces matières cellulosiques sont référencées C1 à C8 et leurs caractéristiques sont données dans le tableau 1.

Les pourcentages indiqués dans ce tableau sont des pourcentages en poids par rapport au poids total de la matière cellulosique. La teneur en eau correspond à l'humidité résiduelle. Les caractéristiques de ce tableau sont déterminées de la façon suivante.

a) Teneur en α-cellulose: elle est déterminée selon la norme d'Allemagne fédérale DIN 54 355 de novembre 1977. Cette teneur correspond à la partie de matière cellulosique qui est insoluble dans une solution aqueuse de soude à 18% en poids.

b) Teneur en hémicelluloses: cette valeur est obtenue par le calcul: (% hémicelluloses) = 100 – (% α-cellulose) – (% résine) – (% eau) – (% cendres).

c) Teneur en holocellulose: comme défini précédemment, la teneur en holocellulose est obtenue par le calcul selon la relation – (% holocellulose) = (% α-cellulose) + (% hémicelluloses).

d) Teneur en résines: cette teneur est déterminée selon la norme d'Allemagne fédérale DIN 54 354 de novembre 1977, c'est-à-dire selon une méthode d'extraction au dichlorométhane.

e) Teneur en cendres: la teneur en cendres est mesurée suivant une méthode thermogravimétrique. L'appareil utilisé est une thermobalance Mettler du type TG 50 équipée d'un microprocesseur Mettler TC 10. La température augmente tout d'abord progressivement, de la température ambiante jusqu'à 950°C, avec tout d'abord un courant d'azote puis, à partir de 700°C, avec un courant d'air, la vitesse de chauffe étant de 20°C/minute. L'échantillon est refroidi à la température ambiante et ensuite pesé.

f) Teneur en eau (humidité résiduelle): elle est mesurée suivant une méthode thermogravimétrique sous azote avec le même appareillage que celui décrit au § e) précédent concernant la détermination de la teneur en cendres, la température augmentant progressivement de la température ambiante jusqu'à 150°C avec une vitesse de chauffe de 20°C/minute. L'échantillon est maintenu pendant 15 minutes à 150°C puis on le refroidit et on le pèse.

g) Degré de polymérisation DP: on détermine la viscosité inhérente IV de la matière cellulosique selon la norme suisse SNV 195598 de 1970, mais à différentes concentrations qui varient entre 0,5 et 0,05 g/dl.

La viscosité inhérente est définie par l'équation

$$IV = \frac{1}{C} \; Ln \; \frac{t}{t_o}$$

dans laquelle C représente la concentration en matière cellulosique sèche, «t» représente la durée d'écoulement de la solution diluée de polymère, $t_o$ représente la durée d'écoulement du solvant pur, dans un viscosimètre type Ubbelohde, et Ln représente le logarithme népérien, les mesures étant réalisées à 20°C.

La viscosité intrinsèque [η] est donnée par extrapolation à concentration nulle de la viscosité inhérente IV.

La masse moléculaire moyenne en poids $\overline{M}_w$ est donnée par la relation de Mark-Houwink: $[\eta] = K\overline{M}_w^{\alpha}$ où les constantes K et α sont respectivement: $K = 5,31 \times 10^{-4}$; $\alpha = 0,78$, ces constantes correspondant au système de solvant utilisé pour la détermination de la viscosité inhérente.

Ces valeurs sont données par L. Valtasaari, dans le document Tappi 48, 627 (1965).

Le degré de polymérisation (DP) est défini par la formule

$$DP = \frac{\overline{M}_w}{162}$$

162 étant la masse moléculaire du motif élémentaire de la cellulose.

h) pH de la pulpe: il est mesuré selon la norme d'Allemagne fédérale DIN 53124 de décembre 1960.

B. *Appareillage et méthode pour réaliser les compositions*

La réalisation des compositions est effectuée dans un réacteur cylindrique en verre. Le volume intérieur de ce réacteur est d'environ 50 ml et son diamètre intérieur d'environ 20 mm. Ce réacteur est muni d'une enveloppe extérieure thermostatée pour que la température des produits à l'intérieur du réacteur soit maintenue à 25°C. L'agitation s'effectue dans le réacteur à l'aide de deux spirales métalliques dont une est fixe et l'autre tourne autour de l'axe du cylindre du réacteur avec une vitesse d'environ 15-20 tours/minute, la spirale mobile étant plus éloignée de l'axe que la spirale fixe. L'agitation intéresse ainsi tout le volume intérieur du réacteur. Pour la simplification de la description, toutes les matières utilisées pour réaliser les mélanges, y compris l'eau éventuelle, sont appelées «matières de base».

Les matières de base sont pour chaque essai malaxées tout d'abord ensemble dans un mortier de façon à obtenir une pâte que l'on introduit ensuite dans le réacteur cylindrique. On poursuit alors l'agitation dans le réacteur pour favoriser l'estérification de la cellulose. On prélève des échantillons du mélange, par intervalles, pour les examiner au microscope et on arrête l'agitation s'il y a formation d'une solution. L'agitation est de toute façon arrêtée au bout de 8 heures qu'il y ait ou non formation d'une solution.

Le mélange final est appelé «composition», à la fin de l'agitation.

C. *Exemples d'essais de réalisation de compositions*

1. *Remarques générales*

Les exemples qui suivent sont constitués d'essais dont chacun décrit la réalisation d'un mélange et l'étude de la composition obtenue qui peut être soit conforme à l'invention, soit non conforme à l'invention. Ces essais sont détaillés dans les tableaux 4 à 14, ces tableaux étant résumés dans le tableau 2. La réalisation de chaque mélange s'effectue en mélangeant quatre matières de base qui sont l'eau et les matières (I), (II), (III) suivantes:

(I) Une matière cellulosique, choisie parmi les matières décrites au § A. précédent. Cette matière peut être séchée avant usage pour en enlever au moins partiellement l'eau.

(II) Une matière constituée par au moins un des produits suivants: acide organique, anhydride d'acide(s) organique(s), chlorure d'acide organique.

(III) Une matière constituée par au moins un des produits suivants: acide minéral, anhydride d'acide minéral, acide organique.

Lorsqu'un essai est conforme à l'invention, les matières (II) et (III) sont conformes respectivement aux matières (II) et (III) définies précédemment dans le procédé de dissolution conforme à l'invention.

L'eau peut être introduite dans le mélange avec au moins une des matières (I), (II), (III), par exemple en utilisant de l'acide orthophosphorique aqueux, et/ou indépendamment de ces matières.

Les mélanges sont réalisés avec l'appareillage et la méthode décrits au § B. précédent.

Pour la réalisation de chaque mélange, on définit les rapports suivants:

$$R_I = \frac{P_I}{P_I + P_{II} + P_{III} + P_e - P_{er}} \; ;$$

$$R_{II} = \frac{P_{II}}{P_I + P_{II} + P_{III} + P_e - P_{er}} \; ;$$

$$R_{III} = \frac{P_{III}}{P_I + P_{II} + P_{III} + P_e - P_{er}} \; ;$$

$$R_{er} = \frac{P_e - P_{er}}{P_I + P_{II} + P_{III} + P_e - P_{er}} \; .$$

On a

$$R_I + R_{II} + R_{III} + R_{er} = 1.$$

Dans ces rapports, $P_I$ représente le poids d'holocellulose dans la matière (I), $P_{II}$ représente le poids de matière (II), $P_{III}$ représente le poids de matière (III), $P_e$ représente le poids de l'eau, $P_{er}$ représente le poids d'eau susceptible de réagir avec la maltière (II) et/ou la matière (III). Les poids $P_I$, $P_{II}$, $P_{III}$ sont des poids de matières anhydres, c'est-à-dire qu'ils sont calculés en faisant abstraction de l'eau qui se trouve déjà au contact des matières (I), (II) ou (III) avant la réalisation du mélange, cette eau étant comptabilisée dans le poids $P_e$. C'est ainsi par exemple que si on fait un essai en mélangeant une des matières cellulosiques $C_1$ à $C_8$ avec une solution aqueuse d'acide formique et avec une solution aqueuse d'acide orthophosphorique, $P_I$ représente le poids d'holocellulose anhydre, $P_{II}$ représente le poids d'acide formique anhydre, $P_{III}$ représente le poids d'acide orthophosphorique anhydre et $P_e$ représente la somme du poids de l'eau présente dans la matière cellulosique, après séchage éventuel, et des poids de l'eau présente dans les solutions d'acide formique et d'acide orthophosphorique.

L'eau éventuellement apportée par l'air ambiant n'est pas prise en compte dans le poids $P_e$. Il va de soi que l'eau libérée par l'estérification de la cellulose lors des essais n'est pas prise en compte dans le poids $P_e$. Lorsque l'essai est conforme à l'invention, les rapports $R_I$, $R_{II}$, $R_{III}$, $R_{er}$ sont conformes aux rapports précédemment indiqués dans la définition donnée pour le procédé de dissolution conforme à l'invention.

Le poids $P_{er}$ est le poids total théorique d'eau susceptible de réagir avec la matière (II) et/ou la matière (III). C'est ainsi que, de façon générale, dans le cas du procédé de dissolution conforme à l'invention, l'eau est susceptible de réagir avec la matière (II) lorsque cette matière contient au moins un anhydride d'acide(s) organique(s) et/ou au moins un halogénure d'acide organique et l'eau est susceptible de réagir avec la matière (III) lorsque cette matière contient de l'anhydride phosphorique et/ou au moins un acide phosphorique autre que l'acide orthophosphorique.

Si aucune des matières (II), (III) ne peut réagir avec l'eau, $P_{er}$ a une valeur nulle.

Dans ce cas,

$$R_{er} = R_e = \frac{P_e}{P_I + P_{II} + P_{III} + P_e} .$$

Lorsque $P_{er}$ est égal ou supérieur à $P_e$, $P_{er}$ est nul ou négatif, c'est-à-dire que tout le poids d'eau $P_e$ est susceptible de réagir avec les matières (II) et/ou (III). Conformément à l'invention, $R_{er}$ est inférieur à 15% et supérieur à –7,5%.

2.  *Mesures et observations effectuées sur les compositions obtenues*

Les mesures et observations effectuées sur les compositions obtenues lors des essais sont les suivantes:

a) Solubilité: une goutte provenant du réacteur cylindrique est observée au moyen d'un microscope optique Olympus type BH2 avec un grossissement de 100. Par définition:

— il y a obtention d'une solution de la cellulose lorsqu'aucune particule solide de cellulose n'est visible;

— il y a insolubilité de la cellulose lorsque des particules solides de cellulose sont visibles.

Ce test est effectué à intervalles réguliers pendant chaque essai. Dans les exemples qui suivent, pour les essais conduisant à une solution, le temps d'agitation indiqué dans les tableaux 4 à 14 correspond au temps d'agitation du réacteur cylindrique au bout duquel le test précité montre la formation d'une solution. L'agitation est alors arrêtée pour cet essai. De toute façon, l'agitation de ce réacteur est arrêtée au bout de huit heures.

b) Isotropie ou anisotropie optique des solutions: cette observation n'est effectuée que sur les solutions. Une goutte de solution est placée entre polariseurs et analyseurs croisés d'un microscope optique de polarisation Olympus de type BH2, puis observée.

c) Degré de substitution (DS) de la cellulose en solution sous forme de dérivé cellulosique. On congèle la solution dans de l'azote liquide, on mélange le produit solide obtenu avec de la carboglace et on broie de façon à obtenir une poudre qu'on mélange à l'acétone ce qui donne un précipité qu'on filtre et qu'on extrait à l'acétone avec un extracteur soxhlet. La poudre restante est séchée à l'air à 70°C pendant au moins 30 minutes.

On pèse avec précision 400 mg de dérivé de la cellulose ainsi obtenu, on les introduit dans un erlenmeyer contenant 70 ml d'eau et 4 ml de soude normale (NaOH 1N). On chauffe à 100°C à reflux pendant 1/2 heure sous azote, on régénère ainsi la cellulose du dérivé cellulosique. Après refroidissement, la soude en excès est titrée en retour avec une solution d'acide chlorhydrique décinormale (HCl 0,1 N).

Le DS total déterminé par cette méthode donne le pourcentage total de groupes alcool de la cellulose qui ont été estérifiés, c'est-à-dire que DS = 100% lorsque les trois fonctions alcool du motif de la cellulose sont estérifiées.

Lorsque tous les groupes ester de ce dérivé cellulosique sont des groupes formiate, le DS ainsi déterminé donne directement le pourcentage de groupes alcool de la cellulose qui ont été transformés en groupes formiate. Lorsque le dérivé cellulosique comporte plusieurs groupes ester, par exemple des groupes formiate et des groupes acétate, pour distinguer les DS relatifs à chaque acide organique, on opère de la façon suivante, après avoir déterminé le DS total comme précédemment décrit. La solution neutre provenant de la détermination du DS total est rendue basique (pH = 11) de façon à précipiter la cellulose ainsi régénérée. On filtre cette cellulose. Le filtrat est concentré par évaporation de l'eau, puis acidifié par de l'acide chlorhydrique. Ce reste est pesé puis analysé par chromatographie en phase gazeuse pour en déterminer la teneur en acide organique autre que l'acide formique. A titre d'exemple, dans le cas de l'acide acétique les conditions d'analyse chromatographique en phase gazeuse sont les suivantes: colonne en verre: longueur 1,5 m, diamètre intérieur 2 mm; remplissage Porapak Q; appareil Pye Unicam; température de l'injecteur: 250°C; température du four: 140°C; température du détecteur FID: 220°C. On détermine ainsi le DS relatif à l'acide organique autre que l'acide formique, le DS relatif à l'acide formique se détermine ensuite par le calcul connaissant le DS total.

d) Degré de polymérisation (DP) de la cellulose en solution sous forme de dérivé cellulosique. On isole le dérivé cellulosique et on régénère ensuite la cellulose de ce dérivé en traitant ce dérivé à reflux avec de la soude normale, ces deux opérations étant identiques à celles décrites au § c) précédent. On lave à l'eau la cellulose obtenue, on la sèche et on mesure le DP comme décrit précédemment au § A.g).

En plus des valeurs de DP concernant la cellulose estérifiée, les tableaux des exemples qui suivent indiquent également la variation de DP (Δ DP) par rapport au DP de la cellulose initiale (DP donné dans le tableau 1 pour la matière cellulosique utilisée pour l'essai correspondant). Ce Δ DP est exprimé en valeur absolue et en % par rapport au DP de la cellulose initiale.

e) Constitution des compositions. Cette constitution est déterminée par le calcul à partir du DS mesuré dans les dérivés cellulosiques et à partir des proportions respectives des matières de base.

Le tableau 2 suivant donne un résumé des conditions de chaque exemple. Les astérisques indiqués dans ce tableau après certains numéros d'exemples signifient que les exemples correspondants sont conformes à l'invention, les autres n'étant pas conformes à l'invention. Dans les tableaux détaillés 4 à 14 relatifs à ces exemples, les abréviations suivantes sont utilisées:

— ligne «solubilité»: «SL» veut dire «soluble» et «INSL» veut dire «insoluble»;

— ligne «nature de la solution»: «IS» veut dire «isotrope» et «ANIS» veut dire «anisotrope».

Dans ces tableaux détaillés, la constitution de la composition obtenue (% en poids) n'est donnée que si cette composition est une solution.

Sur les tableaux 4 à 14 sont portées les indications concernant les matières de base, les temps d'agitation et les compositions obtenues. En plus des rapports et abréviations précédemment définis, ces tableaux comportent les abréviations suivantes:

Tps d'agitation: temps d'agitation du mélange, Der. cel.: dérivé cellulosique présent dans la composition, Ac. org.: acide(s) organique(s) présent(s) dans la composition, Ac. min.: acide minéral ou acides minéraux présent(s) dans la composition, Nat. sol.: nature de la solution (c'est-à-dire isotrope ou anisotrope), DS cel.: degré de substitution de la cellulose du dérivé cellulosique présent dans la composition, Gr.: groupes (ex. groupes formiate), DP cel.: degré de polymérisation de la cellulose du dérivé cellulosique présent dans la composition, val. abs.: valeur absolue.

Les pourcentages portés à chacune des indications Der. cel., Ac. org., Ac. min., se réfèrent au pourcentage du composé ou de l'ensemble des composés correspondant à cette indication par rapport au poids total des constituants de la solution indiquée dans les tableaux, c'est-à-dire par exemple, pour les solutions des tableaux 4 à 14, par rapport au poids total: dérivé cellulosique + acide(s) organique(s) + acide minéral (ou acides minéraux) + eau éventuelle.

Dans les tableaux 4 à 14, les valeurs des rapports $R_I$, $R_{II}$, $R_{III}$, $R_{er}$, $R_e$ sont exprimées en %, c'est-à-dire que les chiffres indiqués dans les lignes correspondant à ces rapports peuvent être aussi considérés comme des parties en poids en prenant la somme $P_I + P_{II} + P_{III} + P_e - P_{er}$ égale à 100 parties en poids. C'est ainsi par exemple que pour l'essai n° 1 de l'exemple I-1 (tableau 4), on utilise $P_I = 29,8$ parties en poids d'holocellulose, $P_{II} = 9,9$ parties en poids d'acide formique, $P_{III} = 59,7$ parties en poids d'acide orthophosphorique, $P_e = 0,6$ parties en poids d'eau, avec $P_I + P_{II} + P_{III} + P_e = 100$, $P_{er}$ étant égal à zéro, c'est-à-dire $R_{er}$ étant égal à $R_e$ et à 0,6%, c'est-à-dire 0,006, la valeur de $R_e$ exprimée en % étant égale à 0,6.

Lorsque les remarques des tableaux 4 à 14 comportent des rapports pondéraux autres que $R_{er}$, il s'agit de rapports de poids de produits anhydres.

La liste des produits utilisés dans les exemples pour les matières (II) et (III) avec leur teneur en eau est donnée dans le tableau 3.

*Tableau 1*

| Composition et propriétés | Matières cellulosiques | | | | | | | |
|---|---|---|---|---|---|---|---|---|
| | $C_1$ | $C_2$ | $C_3$ | $C_4$ | $C_5$ | $C_6$ | $C_7$ | $C_8$ |
| Teneur en α-cellulose (%) | 50,97 | 83,61 | 90,19 | 92,94 | 91,23 | 93,08 | 80,89 | 92,92 |
| Teneur en hémi-celluloses (%) | 45,91 | 9,09 | 7,95 | 2,26 | 2,25 | 2,77 | 10,99 | 1,03 |
| Teneur en résines (%) | 0,02 | 0,03 | 0,03 | 0,02 | 0,61 | 0,31 | 0,16 | 0,02 |
| Teneur en cendres (%) | 0,00 | 0,09 | 0,10 | 0,10 | 0,06 | 0,20 | 0,09 | 0,02 |
| Teneur en eau (%) | 3,10 | 7,18 | 1,73 | 4,68 | 5,85 | 3,64 | 7,87 | 6,01 |
| Total des constituants | 100,00 | 100,00 | 100,00 | 100,00 | 100,00 | 100,00 | 100,00 | 100,00 |
| Teneur en cellulose (holocellulose) (%) | 96,88 | 92,70 | 98,14 | 95,20 | 93,48 | 95,85 | 91,88 | 93,95 |
| DP (degré de polymérisation) | 270,0 | 300,0 | 414,0 | 553,5 | 570,0 | 900,0 | 1383,0 | 1119,0 |
| pH de la pulpe | 6,98 | 7,11 | 7,20 | 6,95 | 6,30 | 6,42 | 5,20 | 8,50 |

*Tableau 2 (résumé des exemples du chapitre I)*

| N° d'exemple | Matière (I) | Matière (II) | | Matière (III) | | N° du tableau détaillé |
|---|---|---|---|---|---|---|
| I-1 * | $C_1,C_2,C_3,C_4,C_5,C_8$ | acide formique | | acide orthophosphorique | | 4 |
| I-2 * | $C_1,C_6,C_7,C_8$ | » | » | » | » | 5 |
| I-3 | $C_1,C_6$ | » | » | » | » | 6 |
| I-4 | $C_1,C_6,C_8$ | » | » | » | » | 7 |
| I-5 * | $C_1,C_6$ | » | » + acide acétique | » | » | 8 |

*Tableau 2 (suite)*

| N° d'exemple | Matière (I) | | Matière (II) | Matière (III) | N° du tableau détaillé |
|---|---|---|---|---|---|
| I-6 * | $C_1$ | | acide formique + autres composés, ou anhydride mixte de l'acide formique | acide orthophosphorique | 9 |
| I-7 | $C_1,C_6$ | | acide formique + acide acétique | »          » | 10 |
| I-8 * | $C_1,C_2,$ | $C_8$ | acide formique seul ou avec acide acétique | composé divers du phosphore | 11 |
| I-9 | $C_1,C_8$ | | acide formique | »      »      » | 12 |
| I-10 | $C_1$ | | divers composés sans acide formique ou sans anhydride mixte de l'acide formique | acide orthophosphorique | 13 |
| I-11 | $C_1$ | | acide formique | divers composés non conformes à l'invention | 14 |

\* exemples conformes à l'invention

*Tableau 3*
*[produits utilisés pour les matières de base (II) et (III)]*

| Référence du produit numéro | Nature du produit | Teneur en eau (% en poids) |
|---|---|---|
| 1 | Acide formique | 0,1 |
| 2 | Acide orthophosphorique | 0,6 |
| 3 | Acide acétique | 0,2 |
| 4 | Anhydride acétique | 0 |
| 5 | Anhydride mixte formique-acétique* | 0 |
| 6 | Chlorure d'acide acétique | 1 |
| 7 | Acide propionique | 0,1 |
| 8 | Acide formique aqueux | 48,3 |
| 9 | Acide méthyl -2-butyrique | 0,1 |
| 10 | Acide pyrophosphorique | 3 |
| 11 | Anhydride phosphorique | 0 |
| 12 | Acide orthophosphorique aqueux | 16 |
| 13 | Acide phosphoreux | 0,4 |
| 14 | Acide borique | 0,4 |
| 15 | Acide tétrafluoroborique | 50 |
| 16 | Acide sulfurique | 0,3 |
| 17 | Acide trifluoroacétique | 2 |
| 18 | Acide méthanesulfonique | 1 |
| 19 | Acide dichloroacétique | 0,4 |
| 20 | Acide monochloroacétique | 1 |
| 21 | Acide trichloroacétique | 1 |
| 22 | Acide formique | 0,7 |
| 23 | Acide orthophosphorique | 1,3 |
| 24 | Acide chloro-2-propionique | 0,4 |

\*  Composition en poids: anhydride mixte: 35%; anhydride acétique: 15%; acide acétique: 50%

## Tableau 4
### Exemple n° I-1 (essais conformes à l'invention)

| | | | No. essais | | | | | | | | | | | |
| | | | 1 | 2 | 3 | 4 | 5 | 6 | 7 | 8 | 9 | 10 | 11 | 12 | 13 |
|---|---|---|---|---|---|---|---|---|---|---|---|---|---|---|---|
| Matières de base | Rapports (%) | $R_I$ | 29,8 | 12,7 | 17,4 | 12,4 | 15,95 | 15,0 | 15,9 | 15,9 | 15,9 | 15,9 | 24,2 | 16,0 | 14,0 |
| | | $R_{II}$ | 9,9 | 18,4 | 7,5 | 12,4 | 18,85 | 2,5 | 18,85 | 18,85 | 18,85 | 18,85 | 9,9 | 12,0 | 13,2 |
| | | $R_{III}$ | 59,7 | 68,3 | 64,7 | 64,7 | 64,75 | 80,0 | 64,75 | 64,7 | 64,7 | 64,7 | 64,4 | 64,5 | 70,3 |
| | | $R_{er} = R_e$ | 0,6 | 0,6 | 10,4 | 10,5 | 0,45 | 2,5 | 0,5 | 0,55 | 0,55 | 0,55 | 1,5 | 7,5 | 2,5 |
| | | Total | 100,0 | 100,0 | 100,0 | 100,0 | 100,00 | 100,0 | 100,00 | 100,00 | 100,00 | 100,00 | 100,0 | 100,0 | 100,0 |
| | Tps d'agitation (heures) | | 2,75 | 0,75 | 1,0 | 0,58 | 1,0 | 6,5 | 2,5 | 5,0 | 4,0 | 6,5 | 1,5 | 1,3 | 6,8 |
| Composition obtenue | Constitution (% en poids) | Der. cel. | 33,65 | 15,7 | 18,4 | 13,6 | 19,45 | 16,05 | 19,2 | 19,0 | 19,05 | 19,4 | 27,4 | 17,7 | 16,5 |
| | | Ac. org. | 3,6 | 13,5 | 5,9 | 10,5 | 13,1 | 0,8 | 13,4 | 13,75 | 13,7 | 13,1 | 4,7 | 9,1 | 9,1 |
| | | Ac. min. | 59,7 | 68,3 | 64,7 | 64,7 | 64,75 | 80,0 | 64,75 | 64,7 | 64,7 | 64,7 | 64,4 | 64,5 | 70,3 |
| | | Eau | 3,05 | 2,5 | 11,0 | 11,2 | 2,7 | 3,15 | 2,65 | 2,55 | 2,55 | 2,8 | 3,5 | 8,6 | 4,1 |
| | | Total | 100,00 | 100,0 | 100,0 | 100,0 | 100,00 | 100,00 | 100,00 | 100,00 | 100,00 | 100,0 | 100,0 | 100,0 | 100,0 |
| | Caractéristiques | Solubilité | SL | SL | SL | SL | SL | SL | SL | SL | SL | SL | SL | SL | SL |
| | | Nat. sol. | ANIS | ANIS | ANIS | ANIS | ANIS | ANIS | ANIS | ANIS | ANIS | ANIS | ANIS | ANIS | ANIS |
| | | DS cel. (%) | 24,9 | 45,4 | 10,8 | 18,0 | 42,6 | 13,5 | 40,1 | 37,6 | 38,2 | 42,6 | 25,3 | 21,0 | 34,4 |
| | | DP cel. | 252 | 230 | 250 | 252 | 249,5 | 239 | 289 | 385 | 514,5 | 497,5 | 860 | 916 | 219 |
| | | $\Delta$ DP val. abs. | 18 | 40 | 20 | 18 | 20,5 | 31 | 11 | 29 | 39 | 72,5 | 259 | 203 | 81 |
| | | $\Delta$ DP (%) | 6,7 | 14,8 | 7,4 | 6,7 | 7,6 | 11,5 | 3,7 | 7,0 | 7,0 | 12,7 | 23,1 | 18,1 | 37,0 |

Remarques sur le tableau 4
1. *Matières de base:*
   — Matière (I): $C_1$: essais n° 1 à 6; $C_2$: essais n° 7 et 13; $C_3$: essai n° 8; $C_4$: essai n° 9; $C_5$: essai n° 10; $C_8$: essais n° 11 et 12.
   — Matière (II): acide formique (tableau 3, produit n° 1).
   — Matière (III): acide orthophosphorique (tableau n° 3, produit n° 2).
   Pour tous les essais, on a $R_{er} = R_e$.

2. *Compositions obtenues:*
   — Dérivé de la cellulose: formiate de cellulose.
   — Acide organique: acide formique.
   — Acide minéral: acide orthophosphorique.

*Tableau 5*
*Exemple n° I-2 (essais conformes à l'invention)*

| | | | No. essais | | | | | | |
|---|---|---|---|---|---|---|---|---|---|
| | | | 1 | 2 | 3 | 4 | 5 | 6 | 7 |
| Matières de base | Rapports (%) | $R_I$ | 29,8 | 17,5 | 17,4 | 29,0 | 25,0 | 15,9 | 15,9 |
| | | $R_{II}$ | 19,9 | 12,5 | 7,5 | 5,0 | 5,0 | 18,85 | 18,85 |
| | | $R_{III}$ | 49,7 | 65,0 | 64,6 | 64,4 | 65,0 | 64,75 | 64,75 |
| | | $R_{er} = R_e$ | 0,6 | 5,0 | 10,5 | 1,6 | 5,0 | 0,5 | 0,5 |
| | | Total | 100,0 | 100,0 | 100,0 | 100,0 | 100,0 | 100,00 | 100,00 |
| Tps d'agitation (heures) | | | 7,25 | 8 | 4 | 2,5 | 4,8 | 1,5 | 3 |
| Composition obtenue | Constitution (% en poids) | Der. cel. | 34,8 | 19,7 | 18,9 | 31,2 | 27,5 | 19,2 | 19,2 |
| | | Ac. org. | 11,7 | 8,8 | 5,1 | 1,4 | 0,9 | 13,4 | 13,4 |
| | | Ac. min. | 49,7 | 65,0 | 64,6 | 64,4 | 65,0 | 64,75 | 64,75 |
| | | Eau | 3,8 | 6,4 | 11,4 | 3,0 | 6,6 | 2,65 | 2,65 |
| | | Total | 100,0 | 100,0 | 100,0 | 100,0 | 100,0 | 100,00 | 100,00 |
| | Caractéristiques | Solubilité | SL | SL | SL | SL | SL | SL | SL |
| | | Nat. sol. | ANIS | ANIS | ANIS | ANIS | ANIS | ANIS | ANIS |
| | | DS cel. (%) | 32,2 | 24,5 | 16,3 | 14,4 | 19,2 | 40,0 | 40,4 |
| | | DP cel. | 760 | 228 | 722 | 836 | 801 | 756 | 1111 |
| | | $\Delta$ DP val. abs. | 140 | 42 | 178 | 282 | 99 | 144 | 272 |
| | | $\Delta$ DP (%) | 15,6 | 15,6 | 19,8 | 25,2 | 11,0 | 16,0 | 19,7 |

*Remarques sur le tableau 5:*
Mêmes remarques que pour le tableau 4 avec les différences suivantes pour la matière de base (I):
$C_1$: essai n° 2.
$C_6$: essais n° 1 et 3; 5 et 6.
$C_7$: essai n° 7.
$C_8$: essai n° 4.

**Tableau 6**
*Exemple n° I-3 (essais non conformes à l'invention)*

| | | | No. essais | | | | | | | |
|---|---|---|---|---|---|---|---|---|---|---|
| | | | 1 | 2 | 3 | 4 | 5 | 6 | 7 | 8 | 9 |
| Matières de base | Rapports (%) | $R_I$ | 2,5 | 2,5 | 19,9 | 4,5 | 2,5 | 2,5 | 5,0 | 17,5 | 5,0 |
| | | $R_{II}$ | 77,3 | 62,4 | 10,0 | 7,5 | 15,0 | 2,5 | 5,0 | 25,5 | 7,5 |
| | | $R_{III}$ | 19,9 | 34,8 | 49,8 | 68,0 | 80,0 | 80,0 | 65,0 | 50,0 | 80,0 |
| | | $R_{er} = R_e$ | 0,3 | 0,3 | 20,3 | 20,0 | 2,5 | 15,0 | 25,0 | 10,0 | 7,5 |
| | | Total | 100,0 | 100,0 | 100,0 | 100,0 | 100,0 | 100,0 | 100,0 | 100,0 | 100,0 |
| Tps d'agitation (heures) | | | 8 | 8 | 8 | 8 | 2 | 1,75 | 0,5 | 8 | 1,5 |
| Composition obtenue | Constitution (% en poids) | Der. cel. | | 3,2 | | | 3,0 | 2,6 | 5,5 | | 5,7 |
| | | Ac. org. | | 61,2 | | | 14,2 | 2,3 | 4,1 | | 6,4 |
| | | Ac. min. | | 34,8 | | | 80,0 | 80,0 | 65,0 | | 80,0 |
| | | Eau | | 0,8 | | | 2,8 | 15,1 | 25,4 | | 7,9 |
| | | Total | | 100,0 | | | 100,0 | 100,0 | 100,0 | | 100,0 |
| | Caractéristiques | Solubilité | INSL | SL | INSL | INSL | SL | SL | SL | INSL | SL |
| | | Nat. sol. | | IS | | | IS | IS | IS | | IS |
| | | DS cel. (%) | | 57,3 | | | 39,2 | 9,5 | 21,0 | | 25,5 |

*Remarques sur le tableau 6:*
Mêmes remarques que pour le tableau 4 avec la remarque suivante pour la matière de base (I):
$C_1$: essais n° 1 à 7 et 9.
$C_6$: essai n° 8.

*Tableau 7*
*Exemple n° I-4 (essais non conformes à l'invention)*

| | | | No. essais | | | | | | | |
|---|---|---|---|---|---|---|---|---|---|---|
| | | | 1 | 2 | 3 | 4 | 5 | 6 | 7 | 8 |
| Matières de base | Rapports (%) | $R_I$ | 2,5 | 19,8 | 7,5 | 5,0 | 5,0 | 2,5 | 22,5 | 30,8 |
| | | $R_{II}$ | 87,3 | 10,0 | 7,5 | 27,5 | 40,0 | 20,0 | 20,0 | 29,7 |
| | | $R_{III}$ | 10,0 | 49,7 | 49,8 | 65,0 | 50,0 | 65,0 | 50,0 | 42,4 |
| | | $R_{er} = R_e$ | 0,2 | 20,5 | 35,2 | 2,5 | 5,0 | 12,5 | 7,5 | − 2,5 |
| | | Total | 100,0 | 100,0 | 100,0 | 100,0 | 100,0 | 100,0 | 100,0 | 100,0 |
| Tps d'agitation (heures) | | | 8 | 8 | 8 | 4 | 2,5 | 2,5 | 8 | 8 |
| Composition obtenue | Constitution (% en poids) | Der. cel. | | | | 6,05 | 6,1 | 2,85 | | |
| | | Ac. org. | | | | 25,8 | 38,2 | 19,4 | | |
| | | Ac. min. | | | | 65,0 | 50,0 | 65,0 | | |
| | | Eau | | | | 3,15 | 5,7 | 12,75 | | |
| | | Total | | | | 100,00 | 100,0 | 100,00 | | |
| | Caractéristiques | Solubilité | INSL | INSL | INSL | SL | SL | SL | INSL | INSL |
| | | Nat. sol. | | | | IS | IS | IS | | |
| | | DS cel. (%) | | | | 40,4 | 41,9 | 28,1 | | |

*Remarques sur le tableau 7:*
Mêmes remarques que pour le tableau 4 avec la remarque suivante pour la matière de base (I):
$C_1$: essai n° 7.
$C_6$: essais n° 1 à 6.
$C_8$: essai n° 8.

Tableau 8
Exemple n° I-5 (essais conformes à l'invention)

| | | | | | No. essais | | | | |
|---|---|---|---|---|---|---|---|---|---|
| | | 1 | 2 | 3 | 4 | 5 | 6 | 7 | 8 | 9 |

Matières de base — Rapports (%)

| | 1 | 2 | 3 | 4 | 5 | 6 | 7 | 8 | 9 |
|---|---|---|---|---|---|---|---|---|---|
| $R_I$ | 34,8 | 15,0 | 30,0 | 30,0 | 15,9 | 16,3 | 16,4 | 14,5 | 17,5 |
| $R_{II}$ | 20,0 | 2,5 | 10,0 | 5,0 | 18,85 | 18,95 | 18,8 | 5,0 | 30,0 |
| $R_{III}$ | 44,7 | 80,0 | 55,0 | 57,5 | 64,7 | 64,15 | 64,25 | 68,0 | 50,0 |
| $R_{er} = R_e$ | 0,5 | 2,5 | 5,0 | 7,5 | 0,55 | 0,6 | 0,55 | 12,5 | 2,5 |
| Total | 100,0 | 100,0 | 100,0 | 100,0 | 100,00 | 100,00 | 100,00 | 100,0 | 100,0 |

| Tps d'agitation (heures) | 2,8 | 1,7 | 2,3 | 8 | 2 | 1,5 | 4,5 | 5,3 | 3 |
|---|---|---|---|---|---|---|---|---|---|

Composition obtenue — Constitution (% en poids)

| | 1 | 2 | 3 | 4 | 5 | 6 | 7 | 8 | 9 |
|---|---|---|---|---|---|---|---|---|---|
| Der. cel. | 39,8 | 15,9 | 32,5 | 31,6 | 19,1 | 19,15 | 18,9 | 15,3 | 20,9 |
| Ac. org. | 11,9 | 1,05 | 5,6 | 2,4 | 13,6 | 14,4 | 14,85 | 3,6 | 24,5 |
| Ac. min. | 44,7 | 80,0 | 55,0 | 57,5 | 64,7 | 64,15 | 64,25 | 68,0 | 50,0 |
| Eau | 3,6 | 3,05 | 6,6 | 8,5 | 2,6 | 2,3 | 2,0 | 13,0 | 4,6 |
| Total | 100,0 | 100,00 | 100,0 | 100,0 | 100,0 | 100,0 | 100,00 | 100,0 | 100,0 |

Caractéristiques

| | 1 | 2 | 3 | 4 | 5 | 6 | 7 | 8 | 9 |
|---|---|---|---|---|---|---|---|---|---|
| Solubilité | SL | SL | SL | SL | SL | SL | SL | SL | SL |
| Nat. sol. | ANIS | ANIS | ANIS | ANIS | ANIS | ANIS | ANIS | ANIS | ANIS |
| DS cel. (%) | | | | | | | | | |
| Gr. formiate | 25,9 | 11,2 | 15,6 | 9,4 | 38,2 | 28,2 | 20,7 | 11,1 | 35,2 |
| Gr. acétate | 1,17 | 0,1 | 0,33 | 0,7 | 0,4 | 3,8 | 5,8 | 0,0 | 1,4 |
| DP cel. | 252 | 262 | 217 | 203 | 258 | 254 | 248,5 | 485 | 724 |
| $\Delta$ DP val. abs. | 18 | 8 | 53 | 67 | 12 | 16 | 21,5 | 415 | 176 |
| $\Delta$ DP (%) | 6,7 | 2,96 | 9,6 | 24,8 | 4,4 | 5,9 | 8,0 | 46,1 | 19,6 |

Remarques sur le tableau 8:

1. *Matières de base*
   — Matière (I): $C_1$: essais n° 1 à 7; $C_6$: essais n° 8 et 9.
   — Matière (II): Mélange d'acide formique (tableau 3, produit 1) et d'acide acétique (tableau 3, produit 3). Le rapport poids d'acide formique/poids d'acide acétique est égal à 9 pour les essais n° 1 à 4, 8 et 9; il est égal à 4 pour l'essai 5, à 1 pour l'essai 6 et à 0,33 pour l'essai 7.
   — Matière (III): Acide orthophosphorique (tableau 3, produit 2). Pour tous ces essais, on a $R_{er} = R_e$.

2. *Compositions obtenues*
   — Dérivé de la cellulose: c'est un ester mixte de la cellulose comportant des groupes formiate et des groupes acétate dans des proportions variables.
   — Acides organiques: c'est un mélange d'acide formique et d'acide acétique. Le pourcentage indiqué correspond au pourcentage de ce mélange dans la composition.
   — Acide minéral: c'est l'acide orthophosphorique.

*Tableau 9*
*Exemple n° I-6 (essais conformes à l'invention)*

| | | | No. essais | | | | | | | |
|---|---|---|---|---|---|---|---|---|---|---|
| | | | 1 | 2 | 3 | 4 | 5 | 6 | 7 | 8 |
| Matières de base | Rapports (%) | $R_I$ | 16,0 | 16,1 | 15,9 | 15,95 | 16,25 | 15,9 | 15,9 | 16,25 |
| | | $R_{II}$ | 18,9 | 19,05 | 18,95 | 18,95 | 19,2 | 18,9 | 18,9 | 19,25 |
| | | $R_{III}$ | 64,95 | 65,15 | 64,55 | 65,05 | 65,9 | 64,65 | 64,65 | 65,85 |
| | | $R_{er} = R_e$ | 0,15 | − 0,3 | 0,60 | 0,05 | − 1,35 | 0,55 | 0,55 | − 1,35 |
| | | Total | 100,00 | 100,00 | 100,0 | 100,00 | 100,00 | 100,00 | 100,00 | 100,00 |
| Tps d'agitation (heures) | | | 1 | 3,5 | 0,7 | 2 | 8 | 1 | 1 | 1,5 |
| Composition obtenue | Constitution (% en poids) | Der. cel. | 19,5 | 19,5 | 18,7 | 19,3 | 19,7 | 19,3 | 19,35 | 19,9 |
| | | Ac. org. | 13,3 | 14,8 | 14,5 | 12,85 | 15,0 | 13,4 | 13,25 | 10,3 |
| | | Ac. min. | 64,75 | 64,4 | 64,6 | 65,65 | 64,75 | 64,6 | 64,65 | 68,85 |
| | | Eau | 2,45 | 1,3 | 2,2 | 2,2 | 0,55 | 2,7 | 2,75 | 0,95 |
| | | Total | 100,00 | 100,0 | 100,0 | 100,00 | 100,00 | 100,0 | 100,00 | 100,00 |
| | Caractéristiques | Solubilité | SL | SL | SL | SL | SL | SL | SL | SL |
| | | Nat. sol. | ANIS | ANIS | ANIS | ANIS | ANIS | ANIS | ANIS | ANIS |
| | | DS cel. (%) Gr. formiate | 42,8 | 34,7 | 32,4 | 40,3 | 17,8 | 40,0 | 41,3 | 31,2 |
| | | Autres groupes | 0,6 | 5,7 | 0,25 | 0,6 | 18,6 | 0,6 | 0,2 | 11,6 |
| | | DP cel. | 250,5 | 262,5 | 268 | 246,5 | 244,5 | 255 | 245 | 265 |
| | | Δ DP val. abs. | 19,5 | 7,5 | 2 | 23,5 | 25,5 | 15 | 25 | 5 |
| | | Δ DP (%) | 7,2 | 2,8 | 0,7 | 8,7 | 9,4 | 5,6 | 9,3 | 1,9 |

*Remarques sur le tableau 9:*

1. *Matières de base*
   — Matière (I): $C_1$.
   — Matière (II):
   - Essais n° 1 et 2: Mélange d'acide formique (tableau 3, produit 1) et d'anhydride acétique (tableau 3, produit 4). Le rapport poids d'acide formique/poids d'anhydride acétique est égal à 8,9 pour l'essai n° 1 et à 1 pour l'essai n° 2.
   - Essai n° 3: Mélange d'acide formique (tableau n° 3, produit 1) et d'acide chloro-2-propionique (tableau 3, produit 24). Le rapport poids d'acide formique/poids d'acide chloro-2-propionique est égal à 1.
   - Essais n° 4 et 8: Mélanges d'acide formique (tableau 3, produit 1) et du chlorure de l'acide acétique (tableau 3, produit 6). Le rapport poids d'acide formique/poids de chlorure de l'acide acétique est égal à 8,9 pour l'essai n° 4 et à 1 pour l'essai n° 8.
   - Essai n° 5: Anhydride mixte formique-acétique (tableau 3, produit 5).
   - Essai n° 6: Mélange d'acide formique (tableau 3, produit 1) et d'acide propionique (tableau 3, produit 7). Le rapport poids d'acide formique/poids d'acide propionique est égal à 9.
   - Essai n° 7: Mélange d'acide formique (tableau 3, produit 1) et d'acide méthyl-2-butyrique (tableau 3, produit 9). Le rapport poids d'acide formique/poids d'acide méthyl-2-butyrique est égal à 9.
   — Matière (III): acide orthophosphorique (tableau 3, produit 2). Pour les essais 3, 6 et 7, on a $R_{er} = R_e$.

2. *Compositions obtenues*
   — *Dérivé de la cellulose:* Comme pour le tableau 8, il s'agit pour chaque essai d'un ester mixte de la cellulose contenant des groupes formiate et des groupes d'autres esters (par exemple des groupes acétate pour l'essai n° 1).
   — *Acides organiques:* Pour chaque essai, il s'agit d'un mélange de l'acide formique et d'un autre acide (par exemple l'acide acétique pour l'essai n° 1).
   — *Acide minéral:* Il s'agit de l'acide orthophosphorique, ou dans le cas des essais 4 et 8, d'un mélange d'acide orthophosphorique et d'acide chlorhydrique.

*Tableau 10*
*Exemple n° I-7 (essais non conformes à l'invention)*

| | | | No. essais | | | | | |
|---|---|---|---|---|---|---|---|---|
| | | | 1 | 2 | 3 | 4 | 5 | 6 |
| Matières de base | Rapports (%) | $R_I$ | 2,0 | 2,5 | 2,0 | 2,5 | 20,0 | 40,4 |
| | | $R_{II}$ | 2,5 | 2,5 | 10,0 | 15,0 | 20,0 | 10,9 |
| | | $R_{III}$ | 68,0 | 80,0 | 68,0 | 80,0 | 50,0 | 53,7 |
| | | $R_{er} = R_e$ | 27,5 | 15,0 | 20,0 | 2,5 | 10,0 | − 5,0 |
| | | Total | 100,0 | 100,0 | 100,0 | 100,0 | 100,0 | 100,0 |
| Tps d'agitation (heures) | | | 8 | 1,17 | 8 | 0,75 | 5,5 | 8 |
| Composition obtenue | Constitution (% en poids) | Der. cel. | | 2,6 | | 3,0 | | |
| | | Ac. org. | | 2,3 | | 14,2 | | |
| | | Ac. min. | | 80,0 | | 80,0 | | |
| | | Eau | | 15,1 | | 2,8 | | |
| | | Total | | 100,0 | | 100,0 | | |
| | Caractéristiques | Solubilité | INSL | SL | INSL | SL | INSL | INSL |
| | | Nat. sol. | | IS | | IS | | |
| | | DS cel. (%) Gr. formiate | | 9,0 | | 36,7 | | |
| | | Autres groupes | | 0,03 | | 1,1 | | |

*Remarques sur le tableau 10:*

1. *Matières de base:*
   — Matière (I): $C_1$: essais n° 1, 2, 5 et 6; $C_6$: essais n° 3, 4.
   — Matière (II): mélange d'acide formique (tableau 3, produit 1) et d'acide acétique (tableau 3, produit 3). Le rapport poids d'acide formique/poids d'acide acétique est égal à 9 pour tous les essais.
   — Matière (III): acide orthophosphorique (tableau 3, produit 2). Pour tous les essais on a: $R_{er} = R_e$.

2. *Compositions obtenues:*

   Mêmes remarques que pour le tableau 8, en tenant compte du fait que les essais n° 1, 3, 5 et 6 ne donnent pas de solution.

*Tableau 11*
*Exemple n° I-8 (essais conformes à l'invention)*

| | | | No. essais | | | | | | | | | |
|---|---|---|---|---|---|---|---|---|---|---|---|---|
| | | | 1 | 2 | 3 | 4 | 5 | 6 | 7 | 8 | 9 | 10 |
| Matières de base | Rapports (%) | $R_I$ | 17,0 | 15,3 | 17,15 | 17,55 | 17,95 | 17,95 | 17,65 | 19,4 | 16,45 | 25,6 |
| | | $R_{II}$ | 20,15 | 42,2 | 20,35 | 20,85 | 15,8 | 21,45 | 20,95 | 23,0 | 19,65 | 19,7 |
| | | $R_{III}$ | 69,3 | 45,0 | 62,2 | 64,7 | 71,65 | 66,9 | 60,9 | 57,3 | 66,7 | 57,1 |
| | | $R_{er}$ | − 6,45 | − 2,5 | 0,3 | − 3,1 | − 5,4 | − 6,3 | 0,5 | 0,3 | − 2,8 | − 2,5 |
| | | Total | 100,00 | 100,0 | 100,00 | 100,00 | 100,00 | 100,00 | 100,00 | 100,0 | 100,00 | 100,0 |
| | | Tps d'agitation (heures) | 1,5 | 4,5 | 1,25 | 1 | 2 | 2 | 0,5 | 0,5 | 1,5 | 1,5 |
| Composition obtenue | Constitution (% en poids) | Der. cel. | 20,0 | 19,4 | 19,1 | 19,6 | 19,85 | 20,4 | 18,2 | 18,4 | 18,9 | 30,0 |
| | | Ac. org. | 12,2 | 35,4 | 13,6 | 12,8 | 7,5 | 11,65 | 15,1 | 14,8 | 14,1 | 12,5 |
| | | Ac. min. | 67,9 | 45,0 | 64,9 | 67,6 | 72,65 | 67,95 | 64,8 | 64,9 | 67,0 | 57,1 |
| | | Eau | 0 | 0,2 | 2,4 | 0 | 0 | 0 | 1,9 | 1,9 | 0 | 0,4 |
| | | Total | 100,0 | 100,0 | 100,0 | 100,0 | 100,00 | 100,00 | 100,0 | 100,0 | 100,0 | 100,0 |
| | Caractéristiques | Solubilité | SL | SL | SL | SL | SL | SL | SL | SL | SL | SL |
| | | Nat. sol. | ANIS | ANIS | ANIS | ANIS | ANIS | ANIS | ANIS | ANIS | ANIS | ANIS |
| | | DS cel. (%) Gr. formiate | 49,3 | 51,6 | 39,1 | 44,6 | 48,2 | 54,3 | 27,5 | 30,4 | 34,4 | 33,2 |
| | | Autres groupes | | | | | | | | | 1,3 | |
| | | DP cel. | 242,5 | 668 | 242,5 | 251,0 | 260,5 | 257,5 | 270 | 260,5 | 259 | 817 |
| | | Δ DP val. abs. | 27,5 | 451 | 27,5 | 19,0 | 9,5 | 12,5 | 0,0 | 9,5 | 11,0 | 302 |
| | | Δ DP (%) | 10,2 | 40,3 | 10,2 | 7,0 | 3,5 | 4,6 | 0,0 | 3,5 | 4,1 | 26,9 |

*Remarques sur le tableau 11:*

1. *Matières de base:*
   — Matière (I): $C_1$: essais n° 1 et 3 à 9; $C_2$: essai n° 10; $C_8$: essai n° 2.
   — Matière (II):
      • Essais n° 1 à 7 et 10: acide formique (tableau 3, produit 1).
      • Essai n° 9: mélange d'acide formique (tableau 3, produit 1) et d'acide acétique (tableau 3, produit 3), le rapport poids d'acide formique/poids d'acide acétique étant égal à 1.
      • Essai n° 8: acide formique aqueux (tableau 3, produit 8).
   — Matière (III):
      • Essai n° 1, acide pyrophosphorique (tableau 3, produit 10).

- Essais n° 2, 9 et 10: mélange d'acide orthophosphorique (tableau 3, produit 2) et d'acide pyrophosphorique (tableau 3, produit 10). Le rapport poids d'acide orthophosphorique/poids d'acide pyrophosphorique étant égal à 0,74 pour l'essai 2, à 1 pour l'essai 9 et à 1,24 pour l'essai 10.
- Essais n° 3 à 7: mélange d'acide orthophosphorique aqueux (tableau 3, produit 12) et d'anhydride phosphorique (tableau 3, produit 11). Le rapport poids d'acide orthophosphorique/poids d'anhydride phosphorique est égal à 2 pour l'essai n° 3, à 1,35 pour l'essai n° 4, à 1,12 pour l'essai n° 5, à 0,98 pour l'essai n° 6 et à 1,08 pour l'essai n° 7.
- Essai n° 8: anhydride phosphorique seul (tableau 3, produit 11).

2. *Compositions obtenues:*

Les acides organiques sont l'acide formique (essais n° 1 à 8 et 10) ou un mélange d'acide formique et d'acide acétique (essai n° 9).

Les acides minéraux sont constitués par un mélange d'acide orthophosphorique et d'autres acides du phosphore.

Les dérivés de la cellulose sont, soit du formiate de cellulose (essais n° 1 à 8 et 10), soit un ester mixte de la cellulose contenant des groupes formiate et des groupes acétate (essai n° 9).

*Tableau 12*
*Exemple n° I-9 (essai non conforme à l'invention)*

| | | | No. essais | | |
|---|---|---|---|---|---|
| | | | 1 | 2 | 3 |
| Matières de base | Rapports (%) | $R_I$ | 2,6 | 35,0 | 45,0 |
| | | $R_{II}$ | 24,15 | 30,0 | 10,0 |
| | | $R_{III}$ | 73,25 | 37,5 | 50,0 |
| | | $R_{er}$ | 0,0 | − 2,5 | − 5,0 |
| | | Total | 100,00 | 100,0 | 100,0 |
| Tps d'agitation (heures) | | | 0,5 | 8 | 8 |
| Composition obtenue | Constitution (% en poids) | Der. cel. | 3,0 | | |
| | | Ac. org. | 21,1 | | |
| | | Ac. min. | 75,5 | | |
| | | Eau | 0,4 | | |
| | | Total | 100,0 | | |
| | Caractéristiques | Solubilité | SL | INSL | INSL |
| | | Nat. sol. | IS | | |
| | | DS cel. (%) | 49,3 | | |

*Remarques sur le tableau 12:*
1. *Matières de base*
   — Matière (I): $C_1$: essai n° 1; $C_8$: essais n° 2 et 3.
   — Matière (II): acide formique (tableau 3, produit 1).
   — Matière (III): essais n° 1 et 3: mélange d'acide orthophosphorique (tableau 3, produit 2) et d'anhydride phosphorique (tableau 3, produit 11). Le rapport poids d'acide orthophosphorique/poids d'anhydride phosphorique est égal à 2,00 pour l'essai 1 et à 2,44 pour l'essai 3.
   Essai n° 2: mélange d'acide orthophosphorique (tableau 3, produit 2) et d'acide pyrophosphorique (tableau 3, produit 10). Le rapport poids d'acide orthophosphorique/poids d'acide pyrophosphorique est égal à 0,42.
2. *Composition obtenue*
   Dérivé de la cellulose: formiate de cellulose.
   Acide organique: acide formique.
   Acides minéraux: mélanges d'acides phosphoriques.

*Tableau 13*
*Exemple n° I-10 (essais non conformes à l'invention)*

| | | | No. essais | | | | | |
|---|---|---|---|---|---|---|---|---|
| | | | 1 | 2 | 3 | 4 | 5 | 6 |
| Matières de base | Rapports (%) | $R_I$ | 16,85 | 16,45 | 6,6 | 15,9 | 16,6 | 6,5 |
| | | $R_{II}$ | 19,55 | 19,45 | 19,45 | 18,9 | 19,7 | 22,05 |
| | | $R_{III}$ | 66,45 | 66,95 | 76,85 | 64,8 | 67,8 | 75,75 |
| | | $R_{er}$ | − 2,85 | − 2,85 | − 2,9 | 0,4 | − 4,1 | − 4,3 |
| | | Total | 100,00 | 100,00 | 100,00 | 100,0 | 100,0 | 100,00 |
| Tps d'agitation (heures) | | | 8 | 8 | 4,25 | 8 | 8 | 2 |
| Composition obtenue | Constitution (% en poids) | Der. cel. | | | 9,5 | | | |
| | | Ac. org. | | | 16,2 | | | |
| | | Ac. min. | | | 74,3 | | | |
| | | Eau | | | 0 | | | |
| | | Total | | | 100,0 | | | |
| | Caractéristiques | Solubilité | INSL | INSL | SL | INSL | INSL | SL |
| | | Nat. sol. | | | IS | | | IS |
| | | DS cel. (%) | | | 62,3 | | | |

*Remarques sur le tableau 13:*

1. *Matières de base*
   — Matière (I): $C_1$.
   — Matière (II): pas d'acide formique ou d'anhydride mixte de l'acide formique.
      • Essais n° 1, 2, 3: anhydride acétique (tableau 3, produit 4).
      • Essai n° 4: acide acétique (tableau 3, produit 3).
      • Essais n° 5, 6: chlorure d'acide acétique (tableau 3, produit 6).
   — Matière (III): acide orthophosphorique (tableau 3, produit 2).
      Pour l'essai n° 4, $R_{er} = R_e$.

2. *Compositions obtenues:*
   Le dérivé de la cellulose est de l'acétate de cellulose, l'acide organique est l'acide acétique, l'acide minéral est l'acide orthophosphorique avec, éventuellement, de l'acide chlorhydrique.

Tableau 14

*Exemple n° I-11 (essais non conformes à l'invention)*

| | | | No. essais | | | | | | | | | |
|---|---|---|---|---|---|---|---|---|---|---|---|---|
| | | | 1 | 2 | 3 | 4 | 5 | 6 | 7 | 8 | 9 | 10 |
| Matières de base | Rapports (%) | $R_I$ | 15,9 | 15,9 | 15,9 | 15,9 | 15,9 | 15,9 | 15,9 | 15,95 | 15,95 | 19,7 |
| | | $R_{II}$ | 18,85 | 18,85 | 18,85 | 18,85 | 18,85 | 18,85 | 18,85 | 18,85 | 18,85 | 75,9 |
| | | $R_{III}$ | 64,75 | 64,75 | 32,5 | 64,8 | 64,75 | 64,75 | 64,75 | 64,35 | 64,35 | 3,4 |
| | | $R_{er} = R_e$ | 0,5 | 0,5 | 32,75 | 0,45 | 0,5 | 0,5 | 0,5 | 0,85 | 0,85 | 1,0 |
| | | Total | 100,00 | 100,00 | 100,00 | 100,00 | 100,00 | 100,00 | 100,00 | 100,00 | 100,00 | 100,0 |
| Tps d'agitation (heures) | | | 8 | 8 | 8 | 0,25 | 8 | 1 | 8 | 8 | 8 | 8 |
| Composition obtenue | Constitution (% en poids) | Der. cel. | | | | 18,35 | | 20,3 | | | | |
| | | Ac. org. | | | | 14,85 | | 11,65 | | | | |
| | | Ac. min. | | | | 64,8 | | 64,75 | | | | |
| | | Eau | | | | 2,0 | | 3,3 | | | | |
| | | Total | | | | 100,00 | | 100,00 | | | | |
| | Caractéristiques | Solubilité | INSL | INSL | INSL | SL | INSL | SL | INSL | INSL | INSL | INSL |
| | | Nat. sol. | | | | IS | | IS | | | | |
| | | DS cel. (%) | | | | 29,6 | | 53,2 | | | | |

*Remarques sur le tableau 14:*

1. *Matières de base*
   — Matière (I): $C_1$.
   — Matière (II): acide formique (tableau 3, produit 1).
   — Matière (III): essai n° 1: acide phosphoreux; essai n° 2: acide borique; essai n° 3: acide tétrafluoroborique; essai n° 4: acide sulfurique; essai n° 5: acide trifluoroacétique; essai n° 6: acide méthanesulfonique; essai n° 7: acide dichloroacétique; essai n° 8: acide monochloroacétique; essai n° 9: acide trichloroacétique.
   Tous ces produits sont référencés respectivement sous les numéros 13, 14, 15, 16, 17, 18, 19, 20 et 21 dans le tableau 3.
   Essai n° 10: acide chlorhydrique provenant de la matière (II) qui a été saturée en gaz H Cl.

2. *Compositions obtenues:*
   Le dérivé de la cellulose est essentiellement du formiate de cellulose. L'acide organique est l'acide formique. Les acides divers sont les mêmes que ceux de la matière (III).

## D. *Conclusions sur les exemples*

Les conclusions qu'on peut tirer des exemples I-1 à I-11 sont les suivantes.

1) Exemples non conformes à l'invention. Les exemples I-3, I-4, I-7, I-9, I-10, I-11 ne sont pas conformes à l'invention pour les raisons suivantes:

— soit au moins un des rapports $R_I$, $R_{II}$, $R_{III}$, $R_{er}$ ne vérifie pas les relations données précédemment dans la définition du procédé de dissolution conforme à l'invention. C'est le cas des exemples I-3, I-4, I-7, I-9.

— soit les matières (II) ou (III) ne sont pas conformes à celles indiquées dans cette définition du procédé de dissolution (exemples I-10, I-11).

Dans tous les cas, ces exemples non conformes à l'invention conduisent aux résultats suivants:

— soit il n'y a pas obtention d'une solution de la cellulose sous forme de dérivé cellulosique,

— soit il se forme une solution mais cette solution est isotrope.

Ces deux types de compositions ne correspondent pas à la définition de la composition conforme à l'invention donnée précédemment. Les compositions de ces exemples non conformes à l'invention ne sont pas adaptées à la réalisation de fibres ou de films à propriétés mécaniques élevées.

2) Exemples conformes à l'invention. Les exemples I-1, I-2, I-5, I-6, I-8 sont conformes au procédé de dissolution de l'invention. Ces exemples conduisent dans tous les cas à des compositions conformes à l'invention constituées chacune d'une solution anisotrope de la cellulose sous forme de dérivé cellulosique, c'est-à-dire à des compositions susceptibles de donner des fibres ou des films à propriétés mécaniques élevées, comme montré plus en détail dans les exemples des chapitres II et III qui suivent.

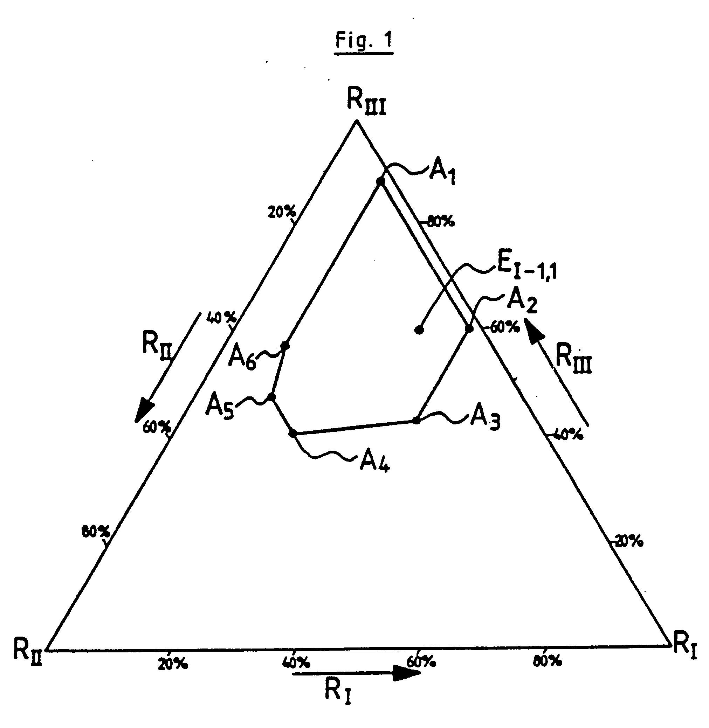

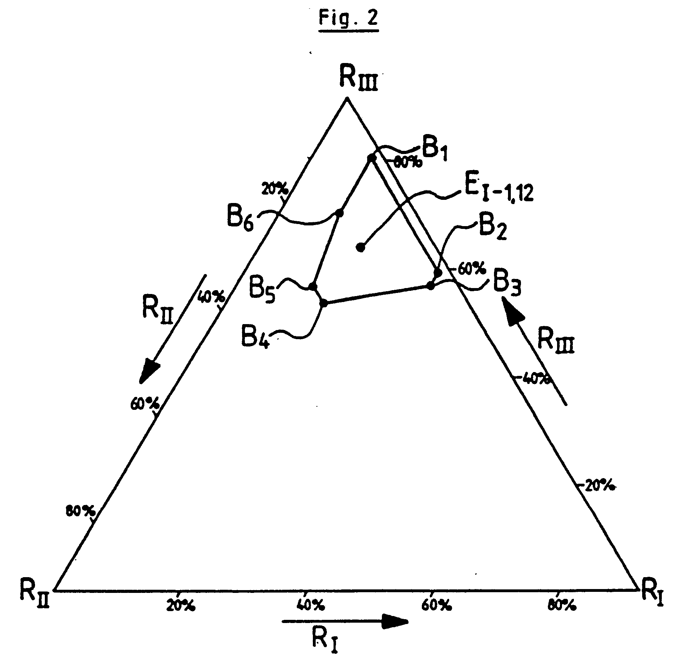

Dans le procédé de dissolution conforme à l'invention, les relations entre les rapports $R_I$, $R_{II}$, $R_{III}$, $R_{er}$ correspondent de façon inattendue à un domaine très limité. A titre d'exemple, les figures 1 et 2 donnent chacune un diagramme ternaire permettant d'illustrer ce fait. Les matières (I), (II), (III) utilisées pour réaliser ces diagrammes sont les suivantes.

— Matière (I): matières cellulosiques dont la cellulose a un degré de polymérisation DP supérieur à 150 et inférieur à 1500, ces matières étant choisies par exemple dans les matières $C_1$ à $C_8$ du tableau 1.

— Matière (II): mélange d'acide formique (produit 1, tableau 3) et d'acide acétique (produit 3, tableau 3) le rapport des poids anhydres

$$\frac{\text{poids d'acide formique}}{\text{poids d'acide acétique}}$$

étant égal à 9.

— Matière (III): acide orthophosphorique (produit 2, tableau 3).

Le diagramme de la figure 1 correspond à $R_{er} = R_e = 0,0\%$ et le diagramme de la figure 2 correspond à $R_{er} = R_e = 7,5\%$. Les coordonnées de chacun de ces diagrammes correspondent aux rapports $R_I$, $R_{II}$, $R_{III}$, avec la relation

$$R_I + R_{II} + R_{III} + R_e = 1.$$

Sur la figure 1, le domaine situé à l'intérieur du polygone $A_1$, $A_2$, $A_3$, $A_4$, $A_5$, $A_6$ ou sur les côtés de ce polygone correspond aux relations entre les rapports $R_I$, $R_{II}$, $R_{III}$ données précédemment à la caractéristique (c) du procédé de dissolution conforme à l'invention pour la valeur $R_{er} = R_e = 0,0\%$, ces relations restant valables pour l'intervalle de $R_{er}$ donné par la relation $-2,5\% < R_{er} < 2,5\%$. Sur la figure 1, les coordonnées des points $A_1$, $A_2$, $A_3$, $A_4$, $A_5$, et $A_6$ sont les suivantes:

$A_1$: $R_I = 10,0\%$, $R_{II} = 2,0\%$, $R_{III} = 88,0\%$;
$A_2$: $R_I = 38,0\%$, $R_{II} = 2,0\%$, $R_{III} = 60,0\%$;
$A_3$: $R_I = 38,0\%$, $R_{II} = 19,0\%$, $R_{III} = 43,0\%$;
$A_4$: $R_I = 19,5\%$, $R_{II} = 40,0\%$, $R_{III} = 40,5\%$;
$A_5$: $R_I = 12,5\%$, $R_{II} = 40,0\%$, $R_{III} = 47,5\%$;
$A_6$: $R_I = 10,0\%$, $R_{II} = 33,0\%$, $R_{III} = 57,0\%$.

Sur la figure 2, le domaine situé à l'intérieur du polygone $B_1$, $B_2$, $B_3$, $B_4$, $B_5$, $B_6$ ou sur les côtés de ce polygone correspond aux relations entre les rapports $R_I$, $R_{II}$, $R_{III}$ données précédemment à la caractéristique (c) du procédé de dissolution conforme à l'invention pour la valeur de $R_{er} = R_e = 7,5\%$, ces relations restant valables pour l'intervalle de $R_{er}$ donné par la relation $7,5\% \leqslant R_{er} < 10,0\%$. Sur la figure 2, les coordonnées des points $B_1$, $B_2$, $B_3$, $B_4$, $B_5$ et $B_6$ sont les suivantes:

$B_1$: $R_I = 10,0\%$, $R_{II} = 2,0\%$, $R_{III} = 80,5\%$;
$B_2$: $R_I = 31,0\%$, $R_{II} = 2,0\%$, $R_{III} = 59,5\%$;
$B_3$: $R_I = 31,0\%$, $R_{II} = 4,5\%$, $R_{III} = 57,0\%$;
$B_4$: $R_I = 15,5\%$, $R_{II} = 23,0\%$, $R_{III} = 54,0\%$;
$B_5$: $R_I = 12,5\%$, $R_{II} = 23,0\%$, $R_{III} = 57,0\%$;
$B_6$: $R_I = 10,0\%$, $R_{II} = 12,0\%$, $R_{III} = 70,5\%$.

Chacun de ces domaines correspond à une surface petite par rapport à celle du diagramme ternaire correspondant, représenté par le triangle de la figure considérée. Cette surface est d'autant plus petite que $R_{er}$ est plus élevé, lorsque $R_{er}$ est positif.

Sur la figure 1, le point $E_{I-1, 1}$ correspond à l'essai n° 1 de l'exemple I-1 et sur la figure 2, le point $E_{I-1, 12}$ correspond à l'essai n° 12 de l'exemple I-1.

Il est possible de trouver au moins une matière (I) dont la cellulose ait un degré de polymérisation DP supérieur à 150 et inférieur à 1500, telle que les relations données à la caractéristique (c) du procédé de dissolution conforme à l'invention conduisent à une composition conforme à l'invention.

De préférence la cellulose de la matière cellulosique (I) a un degré de polymérisation DP au moins égal à 200 et au plus égal à 1200 et on a les relations suivantes entre $R_I$, $R_{II}$, $R_{III}$, $R_{er}$ dont les valeurs sont exprimées en %:

— si $R_{er}$ vérifie la relation:
　　$10,0 \leqslant R_{er} < 12,5$
　on a les relations:
　　$13,0 \leqslant R_I \leqslant 19,0$; $4,0 \leqslant R_{II} \leqslant 11,0$
　avec la relation: $R_{II} \leqslant 0,73\, R_I - 2,45$
　　si $R_I$ vérifie la relation: $R_I < 18,5$,
　ou avec la relation:
　　$R_{II} \leqslant -2,00\, R_I + 48,00$
　　si $R_I$ vérifie la relation: $R_I \geqslant 18,5$;

— si $R_{er}$ vérifie la relation:
　　$7,5 \leqslant R_{er} < 10,0$
　on a les relations:
　　$12,25 \leqslant R_I \leqslant 23,0$; $4,0 \leqslant R_{II} \leqslant 19,5$
　avec la relation: $R_{II} \leqslant 1,65\, R_I - 10,24$

si $R_I$ vérifie la relation $R_I < 18,0$,
ou avec la relation:
$R_{II} \leqslant - 1,40\, R_I + 44,70$
si $R_I$ vérifie la relation: $R_I \geqslant 18,0$;
— si $R_{er}$ vérifie la relation:
$5,0 \leqslant R_{er} < 7,5$
on a les relations:
$11,5 \leqslant R_I \leqslant 27,5$; $4,0 \leqslant R_{II} \leqslant 24,0$
avec la relation: $R_{II} \leqslant 1,38\, R_I - 2,81$
si $R_I$ vérifie la relation: $R_I < 19,5$,
ou avec la relation:
$R_{II} \leqslant - 1,56\, R_I + 54,47$
si $R_I$ vérifie la relation: $R_I \geqslant 19,5$;
— si $R_{er}$ vérifie la relation:
$2,5 \leqslant R_{er} < 5,0$
on a les relations:
$10,75 \leqslant R_I \leqslant 32,0$; $4,0 \leqslant R_{II} \leqslant 30,0$
avec la relation: $R_{II} \leqslant 2,07\, R_I - 5,80$
si $R_I$ vérifie la relation: $R_I \leqslant 17,5$,
ou avec la relation:
$R_{II} \leqslant - 1,30\, R_I + 56,74$
si $R_I$ vérifie la relation: $R_I \geqslant 20,5$;
— si $R_{er}$ vérifie la relation:
$- 2,5 < R_{er} < 2,5$
on a les relations:
$10,0 \leqslant R_I \leqslant 33,5$; $4,0 \leqslant R_{II} \leqslant 35,0$
avec la relation: $R_{II} \leqslant 3,20\, R_I - 13,00$
si $R_I$ vérifie la relation: $R_I \leqslant 15,0$,
ou avec la relation:
$R_{II} \leqslant - 1,76\, R_I + 75,52$
si $R_I$ vérifie la relation: $R_I \geqslant 23,0$;
— si $R_{er}$ vérifie la relation:
$- 5,0 < R_{er} \leqslant - 2,5$
on a les relations:
$10,0 \leqslant R_I \leqslant 33,5$; $4,0 \leqslant R_{II} \leqslant 35,0$
avec la relation: $R_{II} \leqslant 3,20\, R_I - 13,00$
si $R_I$ vérifie la relation: $R_I \leqslant 15,0$,
ou avec la relation:
$R_{II} \leqslant - 1,85\, R_I + 72,85$
si $R_I$ vérifie la relation: $R_I \geqslant 20,5$.

Dans ce cas on obtient une solution anisotrope quelque soit le degré de polymérisation DP de la cellulose de la matière (I), dans l'intervalle de DP précédemment cité $200 \leqslant DP \leqslant 1200$. Avantageusement la cellulose de la matière cellulosique (I) a un degré de polymérisation DP au moins égal à 200 et au plus égal à 1200 et on a les relations suivantes entre $R_I$, $R_{II}$, $R_{III}$, $R_{er}$ dont les valeurs sont exprimées en %:
— si $R_{er}$ vérifie la relation:
$7,5 < R_{er} \leqslant 10,0$
on a les relations:
$13,0 \leqslant R_I \leqslant 19,0$; $4,0 \leqslant R_{II} \leqslant 11,0$
avec la relation: $R_{II} \leqslant 0,73\, R_I - 2,45$
si $R_I$ vérifie la relation: $R_I < 18,5$,
ou avec la relation:
$R_{II} \leqslant - 2,00\, R_I + 48,00$
si $R_I$ vérifie la relation: $R_I \geqslant 18,5$;
— si $R_{er}$ vérifie la relation:
$5,0 < R_{er} \leqslant 7,5$
on a les relations:
$12,25 \leqslant R_I \leqslant 23,0$; $4,0 \leqslant R_{II} \leqslant 19,5$
avec la relation: $R_{II} \leqslant 1,65\, R_I - 10,24$
si $R_I$ vérifie la relation $R_I < 18,0$,
ou avec la relation:

$R_{II} \leqslant - 1,40\, R_I + 44,70$
si $R_I$ vérifie la relation: $R_I \geqslant 18,0$;
— si $R_{er}$ vérifie la relation:
$2,5 < R_{er} \leqslant 5,0$
on a les relations:
$11,5 \leqslant R_I \leqslant 27,5$; $4,0 \leqslant R_{II} \leqslant 24,0$
avec la relation: $R_{II} \leqslant 1,38\, R_I - 2,81$
si $R_I$ vérifie la relation: $R_I < 19,5$,
ou avec la relation:
$R_{II} \leqslant - 1,56\, R_I + 54,47$
si $R_I$ vérifie la relation: $R_I \geqslant 19,5$;
— si $R_{er}$ vérifie la relation:
$0,0 < R_{er} \leqslant 2,5$
on a les relations:
$10,75 \leqslant R_I \leqslant 32,0$; $4,0 \leqslant R_{II} \leqslant 30,0$
avec la relation: $R_{II} \leqslant 2,07\, R_I - 5,80$
si $R_I$ vérifie la relation: $R_I \leqslant 17,5$,
ou avec la relation:
$R_{II} \leqslant - 1,30\, R_I + 56,74$
si $R_I$ vérifie la relation: $R_I \geqslant 20,5$;
— si $R_{er}$ vérifie la relation:
$- 2,5 \leqslant R_{er} \leqslant 0,0$
on a les relations:
$10,0 \leqslant R_I \leqslant 33,5$; $4,0 \leqslant R_{II} \leqslant 35,0$
avec la relation: $R_{II} \leqslant 3,20\, R_I - 13,00$
si $R_I$ vérifie la relation: $R_I \leqslant 15,0$,
ou avec la relation:
$R_{II} \leqslant - 1,85\, R_I + 72,85$
si $R_I$ vérifie la relation: $R_I \geqslant 20,5$.

La composition conforme à l'invention est obtenue selon le procédé de dissolution conforme à l'invention a la propriété d'être à la fois une solution d'au moins un dérivé cellulosique à groupes formiate de cellulose, et une solution anisotrope. Ces deux conditions correspondent de façon inattendue à un domaine très limité comme le montrent les observations qui suivent.

Dans la composition conforme à l'invention, les pourcentages en poids $r_I$, $r_{II}$, $r_{III}$, $r_e$ sont définis par les relations suivantes:
$r_I$: pourcentage du ou des dérivés cellulosiques;
$r_{II}$: pourcentage de la phase dite «acide organique», cette phase comprenant tous les acides organiques, anhydrides d'acides organiques, halogénures d'acides organiques éventuellement présents dans la composition;
$r_{III}$: pourcentage de la phase dite «acide phosphorique», cette phase comprenant les acides phosphoriques et l'anhydride phosphorique éventuellement présents dans la composition;
$r_e$: pourcentage d'eau éventuellement présente dans la composition.
Ces pourcentages $r_I$, $r_{II}$, $r_{III}$, $r_e$ sont calculés sur le poids total suivant: poids du ou des dérivés cellulosiques + poids de la phase «acide organique» + poids de la phase «acide phosphorique» + poids de l'eau éventuelle.
Ces pourcentages $r_I$, $r_{II}$, $r_{III}$, $r_e$ sont les pourcentages indiqués dans les tableaux des essais conformes à l'invention, avec la correspondance suivante:
$r_I$:    pourcentage indiqué à la ligne Der. cel.
$r_{II}$:    »    »    »  Ac. org.
$r_{III}$:    »    »    »  Ac. min.
$r_e$:    »    »    »  eau.

Les pourcentages $r_I$, $r_{II}$, $r_{III}$, $r_e$ vérifient toujours la relation suivante $r_I + r_{II} + r_{III} + r_e = 100$ (en pourcentage). Lorsque la composition ne comporte pas d'eau, on a bien entendu $r_e = 0$. Dans les compositions conformes à l'invention $r_I$ est au moins égal à 10,2%.

Les pourcentages $r_I$, $r_{II}$, $r_{III}$, $r_e$ permettent de définir un diagramme quaternaire.

Les valeurs de $r_e$ sont réparties en intervalles. Dans chaque intervalle on a $r_{ei} \leqslant r_e < r_{ej}$, $r_{ei}$ et $r_{ej}$ étant des valeurs fixes. Pour chaque valeur $r_{ei}$, c'est-à-dire lorsqu'on a la relation $r_I + r_{II} + r_{III} = 100 - r_{ei}$ (en pourcentage), on définit un polygone comportant un nombre de sommets qui peut varier d'un intervalle à l'autre, chacun de ces sommets étant référencé de façon générale $C_k$ (k étant une variable) et étant défini par ses coordonnées $r_{Ik}$, $r_{IIk}$, $r_{IIIk}$ dans le diagramme ternaire correspondant à la valeur $r_{ei}$, c'est-à-dire dans le diagramme ternaire du plan $r_{ei}$. Dans chaque intervalle $r_{ei} \leqslant r_e < r_{ej}$, tout point du diagramme quaternaire de coordonnées $r_I$, $r_{II}$, $r_{III}$, $r_e$ correspondant à une composition conforme à l'invention se projette sur le plan $r_{ei}$, et perpendiculairement à ce plan, à l'intérieur du polygone de sommets $C_k$ ou sur les côtés de ce polygone.

Ces intervalles $r_{ei} \leqslant r_e < r_{ej}$ et ces polygones de sommets $C_k$ sont donnés par les relations suivantes, les valeurs de $r_{ei}$, $r_e$, $r_{ej}$ et les valeurs des coordonnées des sommets $C_k$ étant exprimées en %:

— pour $0,0 \leqslant r_e < 1,4$ ce polygone est un pentagone de sommets:

$C_1$ $(r_{I1} = 10,8,$   $r_{II1} = 0,4,$   $r_{III1} = 88,8)$
$C_2$ $(r_{I2} = 38,9,$   $r_{II2} = 0,2,$   $r_{III2} = 60,9)$
$C_3$ $(r_{I3} = 43,6,$   $r_{II3} = 9,8,$   $r_{III3} = 46,6)$
$C_4$ $(r_{I4} = 19,0,$   $r_{II4} = 38,5,$   $r_{III4} = 42,5)$
$C_5$ $(r_{I5} = 12,8,$   $r_{II5} = 40,3,$   $r_{III5} = 46,9)$

— pour $1,4 \leqslant r_e < 3,8$ ce polygone est un hexagone de sommets:

$C_1$ $(r_{I1} = 10,8,$   $r_{II1} = 0,5,$   $r_{III1} = 87,3)$
$C_2$ $(r_{I2} = 38,9,$   $r_{II2} = 0,1,$   $r_{III2} = 59,6)$
$C_3$ $(r_{I3} = 43,6,$   $r_{II3} = 9,8,$   $r_{III3} = 45,2)$
$C_4$ $(r_{I4} = 23,6,$   $r_{II4} = 33,3,$   $r_{III4} = 41,7)$
$C_5$ $(r_{I5} = 15,2,$   $r_{II5} = 35,5,$   $r_{III5} = 47,9)$
$C_6$ $(r_{I6} = 12,7,$   $r_{II6} = 28,6,$   $r_{III6} = 57,3)$

— pour $3,8 \leqslant r_e < 6,2$ ce polygone est un heptagone de sommets:

$C_1$ $(r_{I1} = 10,9,$   $r_{II1} = 0,5,$   $r_{III1} = 84,8)$
$C_2$ $(r_{I2} = 37,9,$   $r_{II2} = 0,2,$   $r_{III2} = 58,1)$
$C_3$ $(r_{I3} = 43,1,$   $r_{II3} = 1,4,$   $r_{III3} = 51,7)$
$C_4$ $(r_{I4} = 43,0,$   $r_{II4} = 10,5,$   $r_{III4} = 42,7)$
$C_5$ $(r_{I5} = 19,3,$   $r_{II5} = 30,9,$   $r_{III5} = 46,0)$
$C_6$ $(r_{I6} = 17,4,$   $r_{II6} = 31,4,$   $r_{III6} = 47,4)$
$C_7$ $(r_{I7} = 12,4,$   $r_{II7} = 14,2,$   $r_{III7} = 69,6)$

— pour $6,2 \leqslant r_e < 8,6$ ce polygone est un hexagone de sommets:

$C_1$ $(r_{I1} = 10,6,$   $r_{II1} = 1,1,$   $r_{III1} = 82,1)$
$C_2$ $(r_{I2} = 38,1,$   $r_{II2} = 0,2,$   $r_{III2} = 55,5)$
$C_3$ $(r_{I3} = 43,0,$   $r_{II3} = 1,5,$   $r_{III3} = 49,3)$
$C_4$ $(r_{I4} = 22,7,$   $r_{II4} = 22,0,$   $r_{III4} = 49,1)$
$C_5$ $(r_{I5} = 15,6,$   $r_{II5} = 23,5,$   $r_{III5} = 54,7)$
$C_6$ $(r_{I6} = 11,7,$   $r_{II6} = 12,2,$   $r_{III6} = 69,9)$

— pour $8,6 \leqslant r_e < 11,0$ ce polygone est un pentagone de sommets:

$C_1$ $(r_{I1} = 10,5,$   $r_{II1} = 1,2,$   $r_{III1} = 79,7)$
$C_2$ $(r_{I2} = 32,1,$   $r_{II2} = 0,2,$   $r_{III2} = 59,1)$
$C_3$ $(r_{I3} = 32,8,$   $r_{II3} = 1,6,$   $r_{III3} = 57,0)$
$C_4$ $(r_{I4} = 17,7,$   $r_{II4} = 19,4,$   $r_{III4} = 54,3)$
$C_5$ $(r_{I5} = 14,2,$   $r_{II5} = 20,2,$   $r_{III5} = 57,0)$

— pour $11,0 \leqslant r_e < 13,4$ ce polygone est un pentagone de sommets:

$C_1$ $(r_{I1} = 10,4,$   $r_{II1} = 1,3,$   $r_{III1} = 77,3)$
$C_2$ $(r_{I2} = 20,1,$   $r_{II2} = 1,0,$   $r_{III2} = 67,9)$
$C_3$ $(r_{I3} = 21,5,$   $r_{II3} = 6,7,$   $r_{III3} = 60,8)$
$C_4$ $(r_{I4} = 16,2,$   $r_{II4} = 14,1,$   $r_{III4} = 58,7)$
$C_5$ $(r_{I5} = 10,9,$   $r_{II5} = 7,5,$   $r_{III5} = 70,6)$

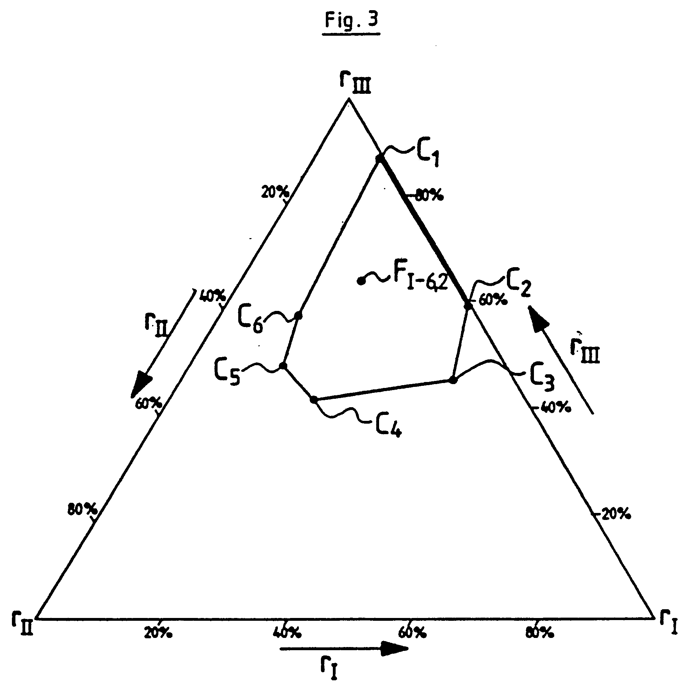

A titre d'exemple, la figure 3 représente un diagramme ternaire permettant d'illustrer ce fait. Pour ce diagramme, les matières sont les suivantes:

— Dérivé cellulosique: ester mixte de la cellulose contenant des groupes formiate et des groupes acétate, le degré de polymérisation DP de la cellulose dans ce dérivé étant supérieur à 150 et inférieur à 1500.

— Phase «acide organique»: acide formique avec éventuellement de l'acide acétique.

— Phase «acide phosphorique»: acide orthophosphorique.

La figure 3 correspond à une valeur $r_{ei} = 1,4\%$.

Le polygone correspondant à cette valeur $r_{ei}$ est un hexagone dont les sommets $C_1$, $C_2$, $C_3$, $C_4$, $C_5$ et $C_6$ sont conformes à la définition précédente, pour la valeur $r_{ei} = 1,4\%$ c'est-à-dire que les coordonnées de ces sommets sont les suivantes:

$C_1$ $(r_I = 10,8\%,$   $r_{II} = 0,5\%,$   $r_{III} = 87,3\%)$
$C_2$ $(r_I = 38,9\%,$   $r_{II} = 0,1\%,$   $r_{III} = 59,6\%)$
$C_3$ $(r_I = 43,6\%,$   $r_{II} = 9,8\%,$   $r_{III} = 45,2\%)$
$C_4$ $(r_I = 23,6\%,$   $r_{II} = 33,3\%,$   $r_{III} = 41,7\%)$
$C_5$ $(r_I = 15,2\%,$   $r_{II} = 35,5\%,$   $r_{III} = 47,9\%)$
$C_6$ $(r_I = 12,7\%,$   $r_{II} = 28,6\%,$   $r_{III} = 57,3\%)$

La surface définie par ce polygone est petite par rapport au diagramme ternaire représenté par le triangle de la figure 3. Dans l'intervalle $1,4\% \leqslant r_e < 3,8\%$, tout point du diagramme quaternaire de coordonnées $r_I$, $r_{II}$, $r_{III}$, $r_e$ susceptible de donner une composition conforme à l'invention se projette sur le plan de la figure 3 et perpendiculairement à ce plan, à l'intérieur du polygone ou sur les côtés de ce polygone $C_1$, $C_2$, $C_3$, $C_4$, $C_5$ et $C_6$.

A titre d'exemple, le point $F_{I-6, 2}$ correspond à la composition de l'essai n° 2 de l'exemple I-6.

De préférence, le degré de polymérisation DP de la cellulose dans le ou les dérivés cellulosiques est au moins égal à 200 et au plus égal à 1200 et les intervalles $r_{ei} \leqslant r_e < r_{ej}$ et les polygones de sommets $C_k$ correspondant à ces intervalles et situés dans les diagrammes ternaires des plans $r_{ei}$, sont donnés par les relations suivantes, les valeurs de $r_{ei}$, $r_e$, $r_{ej}$ et les valeurs des coordonnées des sommets $C_k$ étant exprimées en %:

— pour $0,0 \leqslant r_e < 1,4$ ce polygone est un hexagone de sommets:

$C_1$ ($r_{I1}=11,5$, $r_{II1}=1,9$, $r_{III1}=86,6$)
$C_2$ ($r_{I2}=35,5$, $r_{II2}=0,4$, $r_{III2}=64,1$)
$C_3$ ($r_{I3}=37,3$, $r_{II3}=4,7$, $r_{III3}=58,0$)
$C_4$ ($r_{I4}=24,9$, $r_{II4}=27,8$, $r_{III4}=47,3$)
$C_5$ ($r_{I5}=18,7$, $r_{II5}=28,9$, $r_{III5}=52,4$)
$C_6$ ($r_{I6}=12,5$, $r_{II6}=14,9$, $r_{III6}=72,6$)

— pour $1,4 \leqslant r_e < 3,8$ ce polygone est un hexagone de sommets:
$C_1$ ($r_{I1}=11,0$, $r_{II1}=2,4$, $r_{III1}=85,2$)
$C_2$ ($r_{I2}=35,8$, $r_{II2}=0,3$, $r_{III2}=62,5$)
$C_3$ ($r_{I3}=37,8$, $r_{II3}=9,4$, $r_{III3}=51,4$)
$C_4$ ($r_{I4}=27,5$, $r_{II4}=27,6$, $r_{III4}=43,5$)
$C_5$ ($r_{I5}=18,3$, $r_{II5}=29,6$, $r_{III5}=50,7$)
$C_6$ ($r_{I6}=12,5$, $r_{II6}=14,8$, $r_{III6}=71,3$)

— pour $3,8 \leqslant r_e < 6,2$ ce polygone est un hexagone de sommets:
$C_1$ ($r_{I1}=11,8$, $r_{II1}=2,4$, $r_{III1}=82,0$)
$C_2$ ($r_{I2}=34,0$, $r_{II2}=0,7$, $r_{III2}=61,5$)
$C_3$ ($r_{I3}=36,6$, $r_{II3}=7,4$, $r_{III3}=52,2$)
$C_4$ ($r_{I4}=23,9$, $r_{II4}=24,4$, $r_{III4}=47,9$)
$C_5$ ($r_{I5}=20,7$, $r_{II5}=24,8$, $r_{III5}=50,7$)
$C_6$ ($r_{I6}=13,2$, $r_{II6}=11,9$, $r_{III6}=71,1$)

— pour $6,2 \leqslant r_e < 8,6$ ce polygone est un pentagone de sommets:
$C_1$ ($r_{I1}=13,1$, $r_{II1}=1,4$, $r_{III1}=79,3$)
$C_2$ ($r_{I2}=29,1$, $r_{II2}=1,4$, $r_{III2}=63,3$)
$C_3$ ($r_{I3}=31,1$, $r_{II3}=5,6$, $r_{III3}=57,1$)
$C_4$ ($r_{I4}=22,7$, $r_{II4}=18,7$, $r_{III4}=52,4$)
$C_5$ ($r_{I5}=13,3$, $r_{II5}=10,1$, $r_{III5}=70,4$)

— pour $8,6 \leqslant r_e < 11,0$ ce polygone est un pentagone de sommets:
$C_1$ ($r_{I1}=12,9$, $r_{II1}=3,0$, $r_{III1}=75,5$)
$C_2$ ($r_{I2}=24,1$, $r_{II2}=2,2$, $r_{III2}=65,1$)
$C_3$ ($r_{I3}=24,8$, $r_{II3}=9,6$, $r_{III3}=57,0$)
$C_4$ ($r_{I4}=20,1$, $r_{II4}=16,0$, $r_{III4}=55,3$)
$C_5$ ($r_{I5}=13,6$, $r_{II5}=7,7$, $r_{III5}=70,1$)

— pour $11,0 \leqslant r_e < 13,4$ ce polygone est un pentagone de sommets:
$C_1$ ($r_{I1}=13,6$, $r_{II1}=3,0$, $r_{III1}=72,4$)
$C_2$ ($r_{I2}=19,9$, $r_{II2}=2,5$, $r_{III2}=66,6$)
$C_3$ ($r_{I3}=21,0$, $r_{II3}=6,8$, $r_{III3}=61,2$)
$C_4$ ($r_{I4}=20,1$, $r_{II4}=8,3$, $r_{III4}=60,6$)
$C_5$ ($r_{I5}=14,1$, $r_{II5}=5,2$, $r_{III5}=69,7$)

Avantageusement, le degré de polymérisation DP de la cellulose dans le ou les dérivés cellulosiques est au moins égal à 200 et au plus égal à 1 200 et, dans chaque intervalle $r_{ei} < r_e \leqslant r_{ej}$ pour chaque valeur de $r_{ej}$, c'est-à-dire lorsqu'on a la relation $r_I + r_{II} + r_{III} = 1 - r_{ej}$, on définit un polygone comportant un nombre de sommets qui peut varier d'un intervalle à l'autre, chacun de ces sommets étant référencé de façon générale $C_q$ (q étant une variable) et étant défini par ses coordonnées $r_{Iq}$, $r_{IIq}$, $r_{IIIq}$ dans le diagramme ternaire correspondant à la valeur $r_{ej}$, c'est-à-dire dans le diagramme ternaire du plan $r_{ej}$.

Dans chaque intervalle $r_{ei} < r_e \leqslant r_{ej}$, tout point du diagramme quaternaire de coordonnées $r_I$, $r_{II}$, $r_{III}$, $r_e$ correspondant à une composition conforme à l'invention se projette sur le plan $r_{ej}$, et perpendiculairement à ce plan, à l'intérieur du polygone de sommets $C_q$ ou sur les côtés de ce polygone.

Ces intervalles $r_{ei} < r_e \leqslant r_{ej}$ et ces polygones de sommets $C_q$ sont donnés par les relations suivantes, les valeurs de $r_{ei}$, $r_e$, $r_{ej}$ et les valeurs des coordonnées des sommets $C_q$ étant exprimées en %:

— pour $0,0 < r_e \leqslant 1,4$ ce polygone est un hexagone de sommets:
$C_1$ ($r_{I1}=11,0$, $r_{II1}=2,4$, $r_{III1}=85,2$)
$C_2$ ($r_{I2}=35,8$, $r_{II2}=0,3$, $r_{III2}=62,5$)
$C_3$ ($r_{I3}=37,8$, $r_{II3}=9,4$, $r_{III3}=51,4$)
$C_4$ ($r_{I4}=27,5$, $r_{II4}=27,6$, $r_{III4}=43,5$)
$C_5$ ($r_{I5}=18,3$, $r_{II5}=29,6$, $r_{III5}=50,7$)
$C_6$ ($r_{I6}=12,5$, $r_{II6}=14,8$, $r_{III6}=71,3$)

— pour $1,4 < r_e \leqslant 3,8$ ce polygone est un hexagone de sommets:
$C_1$ ($r_{I1}=11,8$, $r_{II1}=2,4$, $r_{III1}=82,0$)
$C_2$ ($r_{I2}=34,0$, $r_{II2}=0,7$, $r_{III2}=61,5$)
$C_3$ ($r_{I3}=36,6$, $r_{II3}=7,4$, $r_{III3}=52,2$)
$C_4$ ($r_{I4}=23,9$, $r_{II4}=24,4$, $r_{III4}=47,9$)
$C_5$ ($r_{I5}=20,7$, $r_{II5}=24,8$, $r_{III5}=50,7$)
$C_6$ ($r_{I6}=13,2$, $r_{II6}=11,9$, $r_{III6}=71,1$)

— pour $3,8 < r_e \leqslant 6,2$ ce polygone est un pentagone de sommets:
$C_1$ ($r_{I1}=13,1$, $r_{II1}=1,4$, $r_{III1}=79,3$)
$C_2$ ($r_{I2}=29,1$, $r_{II2}=1,4$, $r_{III2}=63,3$)
$C_3$ ($r_{I3}=31,1$, $r_{II3}=5,6$, $r_{III3}=57,1$)
$C_4$ ($r_{I4}=22,7$, $r_{II4}=18,7$, $r_{III4}=52,4$)
$C_5$ ($r_{I5}=13,3$, $r_{II5}=10,1$, $r_{III5}=70,4$)

— pour $6,2 < r_e \leqslant 8,6$ ce polygone est un pentagone de sommets:
$C_1$ ($r_{I1}=12,9$, $r_{II1}=3,0$, $r_{III1}=75,5$)
$C_2$ ($r_{I2}=24,1$, $r_{II2}=2,2$, $r_{III2}=65,1$)
$C_3$ ($r_{I3}=24,8$, $r_{II3}=9,6$, $r_{III3}=57,0$)
$C_4$ ($r_{I4}=20,1$, $r_{II4}=16,0$, $r_{III4}=55,3$)
$C_5$ ($r_{I5}=13,6$, $r_{II5}=7,7$, $r_{III5}=70,1$)

— pour $8,6 < r_e \leqslant 11,0$ ce polygone est un pentagone de sommets:
$C_1$ ($r_{I1}=13,6$, $r_{II1}=3,0$, $r_{III1}=72,4$)
$C_2$ ($r_{I2}=19,9$, $r_{II2}=2,5$, $r_{III2}=66,6$)
$C_3$ ($r_{I3}=21,0$, $r_{II3}=6,8$, $r_{III3}=61,2$)
$C_4$ ($r_{I4}=20,1$, $r_{II4}=8,3$, $r_{III4}=60,6$)
$C_5$ ($r_{I5}=14,1$, $r_{II5}=5,2$, $r_{III5}=69,7$)

Dans tout ce qui précède, les diagrammes quaternaires correspondent de façon connue à des tétraèdres réguliers qui ne sont pas représentés sur le dessin dans un but de simplification.

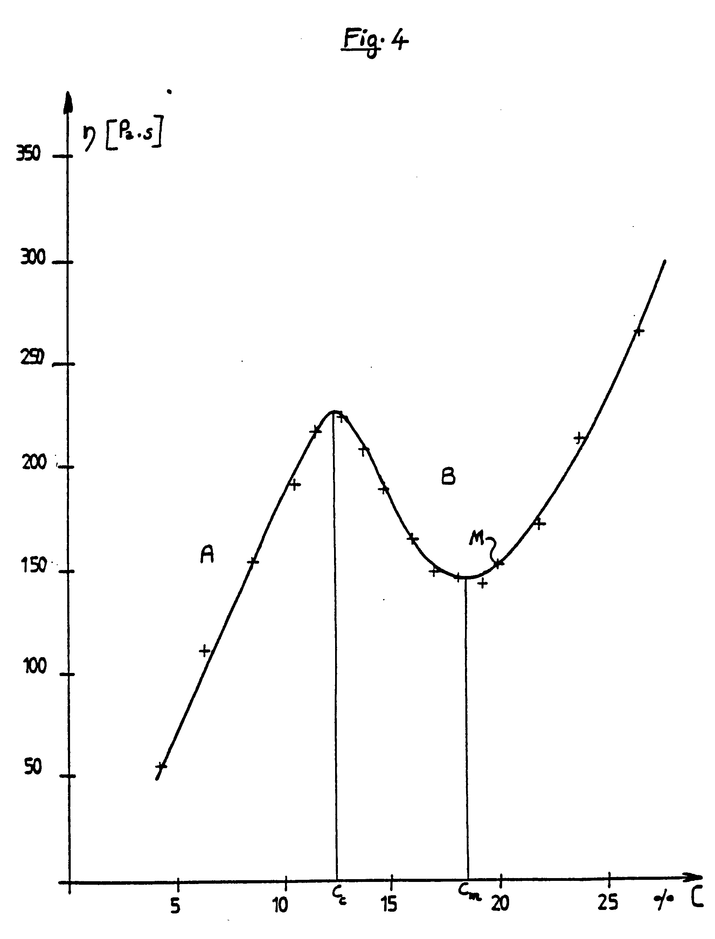

En général, la composition conforme à l'invention est telle que sa concentration soit supérieure à la concentration critique. A titre d'exemple, la figure 4 représente pour une solution cellulosique la courbe donnant la relation entre la concentration du dérivé cellulosique dans cette solution et la viscosité de cette solution. Le dérivé cellulosique est du formiate de cellulose, sa concentration dans la solution (référence C) est exprimée en % en poids par rapport au poids total de la solution. La viscosité dynamique (référence η) est exprimée en pascal-seconde. On voit que lorsque la concentration du dérivé est inférieure à la concentration critique $C_c$ (domaine A), la viscosité augmente avec la concentration et que lorsque la concentration du dérivé est supérieure à cette concentration critique (domaine B), la viscosité commence à diminuer lorsque la concentration augmente, le domaine B correspondant à l'anisotropie. Dans ce domaine B, la viscosité passe par un minimum pour la concentration $C_m$.

Sur cette courbe, le point référencé M correspond à la composition de l'essai 7 de l'exemple I-1 (tableau 4), il est situé dans le domaine B.

Le procédé conforme à l'invention permet d'obtenir une composition avec une dégradation faible de la cellulose initiale, la variation relative du DP ($\Delta$ DP) étant par exemple le plus souvent inférieure à 20% dans les exemples précédemment décrits.

De préférence, dans la solution conforme à l'invention, le degré de substitution DS de la cellulose en groupes formiate du ou des dérivés cellulosiques est au moins égal à 5,0% et le degré de substitution DS de la cellulose en autres groupes ester est nul ou inférieur à 15,0%.

II. *Articles en dérivés cellulosiques*

A. *Appareillage et méthode de réalisation*

1. Préparation des solutions de filage: La solution peut être préparée dans tout mélangeur thermostaté de façon appropriée permettant de préférence de travailler sous vide. Si le mélangeur n'offre pas la possibilité de réaliser le vide, il est nécessaire par la suite de dégazer la solution de filage par un moyen approprié.

Pour réaliser une solution de filage conformément au procédé de l'invention, on utilise à titre d'exemple le mode opératoire suivant. On utilise un réacteur à double enveloppe dont le volume intérieur est d'environ 4 litres. On introduit tout d'abord dans ce réacteur la matière (II) et la matière (III) et on provoque leur homogénéisation par agitation. On ajoute ensuite la matière (I), sans agitation, puis on fait le vide dans le réacteur, ce vide étant d'environ 5 à 10 mbar (500 à 1000 Pa). On commence l'agitation et l'action d'estérification et de dissolution débute à ce moment. La température du mélange pendant l'agitation est de préférence comprise entre 5 et 20°C.

Il faut noter que d'autres méthodes seraient possibles. On pourrait par exemple préparer une présolution en laissant la matière (I) s'imprégner de la matière (II), en refroidissant ce mélange (température préférée: −15 à 0°C) et en rajoutant la matière (III) sous forme solide, le tout étant alors homogénéisé pour obtenir une pré-solution, qui se présente sous une forme solide, cette pré-solution étant alors agitée entre 5 et 20°C comme précédemment décrit pour provoquer la réaction d'estérification et de dissolution.

On pourrait aussi préparer la solution en utilisant une extrudeuse à une ou plusieurs vis, les matières de base étant par exemple introduites en continu dans cette extrudeuse, la préparation se faisant de préférence sous vide.

2. Filage des solutions pour réaliser des fibres. Les solutions obtenues selon le procédé décrit au § 1 précédent sont utilisées directement pour réaliser des fibres, sans extraction préalable du dérivé cellulosique. La technique de filage utilisée est la technique dite «avec espace d'air» (dry jet-wet) décrite par exemple dans le brevet US 3 414 645. La pompe de filature est gavée par la solution qui peut par exemple provenir directement du réacteur de mise en solution. La solution est ensuite extrdée à travers une filière percée de trous. La face de la filière est placée horizontalement, à une distance pouvant aller de quelques millimètres à plusieurs centimètres audessus de la surface du bain de coagulation. Avant d'entrer dans le bain de coagulation, le jet est étiré dans la couche d'air pour orienter les molécules dans l'écoulement et préparer les propriétés mécaniques avant la coagulation. Dans le bain de coagulation, la fibre en dérivé cellulosique se forme. Le bain de coagulation doit être susceptible de précipiter la matière cellulosique et de dissoudre les matières acides organiques et minérales. De préférence, le bain de coagulation est à base d'acétone dans une gamme de température variant entre 10°C et −20°C. En sortie de bain de coagulation, le produit filé qui comporte plusieurs filaments est repris sur un dispositif d'entraînement. Le rapport entre la vitesse du produit filé sur le dispositif d'entraînement et la vitesse en sortie de filière définit le facteur d'étirage au filage (FEF).

Il faut noter que l'invention s'applique aux cas où des fluides non coagulants autres que l'air sont utilisés dans la technique dite «avec espace d'air», par exemple l'azote, ou d'autres gaz, et que l'invention s'applique aux cas où on utilise d'autres techniques de filage, par exemple des techniques de filage au mouillé.

B. *Détermination des caractéristiques des articles*

1. *Propriétés mécaniques des articles filés*

Le terme «articles filés» utilisé dans cette description couvre tous les articles réalisés par filage, alors que le terme spécifique «filé» utilisé comme substantif couvre uniquement un ensemble de filaments obtenus par la même opération de filage à travers la même filière.

Par «conditionnement», on entend dans cette description, le traitement des articles filés, selon la norme d'Allemagne Fédérale DIN 53802-20/65 de juillet 1979.

Le titre des filés est déterminé selon la norme d'Allemagne Fédérale DIN 53830 de juin 1965, les filés étant conditionnés au préalable. La mesure est opérée sur au moins trois échantillons, chacun correspondant à une longueur de 50 m, par pesée de cette longueur de filé.

Le titre des filaments est mesuré par vibration des filaments individuels en détectant la fréquence de résonnance du filament individuel soumis à une tension donnée, de l'ordre de 0,5 cN/tex. L'erreur absolue est inférieure à 0,01 décitex.

Les propriétés mécaniques des filés sont mesurées à l'aide d'une machine de traction Zwick GmbH & Co (RFA) de type 1435, correspondant aux normes d'Allemagne Fédérale DIN 51220 d'octobre 1976 et 51221 d'août 1976, selon le mode opératoire décrit dans la norme d'Allemagne Fédérale DIN 53834 de janvier 1979. Les filés reçoivent pour la mesure une torsion de protection de 100 t/m et ils subissent une traction sur une longueur initiale de 400 mm. Tous les résultats sont obtenus avec une moyenne de 10 mesures.

Les propriétés mécaniques des filaments sont mesurées à l'aide d'une machine de traction Textechno (RFA) du type FAFEGRAPH-T, selon le mode opératoire de la norme d'Allemagne Fédérale DIN 53816 de juin 1976, les résultats étant donnés pour une moyenne de 10 mesures.

La ténacité (T) et le module initial ($M_i$) sont indiqués en cN par tex. L'allongement rupture ($A_r$) est indiqué en pourcentage. Le module initial ($M_i$) est défini comme la pente de la partie linéaire de la courbe force rupture-allongement qui intervient juste après une prétension de 0,5 cN/tex.

Détermination du module sonique.

La vitesse de propagation du son dans les fibres est déterminée en utilisant un appareil de mesure du type «Dynamic Modulus Tester» PPM-5R de Morgan Co, Inc., Cambridge Mass.

Les échantillons de mesure sont des filés conditionnés au préalable. Les mesures sont effectuées dans la même atmosphère que celle de ce conditionnement. On soumet le filé à une prétension de 5 cN/tex sur une longueur d'environ 2 mètres. On applique ensuite deux sondes de type MORGAN-WTRT-5 FB contre le filé avec une légère pression d'appui constante. La fréquence de résonnance de la céramique piézo-électrique des sondes est de 5 k Hz. L est la distance en mètres qui sépare les deux sondes. Cette distance est déterminée avec une erreur absolue inférieure au millimètre; «t» est le temps de propagation en secondes pour que l'impulsion émise par la sonde émettrice atteigne la sonde réceptrice.

L'erreur relative des mesures est inférieure à 3% pour le temps de propagation «t». Le module sonique $M_s$ est défini par la relation:

$$M_s = V^2 \times 10^{-4} \text{ cN/tex,}$$

V étant la vitesse de propagation du son (m/s) donnée par l'inverse de la pente de la régression linéaire déterminée pour N couples différents de mesure de L et de «t», N étant au moins égal à trois.

2. *Caractéristiques chimiques des articles filés*

*Degré de substitution (DS) et degré de polymérisation (DP)*

L'article filé est conditionné à la température ambiante (par exemple environ 22°C) et à l'humidité ambiante de la pièce où les déterminations de DS et de DP sont effectuées. La teneur en eau de l'article filé est déterminée par exemple par thermogravimétrie.

Le degré de substitution DS et le degré de polymérisation DP de la cellulose du dérivé cellulosique sont déterminés selon les mêmes méthodes que défini précédemment au § I.C pour les compositions, sans extraction à l'acétone.

3. *Caractéristiques physiques des articles filés*

3.1. *Caractéristiques optiques*

L'anisotropie optique des articles filés est observée et mesurée à l'aide d'un microscope de polarisation du type Olympus BH2. En particulier, la biréfringence est déterminée par la méthode du compensateur de Berek.

3.2. *Structure aux rayons X*

a) *Appareils et montages expérimentaux*

— Appareils: les déterminations sont effectuées sur deux types d'appareils:

• Un générateur haute puissance (générateur A). Il s'agit d'une installation Rigaku RU-200 PL, équipée d'une anode tournante, fonctionnant dans les conditions suivantes: 40 kV, 200 mA; foyer $0,5 \times 10$ mm$^2$ sur l'anode; foyer apparent ponctuel $0,5 \times 1$ mm$^2$; rayonnement du cuivre avec élimination de la raie Kβ par filtrage avec une feuille de Ni et discrimination d'énergie.

• Un générateur classique (générateur B) de marque Siemens, à tube scellé, fonctionnant dans les conditions suivantes: 40 kV, 30 mA; foyer linéaire fin $0,04 \times 8$ mm$^2$; rayonnement Kα$_1$ du cuivre obtenu grâce à un monochromateur CGR à cristal courbé (R = 1 400 mm); distance de focalisation D = 510 mm. CGR = Compagnie Générale de Radiologie, France.

Ces deux générateurs sont utilisés pour réaliser quatre montages différents.

— Montages expérimentaux

• Montage 1: Goniomètre grands angles Rigaku SG-9R (rayon 250 mm) équipé d'un cercle d'Euler et d'un compteur à scintillation; vitesse de balayage en 2 θ: 2°/min; vitesse de rotation du cercle d'Euler: 2°/mn à 2 θ fixe.

Sélection au niveau collimation du faisceau X divergence: collimateur ponctuel ∅ 1 mm;

analyse: fentes croisées $0,9 \times 0,9$ mm$^2$ (ouverture angulaire $0,5° \times 0,5°$) situées à 110 mm du plan de l'échantillon.

• Montage 2:

— Goniomètre Rigaku SG-9R, équipé d'un porte échantillon tournant (vitesse de rotation 100 tours/min) et d'un compteur à scintillation, fonctionnant en pas à pas avec un incrément de 0,1° en 2 θ.

— Sélection au niveau collimation du faisceau X: fente de divergence 1/6°; fente de diffusion: 1°; fente d'analyse 0,15 mm située à 250 mm de l'échantillon.

• Montage 3:

— Goniomètre grands angles Siemens, équipé d'un cercle d'Euler et d'un compteur à scintillation. Vitesse de balayage 0,1°/min en 2 θ.

— Monochromateur CGR, distance de focalisation: 510 mm.

— Fente d'analyse 0,4 mm à 155 mm de l'échantillon.

• Montage 4:

— Goniomètre de diffusion centrale Rigaku SASG équipé d'un détecteur linéaire type Léti et d'un analyseur multicanal Ortec.

— Sélection au niveau collimation du faisceau X: première fente $15 \times 0,1$ mm$^2$, deuxième fente $15 \times 0,05$ mm$^2$ à 250 mm.

— Distance échantillon-détecteur: 360 mm.

— Distance échantillon-deuxième fente: 105 mm.

Le tableau 15 suivant donne le montage adopté, le domaine angulaire et le générateur utilisé en fonction des paramètres mesurés.

*Tableau 15*

| Paramètres mesurés | Montage adopté | Angle de diffrac- tion des rayons X | Générateur utilisé |
|---|---|---|---|
| Indice d'orientation cristalline (I.O.) | 1 | grands angles | A |
| Indice de cristallinité (I.C.) | 2 | grands angles | A |
| Tailles apparentes — longitudinales ($T_l$) — transversales ($T_t$) | 3 | grands angles | B |
| Longue période (L.P.) | 4 | petits angles | A |
| Largeur à mi-hauteur ($\Delta\varphi$) | » | » » | » |
| Intensité intégrée (I.I.) | » | » » | » |

b) *Réflexions utilisées pour la détermination des différents paramètres structuraux par diffraction aux grands angles*

Les photographies du phénomène de diffraction des rayons X par les fibres considérées montrent un certain nombre d'arcs sur le méridien, sur l'équateur, et en dehors de ces deux axes. Les caractéristiques de ces arcs sont liées aux caractéristiques structurales du matériau.

L'ouverture angulaire d'un arc méridien tel que celui situé à l'angle de diffraction $2\theta$ d'environ $34,7°$ est liée à l'orientation statistique des cristallites par rapport à l'axe de fibre. C'est cette réflexion à environ $34,7°$ en $2\theta$ qui est choisie pour déterminer un indice d'orientation I-O et une taille longitudinale apparente de cristallites, $T_l$.

Sur l'équateur, on utilise un arc situé à environ $11°$ en $2\theta$ pour déterminer une taille transversale apparente de cristallites $T_t$.

Si pour les paramètres ci-dessus désignés on utilise des réflexions particulières, la détermination d'un indice de cristallité nécessite la prise en compte de l'ensemble du diffractogramme.

c) *Méthodes utilisées pour la mesure des différents paramètres*

Toutes les mesures sont effectuées sur une ou plusieurs fibres constituées chacune de plusieurs filaments parallèles entre eux, c'est-à-dire non torsadés.

— Indice d'orientation cristalline (I-O)

L'orientation cristalline peut être caractérisée par l'angle entre l'axe de fibre et la normale aux plans diatropiques.

La mesure de l'ouverture azimutale de l'arc méridien situé à environ $2\theta = 34,7°$ fournit une indication directe du degré d'orientation des cristallites par rapport à l'axe de fibre.

Un indice d'orientation peut être défini à partir de la formule:

$$I.O = \frac{180 - \alpha}{180} \times 100$$

où $\alpha$ est la largeur totale à mi-hauteur de la courbe obtenue par un balayage azimutal; $\alpha$ est exprimé en degré.

— Indice de cristallinité (I.C.)

Un indice de cristallinité relatif est déterminé selon la méthode de Wakelin (Journal of Applied Physics, Vol. 30, n° 11, p. 1654, November 1959).

Avant de comparer le diagramme de diffraction X d'un échantillon quelconque à celui de deux standards: l'un considéré comme 100% amorphe, l'autre comme 100% cristallin, les valeurs expérimentales brutes sont corrigées pour différents paramètres, taux de comptage, stabilité du faisceau X, diffusion due à l'air, effets de polarisation et d'absorption.

Les diagrammes sont ensuite normalisés, avant d'être étudiés selon la méthode dite «corrélative».

Les indices de cristallinité obtenus sont fonction bien sûr du choix des standards amorphe et cristallin. Ces srandards ont été préparés de la manière suivante:

standard cristallin: obtenu par un traitement acide d'une fibre régénérée à partir du formiate de cellulose possédant déjà une forte cristallinité (24 heures dans une solution aqueuse d'acide chlorhydrique normale, à $60°C$).

standard amorphe: formiate de cellulose amorphe.

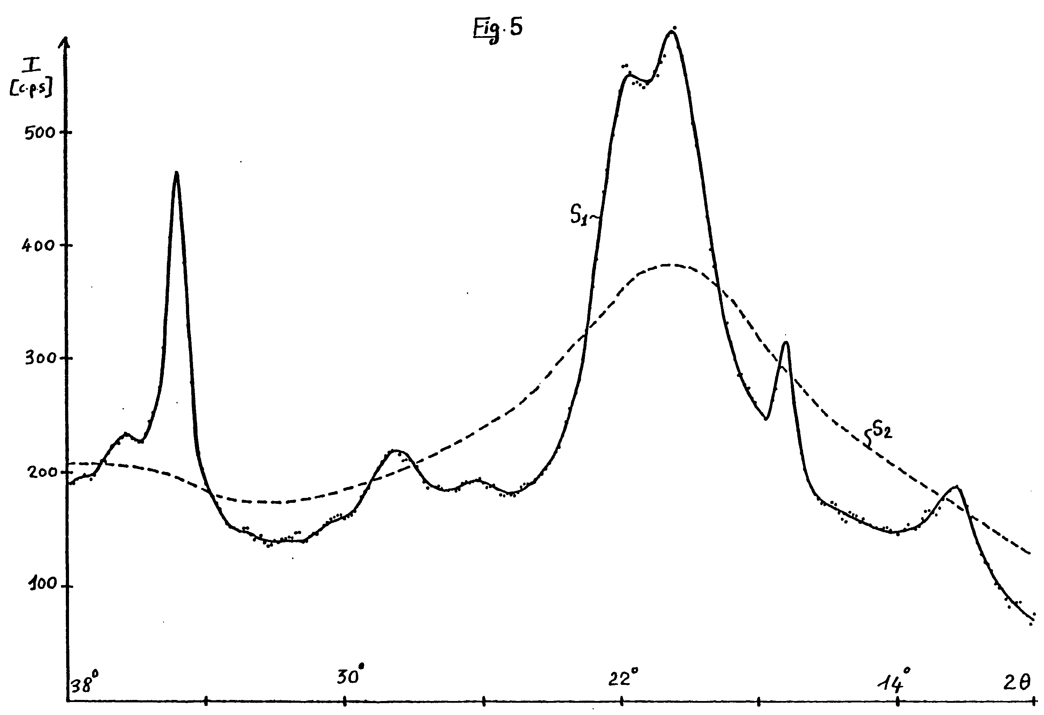

Les spectres caractéristiques de ces deux standards apparaissent sur la figure 5. Sur cette figure 5, le spectre $S_1$ correspondant au standard cristallin est représenté sous forme d'une ligne continue et le spectre $S_2$ correspondant au standard amorphe est représenté sous forme d'une ligne pointillée. Pour ces spectres, l'axe des abcisses correspond à l'angle $2\theta$ en degrés et l'axe des ordonnées correspond à l'intensité corrigée I exprimée en coups par seconde (c.p.s.).

Les spectres sont enregistrés en transmission sur «échantillon tournant» de $2\theta = 10°$ à $2\theta = 38°$. On entend par «échantillon tournant» une nappe de fibres parallèles et contiguës, cette nappe tournant autour d'un axe qui lui est perpendiculaire et ceci pendant l'exposition sous le faisceau des rayons X.

— Taille apparente des cristallites

La formule de Debye-Scherrer permet le calcul de la dimension apparente des cristallites dans une direction liée au choix de la réflexion balayée. Un balayage en fonction de $2\theta$, suivant le méridien de la réflexion située à environ 34,7° fournit une courbe de l'intensité diffractée en fonction de l'angle 2 θ. La largeur à mi-hauteur du profil, soit $\beta_o$, exprimée en radian permet d'accéder à la taille longitudinale apparente des cristallites $(T_l)$ par la relation

$$T_l = \frac{\lambda}{\sqrt{\beta_o^2 - \beta^2} \cdot \cos \theta}$$

β correspondant à une «largeur instrumentale» déterminée à partir de la diffraction sur une poudre d'hexaméthylène tétramine.

L'angle θ est la moitié de l'angle 2 θ correspondant au maximum du profil. λ est la largeur d'onde de la radiation X utilisée.

La même procédure appliquée à un balayage équatorial au niveau de la réflexion située à environ 11° 2 θ sur l'équateur permet de fournir une taille transversale apparente des cristallites $(T_t)$. Une augmentation de la taille apparente des cristallites doit être considérée comme le résultat d'une augmentation de la taille réelle et/ou d'une amélioration de l'ordre local.

— Longue période

Une expérience de diffusion centrale des rayons X sur des fibres organiques peut révéler sur une photographie une diffusion autour du faisceau direct incident, allongée suivant l'équateur, et deux taches de diffraction aux petits angles, de part et d'autre de la diffusion centrale, sur le méridien. Ce phénomène éventuel de diffraction aux petits angles traduit l'existence d'une périodicité de la densité électronique dans le matériau étudié. Nous caractérisons cette périodicité par la quantité L.P. = $\dfrac{\lambda}{\sin\varepsilon}$ où λ est la longueur d'onde du rayonnement X et ε l'angle 2 θ suivant le méridien, correspondant au maximum d'intensité pour la diffraction.

L'enregistrement de l'intensité de cette diffraction aux petits angles suivant le méridien en fonction de ε fournit une courbe dont la largeur à mi-hauteur $\Delta\varphi$ est représentative de la régularité de la périodicité, et la surface sous la courbe (intensité intégrée) de l'amplitude du phénomène périodique. Le phénomène éventuel de longue période est caractérisé par les paramètres L.P., $\Delta\varphi$, I.I.

3.3. *Morphologie*

Les caractéristiques morphologiques des articles filés sont déterminées par microscopie optique et microscopie électronique à balayage.

C. *Exemples*

Les exemples qui suivent décrivent la réalisation de fibres en cellulose estérifiée obtenue conformément au procédé précédemment décrit au § A.1., en faisant éventuellement référence aux tableaux 1 et 3 précédents. Dans tous ces exemples, les références $R_I$, $R_{II}$, $R_{III}$, $R_{er}$, ont la même signification et sont calculées de la même façon que précédemment décrit. Le filage s'effectue comme décrit au § A.2. précédent.

*Exemple II-1*

On réalise un mélange à partir des matières de base suivantes:

— Matière (I): matière cellulosique contenant 99,3% en poids d'holocellulose (45,7% en poids d'α-cellulose et 53,6% en poids d'hémicelluloses).

— Matière (II): acide formique (tableau 3, produit 22).

— Matière (III): acide orthophosphorique (tableau 3, produit 23).

Lors de la réalisation du mélange, on a les relations:

$R_I = 19,8\%$; $R_{II} = 18,1\%$; $R_{III} = 61,05\%$; $R_{er} = R_e = 1,05\%$.

Au bout de 20 minutes, on obtient une solution dont la constitution est la suivante:

Dérivé cellulosique (formiate de cellulose): 23,65% en poids; acide organique (acide formique): 11,8% en poids; acide minéral (acide orthophosphorique): 61,05% en poids; eau: 3,5% en poids. La solution est anisotrope.

A partir du réacteur de mise en solution, on introduit directement la solution dans la pompe de filature.

A partir de la pompe, on extrude la solution à travers une filière comportant 100 orifices ayant chacun un diamètre de 0,005 cm. La filière est située à 2 cm au-dessus du bain de coagulation qui est de l'acétone à –17°C. Sur le dispositif d'entraînement, la fibre a une vitesse de 90 m/minute ce qui correspond à un FEF de 4,5. La bobine obtenue est lavée dans l'eau puis séchée à l'air. On obtient ainsi un filé constitué par 100 filaments, la fibre étant constituée par ce filé.

*Exemple II-2*

On réalise un mélange à partir des matières de base suivantes:

— Matière (I): matière cellulosique contenant 99,3% en poids d'holocellulose (52,2% en poids d'α-cellulose et 47,1% en poids d'hémicelluloses).

— Matières (II) et (III): les mêmes que pour l'exemple II-1.

Lors de la réalisation du mélange, on a les relations:

$R_I = 19,8\%$; $R_{II} = 18,1\%$; $R_{III} = 61,05\%$; $R_{er} = R_e = 1,05\%$.

Au bout de 20 minutes, on obtient une solution anisotrope dont la constitution est la suivante: formiate de cellulose: 24,05% en poids; acide formique: 11,1% en poids; acide orthophosphorique: 61,05% en poids; eau: 3,8% en poids.

On réalise une fibre avec cette solution conformément à l'exemple II-1 précédent.

*Exemple II-3*

On réalise un mélange en introduisant dans le réacteur 368,6 g de matière $C_1$ (tableau 1) séchée partiellement, 442,6 g d'acide formique (tableau 3, produit 22) et 1 500 g d'acide orthophosphorique (tableau 3, produit 23).

Lors de la réalisation du mélange, on a les relations:

$R_I = 15,85\%$; $R_{II} = 19,0\%$; $R_{III} = 64,05\%$; $R_{er} = R_e = 1,1\%$.

Au bout de 20 minutes, on obtient une solution anisotrope dont la constitution est la suivante (% en poids): formiate de cellulose: 19,6%; acide formique: 12,85%; acide orthophosphorique: 64,05%; eau: 3,5%.

On réalise une fibre avec cette solution conformément à l'exemple II-1 précédent.

*Exemple II-4*

On réalise une solution de façon analogue à l'exemple II-2, avec la différence que lors de la réalisation du mélange, on a les relations:

$R_I = 23,75\%$; $R_{II} = 17,2\%$; $R_{III} = 58,0\%$; $R_{er} = R_e = 1,05\%$.

Au bout de 20 minutes, on obtient une solution anisotrope dont la constitution est la suivante (% en poids): formiate de cellulose: 28,5%; acide formique: 9,4%; acide orthophosphorique: 58,0%; eau: 4,1%. On réalise une fibre avec cette solution conformément à l'exemple II-1 précédent, avec les différences suivantes: vitesse d'enroulement sur le dispositif d'entraînement: 81 m/min; FEF = 5,4.

*Exemple II-5*

On réalise un mélange à partir des matières de base suivantes:

Matière (I): matière cellulosique contenant 99,4% en poids d'holocellulose (91,3% en poids d'α-cellulose et 8,1% en poids d'hémicelluloses).

Matières (II) et (III): les mêmes que pour l'exemple II-1.

Lors de la réalisation du mélange, on a les relations:

$R_I = 15,85\%$; $R_{II} = 19,0\%$; $R_{III} = 64,05\%$; $R_{er} = R_e = 1,1\%$.

Au bout de 90 minutes, on obtient une solution anisotrope dont la constitution est la suivante (% en poids): formiate de cellulose: 19,35%; acide formique: 13,25%; acide orthophosphorique: 64,05%; eau: 3,35%. On réalise des fibres avec cette solution conformément à l'exemple II-1 précédent avec les différences suivantes: vitesse du dispositif d'entraînement: 90 m/min; FEF = 3,6.

*Exemple II-6*

On réalise un mélange à partir des matières de base suivantes:

Matière (I): matière cellulosique contenant 99,1% en poids d'holocellulose (89,4% en poids d'α-cellulose et 9,7% en poids d'hémicelluloses).

Matières (II) et (III): les mêmes que pour l'exemple II-1.

Lors de la réalisation du mélange, on a les relations:

$R_I = 19,75\%$; $R_{II} = 18,1\%$; $R_{III} = 61,05\%$; $R_{er} = R_e = 1,1\%$.

Au bout de 90 minutes, on obtient une solution anisotrope dont la constitution est la suivante (% en poids): formiate de cellulose: 24,95%; acide formique: 9,6%; acide orthophosphorique: 61,05%; eau: 4,4%. On réalise une fibre avec cette solution conformément à l'exemple II-1.

*Exemple II-7*

On réalise une solution dans les mêmes conditions que l'exemple II-2 mais en utilisant pour la matière (II) un mélange d'acide formique et d'acide acétique (tableau 3, produits 22 et 3), le rapport poids d'acide formique/poids d'acide acétique étant égal à 9, le rapport $R_{II}$ ayant la même valeur que pour l'essai II-2. Au bout de 30 minutes, on obtient une solution anisotrope dont la constitution est la suivante (% en poids): acéto-formiate de cellulose: 23,45%; mélange d'acide formique et d'acide acétique: 12,1%; acide orthophosphorique: 61,05%; eau: 3,4%. Le terme «acéto-formiate de cellulose» couvre un ester mixte de la cellulose comportant des groupes formiate et acétate. A partir de cette solution, on produit une fibre selon la méthode de l'exemple II-1.

*Exemple II-8*

On réalise un mélange à partir des matières de base suivantes:

Matière (I): matière cellulosique contenant 97,4% en poids d'holocellulose (95,1% en poids d'α-cellulose et 2,3% en poids d'hémicellulose).

Matières (II) et (III): les mêmes que pour l'exemple II-1.

Lors de la réalisation du mélange, on a les relations suivantes:

$R_I = 15,55\%$; $R_{II} = 19,0\%$; $R_{III} = 64,05\%$; $R_{er} = R_e = 1,4\%$.

Après passage dans un mélangeur à double vis et au bout de 30 minutes, on obtient une solution anisotrope dont la constitution est la suivante (% en poids): formiate de cellulose: 18,85%; acide formique: 13,6%; acide orthophosphorique: 64,05%; eau: 3,5%. On produit une fibre à partir de cette solution conformément à l'exemple II-1, en ayant préalablement dégazé la solution pendant 30 minutes sous vide.

*Exemple II-9*

On réalise un mélange à partir des matières de base suivantes:

Matière (I): matière cellulosique contenant 98,7% en poids d'holocellulose (89% en poids d'α-cellulose et 9,7% en poids d'hémicelluloses).

Matières (II) et (III): les mêmes que pour l'exemple II-1.

Lors de la réalisation du mélange, on a les relations suivantes:

$R_I = 19,7\%$; $R_{II} = 18,1\%$; $R_{III} = 61,05\%$; $R_{er} = R_e = 1,15\%$.

Au bout de 90 minutes, on obtient une solution anisotrope dont la constitution est la suivante (% en poids): formiate de cellulose: 23,75%; acide formique: 11,4%; acide orthophosphorique: 61,05%; eau: 3,8%. On produit une fibre à partir de cette solution conformément à l'exemple II-1.

Dans tous les exemples II-1 à II-9 précédents, la cellulose de la matière (I) a un degré de polymérisation DP supérieur à 150 et inférieur à 1 500 et la variation de DP lors de la réalisation des compositions est toujours inférieure à 20%.

Les propriétés mécaniques et les caractéristiques chimiques des articles filés sont données dans le tableau 16 suivant. Les propriétés T, $A_r$, $M_i$, DP, DS ont été déterminées pour tous les essais, $M_s$ étant déterminé pour une majorité d'essais.

Dans ce tableau, les abréviations utilisées sont les suivantes: F = filé; $F_t$ = filament; $T_i$ = titre; T = téna-

cité; $A_r$ = allongement rupture; $M_i$ = module initial; $M_s$ = module sonique; DS = degré total de substitution de la cellulose; DP = degré de polymérisation de la cellulose dans les dérivés cellulosiques.

*Tableau 16*

| N° d'exemple | | $T_i$ (F) tex | $T_i$ ($F_t$) dtex | T cN/tex | $A_r$ (%) | $M_i$ cN/tex | $M_s$ cN/tex | DP | DS % |
|---|---|---|---|---|---|---|---|---|---|
| | | | | | | Propriétés mécaniques | | Caractéristiques chimiques | |
| II-1 | F | 18,5 | | 24 | 2,3 | 1550 | 2570 | 167 | 37,3 |
| » | $F_t$ | | 1,96 | 30 | 3 | 2160 | | | |
| II-2 | F | 19,7 | | 47 | 3,4 | 2330 | | 262 | 41,6 |
| II-3 | F | 16,8 | | 41 | 3,3 | 2030 | 2814 | 246 | 45,6 |
| II-4 | F | 19,9 | | 48 | 3,0 | 2430 | 3179 | 254 | 38,7 |
| II-5 | F | 20,7 | | 56 | 4,2 | 2130 | 2812 | 380 | 42,6 |
| II-6 | F | 20,6 | | 57 | 3,7 | 2410 | 3277 | 284 | 50,7 |
| » | $F_t$ | | 1,96 | 60 | 3,7 | 2780 | | | |
| II-7 | F | 20,7 | | 46 | 3,6 | 2210 | 3041 | 256 | 35,3* |
| II-8 | F | 16,9 | | 65 | 4,0 | 2390 | 3082 | 420 | 40,7 |
| » | $F_t$ | | 1,72 | 72 | 4,0 | 2780 | | | |
| II-9 | F | 20,5 | | 58 | 3,7 | 2460 | 3720 | 326 | 39,8 |
| » | $F_t$ | | 2,13 | 64 | 3,7 | 2780 | | | |

(Caractéristiques: Propriétés mécaniques / Caractéristiques chimiques)

\* Pour l'exemple n° II-7, le DS relatif aux groupes formiate est de 34,4%, le DS relatif aux groupes acétate est de 0,9%.

Les caractéristiques physiques des articles filés obtenus avec les essais II-1 à II-9 sont résumées dans le tableau 17 suivant. La caractéristique $\Delta n$ a été déterminée pour tous les essais, les autres caractéristiques physiques étant déterminées pour une majorité d'essais.

Dans ce tableau, les abréviations utilisées ont la signification suivante: $\Delta n$: biréfringence; I.O.: indice d'orientation cristalline; I.C.: indice de cristallinité; $T_l$: taille longitudinale des cristallites; $T_t$: taille transversale des cristallites.

*Tableau 17*

| N° d'exemple | $\Delta n$ | I.O. (%) | I.C. (%) | $T_l$ $10^{-7}$ mm (Å) | $T_t$ $10^{-7}$ mm (Å) |
|---|---|---|---|---|---|
| II-1 | 0,0379 | | | | |
| II-2 | 0,0400 | 92,00 | | 130 | 35 |
| II-3 | 0,0365 | 91,35 | 49 | 123 | 32 |
| II-4 | 0,0404 | 92,65 | 55 | 130 | 37 |
| II-5 | 0,0325 | 92,10 | 54 | 132 | 31 |
| II-6 | 0,0400 | 93,20 | 54 | 144 | 36 |
| II-7 | 0,0400 | 92,55 | 51 | 142 | 31 |
| II-8 | 0,0400 | | | | |
| II-9 | 0,0389 | | | | |

(Caractéristiques physiques)

*Remarques sur les essais n° II-1 à II-9*

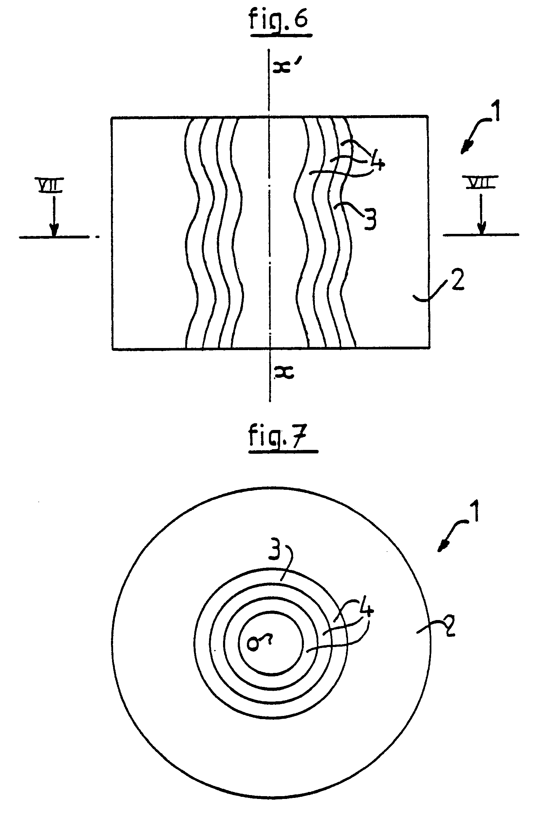

Tous ces essais sont conformes à l'invention. Un examen au microscope de polarisation des filaments constituant les filés obtenus dans ces exemples montre que chacun de ces filaments a une morphologie complexe qui varie en allant du bord au centre. Un tel filament 1 est représenté schématiquement sur les figures 6 et 7.

La figure 6 représente une coupe de ce filament 1 suivant un plan quelconque contenant l'axe xx' de ce filament, supposé rectiligne, et la figure 7 représente une coupe de ce filament 1 suivant un plan quelconque perpendiculaire à cet axe xx' qui est schématisé par la lettre O à la figure 7. Le filament 1 comporte une zone extérieure 2 appelée «peau» et une zone intérieure 3 appelée «coeur». Sous le microscope de polarisation, la peau 2 présente une morphologie uniforme semblable à celle d'un filament de rayonne par exemple. Le coeur 3 par contre, à l'image d'un coeur de palmier, se compose d'une succession de couches 4, ces couches étant pratiquement concentriques dans un plan perpendiculaire à l'axe xx' comme représenté à la figure 7. Le filament 1 est donc constitué au moins en partie par des couches emboîtées les unes dans les autres, ces couches entourant l'axe du filament. Les couches 4 dont l'épaisseur est inférieure au micron (μm) ondulent dans le plan de la figure 6 dans une direction parallèle à l'axe xx'. Dans chaque couche, l'axe optique (direction optique) et la direction de cristallisation varient dans l'espace de façon pseudo-périodique dans la direction de l'axe xx'. Ces directions ne sont pas représentées sur le dessin dans un but de simplification.

Les fibres obtenues ont des valeurs T et $M_i$ qui satisfont aux relations données dans la définition de la fibre de dérivé(s) cellulosique(s) conforme à l'invention.

On a en effet les relations suivantes: DS $\geqslant$ 2%; 150 < DP < 1500; T > 20; $M_i$ > 1000, T et $M_i$ étant exprimés en cN/tex.

Ces fibres ont donc des propriétés mécaniques élevées et ceci dès leur mise en forme, sans étirage supplémentaire après filage.

Ces constatations subsistent tant que le degré de substitution DS de la cellulose en groupes formiate est au moins égal à 2%, ces valeurs de DS étant obtenues par exemple par régénération partielle de la cellulose à partir des dérivés cellulosiques.

On constate d'autre part les faits suivants sur les exemples II-1 à II-9:
— La biréfringence $\Delta n$ est élevée, car elle est supérieure à 0,03.
— Aucun phénomène de longue période ne peut être mis en évidence par analyse des fibres aux rayons X.

De préférence, dans les fibres conformes à l'invention, le degré de substitution DS de la cellulose en groupes formiate est au moins égal à 30,0% et au plus égal à 70,0% et le degré de substitution DS de la cellulose en autres groupes ester est nul ou inférieur à 10,0%.

De préférence dans les fibres conformes à l'invention le degré de polymérisation DP de la cellulose du ou des dérivés cellulosiques est au moins égal à 200 et au plus égal à 1200.

Il est possible de réaliser des films en dérivés cellulosiques à partir des compositions conformes à l'invention, en utilisant des procédés connus, par exemple par filage en utilisant des filières avec fente, ou par coulée.

Lorsque le degré de substitution DS de la cellulose en groupes formiate est inférieur à 2%, les fibres sont alors appelées «fibres en cellulose régénérée», le chapitre III suivant donnant des exemples de telles fibres en cellulose régénérée.

III. *Articles en cellulose régénérée*

A. *Appareillage et méthode de réalisation*

La réalisation des solutions et le filage de ces solutions sont effectuées comme au chapitre II précédent, mais en utilisant une filière avec une fente lorsqu'on veut préparer un film. La régénération de la cellulose par saponification au moins partielle à partir des articles filés peut être réalisée soit en discontinu, par exemple en trempant une bobine de fibres ou de films en formiate de cellulose dans un bain de régénération, soit en continu, par exemple en faisant passer en continu ces fibres ou ces films dans un bain de régénération. Ce bain est notamment une solution aqueuse d'hydroxyde de sodium (NaOH), la concentration de l'hydroxyde dans la solution variant par exemple de 4 à 5% en poids. En discontinu, le temps de régénération est fonction de l'épaisseur de la bobine et peut varier entre quelques heures et plusieurs jours. En continu, le temps de régénération est notablement plus rapide, de l'ordre de la minute ou moins. Dans les deux cas, la solution de régénération est par exemple à la température ambiante.

B. *Détermination des caractéristiques des articles*

Les méthodes utilisées sont les mêmes que celles précédemment décrites au § II-B avec les différences suivantes:
— La détermination de la taille transversale apparente des cristallites $T_t$ se fait en utilisant un arc situé à environ 12,3° en 2 θ.
— Les propriétés mécaniques des films sont déterminées avec une machine de traction identique à celle qui est utilisée pour les filés, selon la norme d'Allemagne Fédérale DIN 53455 d'avril 1968.
— La détermination du degré de substitution DS des articles filés est effectuée de la façon suivante. On conditionne l'article filé, comme décrit au § II-B à la température ambiante et à l'humidité ambiante de la pièce où la détermination du DS est effectuée. On détermine la teneur en eau de l'article filé par exemple par la technique Karl Fisher. On pèse ensuite 2 g de l'article filé et on lave cette quantité de matière avec 50 cm³ d'eau distillée. Le lavage dure 15 minutes pendant lesquelles la matière de l'article filé est mise sous agitation. Cette matière est alors retirée, rincée avec des fractions de 10 cm³ d'eau distillée et essorée. A cette matière de l'article filé on ajoute 10 cm³ d'eau distillée et 10 cm³ de soude aqueuse décinormale (NaOH 0,1 N) plus 10 cm³ d'eau. La matière est agitée dans ce milieu, sous azote à température ambiante, pendant 15 minutes. On retire la matière qui est essorée, lavée avec 20 cm³ d'eau et rincée avec 160 cm³ d'éthanol de façon à obtenir une solution éthanol/eau dans le rapport environ 80/20, cette solution ne contenant donc plus la matière de l'article filé. On effectue alors sur cette solution un dosage potentiométrique avec de l'acide chlorhydrique décinormal (HCl 0,1 N) dans l'éthanol, au moyen d'électrodes adaptées au milieu éthanol/eau. A partir du saut de potentiel caractéristique du formiate de sodium, on détermine la quantité de formiate formé et on a ainsi la valeur de DS défini conformément aux chapitres I et II.

C. *Exemples*

*Exemple III-1*
On réalise une fibre en formiate de cellulose conformément à l'exemple II-1. La fibre obtenue est enroulée sur une bobine perforée que l'on plonge pendant 24 heures dans une solution aqueuse contenant 4% en poids d'hydroxyde de sodium de façon à effectuer la saponification du formiate et la régénération de la cellulose. On lave ensuite la bobine dans l'eau et on sèche la fibre sur la bobine.

### Exemple III-2

On réalise une fibre en formiate de cellulose conformément à l'exemple II-2 et on régénère la cellulose de cette fibre comme décrit dans l'exemple III-1, sauf que la fibre est séchée, en la faisant circuler en continu par déroulage de la bobine dans un tunnel d'air chaud. Après conditionnement, la teneur en eau de la fibre est de 10,3%. Cette teneur en eau est mesurée selon la norme ASTM D 2654-76 (1976).

### Exemple III-3

On réalise une fibre en formiate de cellulose conformément à l'exemple II-3 et on régénère la cellulose de cette fibre comme décrit dans l'exemple III-2.

### Exemple III-4

On réalise une fibre en formiate de cellulose conformément à l'exemple II-4 et on régénère la cellulose de cette fibre comme décrit dans l'exemple III-2.

### Exemple III-5

On réalise une fibre en formiate de cellulose conformément à l'exemple II-5 mais avec une vitesse du dispositif d'entraînement de 90 m/min et un FEF égal à 4,5. On régénère la cellulose de cette fibre comme décrit dans l'exemple III-2.

### Exemple III-6

On réalise une fibre en formiate de cellulose conformément à l'exemple II-6 et on régénère la cellulose de cette fibre comme décrit dans l'exemple III-2.

### Exemple III-7

On opère comme dans l'exemple III-6 mais avec une vitesse du dispositif d'entraînement égale à 80 m/min, FEF étant égal à 8.

### Exemple III-8

On réalise un mélange de façon analogue à l'exemple II-1, mais avec la matière (I) suivante: matière cellulosique contenant 97,5% en poids d'holocellulose (95,2% en poids d'$\alpha$-cellulose et 2,3% en poids d'hémicelluloses), les matières (II) et (III) sont les mêmes que pour l'exemple II-1.

Lors de la réalisation du mélange, on a les relations:

$R_I = 15,5\%$; $R_{II} = 19\%$; $R_{III} = 64,05\%$; $R_{er} = R_e = 1,4\%$.

Au bout de 30 minutes, on obtient une solution anisotrope dont la constitution est la suivante (% en poids): formiate de cellulose: 18,95%; acide formique: 13,4%; acide orthophosphorique: 64,05%; eau: 3,6%.

On réalise une fibre conformément à l'exemple II-1, mais avec une vitesse du dispositif d'entraînement de 90 m/min et un FEF de 6,6.

On régénère la cellulose de cette fibre comme décrit dans l'exemple III-2.

### Exemple III-9

On réalise une fibre en formiate de cellulose conformément à l'exemple II-9 mais avec une vitesse du dispositif d'entraînement de 90 m/min et un FEF de 9. On régénère la cellulose de cette fibre comme décrit dans l'exemple III-2.

### Exemple III-10

On réalise un mélange de façon analogue à l'exemple II-1 mais avec la matière (I) suivante: matière cellulosique contenant 97,4% en poids d'holocellulose (95,1% en poids d'$\alpha$-cellulose et 2,3% en poids d'hémicelluloses). Les matières (II) et (III) sont les mêmes que pour l'exemple II-1. Lors de la réalisation du mélange, on a les relations suivantes:

$R_I = 6,2\%$; $R_{II} = 21,2\%$; $R_{III} = 71,35\%$; $R_{er} = R_e = 1,25\%$.

Cet exemple n'est donc pas conforme à l'invention. Au bout de 90 minutes, on obtient une solution isotrope dont la constitution est la suivante (% en poids): formiate de cellulose: 7,45%; acide formique: 19,15%; acide orthophosphorique: 71,35%; eau: 2,05%. On réalise une fibre conformément à l'exemple II-1 mais avec une vitesse du dispositif d'entraînement de 93 m/min et un FEF de 1,5. On régénère la cellulose de cette fibre comme dans l'exemple III-2.

### Exemple III-11

Cet exemple illustre la possibilité de réaliser des films conformément à l'invention. On prépare une solution conformément à l'exemple II-4. On file cette solution en utilisant une filière munie d'une fente rectangulaire (10 mm × 0,15 mm). La vitesse du dispositif d'entraînement est de 20 m/min et le FEF est de 8. On régénère la cellulose de ce film comme décrit dans l'exemple III-1.

### Exemple III-12

On réalise une fibre en acétoformiate de cellulose conformément à l'exemple II-7. On régénère cette fibre en continu pendant 20 secondes dans une solution aqueuse contenant 5% en poids d'hydroxyde de sodium de façon à effectuer la saponification du formiate et non celle de l'acétate. On lave la bobine obtenue et on la sèche conformément à l'exemple III-2.

### Exemple III-13

On réalise un mélange analogue à l'exemple II-1, mais avec la matière (I) suivante: matière cellulosique contenant 97,3% en poids d'holocellulose (95,0% en poids d'$\alpha$-cellulose et 2,3% en poids d'hémicelluloses). Les matières (II) et (III) sont les mêmes que pour l'exemple II-1. Lors de la réalisation du mélange on a les relations $R_I = 17,85\%$; $R_{II} = 18,5\%$; $R_{III} = 62,2\%$; $R_{er} = R_e = 1,45\%$.

Au bout de 30 minutes, on obtient une solution anisotrope dont la constitution est la suivante (% en poids): formiate de cellulose: 21,4%; acide formique: 12,7%; acide orthophosphorique: 62,2%; eau: 3,7%. On réalise une fibre conformément à l'exemple II-1 mais avec une vitesse du dispositif d'entraînement de 80 m/min et un FEF de 14. On régénère la cellulose de cette fibre comme décrit dans l'exemple III-2.

*Exemple III-14*

On réalise un mélange de façon analogue à l'exemple II-1 mais avec la matière (I) suivante: matière cellulosique contenant 99,0% en poids d'holocellulose (97,5% en poids d'α-cellulose et 1,5% en poids d'hémicelluloses). Les matières (II) et (III) sont les mêmes que pour l'exemple II-1. Lors de la réalisation du mélange on a les relations:

$R_I = 19,8\%$; $R_{II} = 17,8\%$; $R_{III} = 61,4\%$; $R_{er} = R_e = 1,0\%$.

Au bout de 30 minutes, on obtient une solution anisotrope dont la constitution est la suivante (% en poids): formiate de cellulose: 23,7%; acide formique: 11,4%; acide orthophosphorique: 61,4%; eau: 3,5%.

On réalise une fibre conformément à l'exemple II-1 mais avec une vitesse du dispositif d'entraînement de 45 m/min et un FEF de 5,6. On régénère la cellulose de cette fibre comme décrit dans l'exemple III-2.

Tous les essais sont conformes à l'invention, sauf l'essai n° III-10. Les propriétés mécaniques et les caractéristiques chimiques des fibres et du film obtenus dans les essais III-1 à III-14 sont données dans le tableau 18 suivant, les abréviations de ce tableau étant les mêmes que celles utilisées dans le tableau 16 précédent, l'abréviation supplémentaire $F_m$ représentant un film. Sur le tableau 18, les caractéristiques T, $A_r$, $M_i$, DP, DS ont été déterminées pour tous les essais, la caractéristique $M_s$ étant déterminée pour une majorité d'essais.

*Tableau 18*

| N° d'exemple | | $T_i$ (F) tex | $T_i$ ($F_t$) dtex | T cN/tex | $A_r$ (%) | $M_i$ cN/tex | $M_s$ cN/tex | DP | DS (%) |
|---|---|---|---|---|---|---|---|---|---|
| | | | | **Propriétés mécaniques** | | | | **Caractéristiques chimiques** | |
| III-1 | $F_t$ | | 1,69 | 30 | 2,3 | 2300 | | 167 | < 1 |
| III-2 | F | 17,8 | | 60 | 4,0 | 2440 | 2349 | 250 | < 1 |
| » | $F_t$ | | 1,68 | 70 | 4,5 | 2635 | | | |
| III-3 | F | 14 | | 56 | 3,8 | 2300 | 3108 | 246 | < 1 |
| III-4 | F | 17,1 | | 64 | 3,5 | 2645 | 3543 | 245 | < 1 |
| III-5 | F | 13,2 | | 83 | 4,0 | 3000 | 3748 | 380 | < 1 |
| » | $F_t$ | | 1,23 | 90 | 4,4 | 3400 | | | |
| III-6 | F | 17,6 | | 68 | 3,6 | 2860 | 3930 | 284 | < 1 |
| III-7 | F | 10,3 | | 73 | 3,8 | 3030 | 4180 | 284 | < 1 |
| III-8 | $F_t$ | | 1,03 | 107 | 4,3 | 3910 | | 504 | < 1 |
| III-9 | F | 8,5 | | 77 | 3,5 | 3190 | 4240 | 326 | < 1 |
| » | $F_t$ | | 0,875 | 86 | 3,2 | 3840 | | | |
| III-10 | F | 15 | | 35 | 4,0 | 1890 | 2600 | 366 | < 1 |
| III-11 | $F_m$ | 111 | | 29 | 2,8 | 1870 | | 250 | < 1 |
| III-12 | F | 17,6 | | 50 | 3,5 | 2120 | 3600 | 256 | *$A_c$:0,80 F :1,03 |
| III-13 | F | 4,5 | | 97 | 3,75 | 3285 | | 490 | < 1 |
| III-14 | F | 15,4 | | 98,2 | 3,9 | 3140 | 4460 | 458 | < 1 |

*Ac = DS relatif aux groupes acétate, F = DS relatif aux groupes formiate.

Les caractéristiques physiques des fibres obtenues dans les essais du chapitre III sont données dans le tableau 19 suivant, les abréviations de ce tableau étant les mêmes que celles utilisées dans le tableau 17 précédent, avec en plus: L.P.: longue période; $\Delta\varphi$: largeur à mi-hauteur; I.I.: intensité intégrée.

Sur le tableau 19, la caractéristique $\Delta n$ a été déterminée pour toutes les fibres, les autres caractéristiques étant déterminées pour une majorité de fibres.

*Tableau 19*

| N° d'essai | $\Delta n$ | I.O. (%) | L.P. (Å) $10^{-7}$ mm | $\Delta\varphi$ (°) | I.I. (unité arbitraire) | I.C. (%) | $T_l$ (Å) $10^{-7}$ mm | $T_t$ (Å) $10^{-7}$ mm |
|---|---|---|---|---|---|---|---|---|
| III-1 | 0,0461 | | | | | | | |
| III-2 | 0,0545 | 95,80 | 178 | 0,34 | 1000 | 81 | 183 | 52 |
| III-3 | 0,0511 | 95,70 | 178 | 0,34 | 950 | 85 | 204 | 54 |
| III-4 | 0,0537 | 96,00 | 178 | 0,36 | 860 | 79 | 204 | 61 |
| III-5 | 0,0564 | 96,50 | 230 | 0,49 | 440 | 92 | 252 | 64 |
| III-6 | 0,0522 | 96,40 | 203 | 0,40 | 450 | 90 | 238 | 54 |
| III-7 | 0,0603 | 96,70 | 216 | 0,37 | 380 | 90 | 252 | 58 |
| III-8 | 0,0528 | | | | | | | |
| III-9 | 0,0577 | | | | | | | |
| III-10 | 0,0476 | 94,90 | >220 | | | 82 | 200 | 56 |
| III-12 | 0,0502 | | | | | | | |
| III-13 | 0,0580 | | | | | | | |
| III-14 | 0,0540 | 96,30 | 210 | 0,35 | 250 | 64 | 210 | 44 |

Les fibres en cellulose régénérée obtenues dans les exemples III-1 à III-9, III-12 à III-14 sont conformes à l'invention et la fibre en cellulose régénérée obtenue dans l'exemple III-10 n'est pas conforme à l'invention. Toutes ces fibres ont un degré de substitution DS en groupes formiate inférieur à 2%.

Dans tous les exemples III-1 à III-9, III-12 à III-14 conformes à l'invention, la cellulose de la matière (I) et des fibres a un degré de polymérisation DP supérieur à 150 et inférieur à 1500 et la variation de DP lors de la réalisation des compositions est toujours inférieure à 20%.

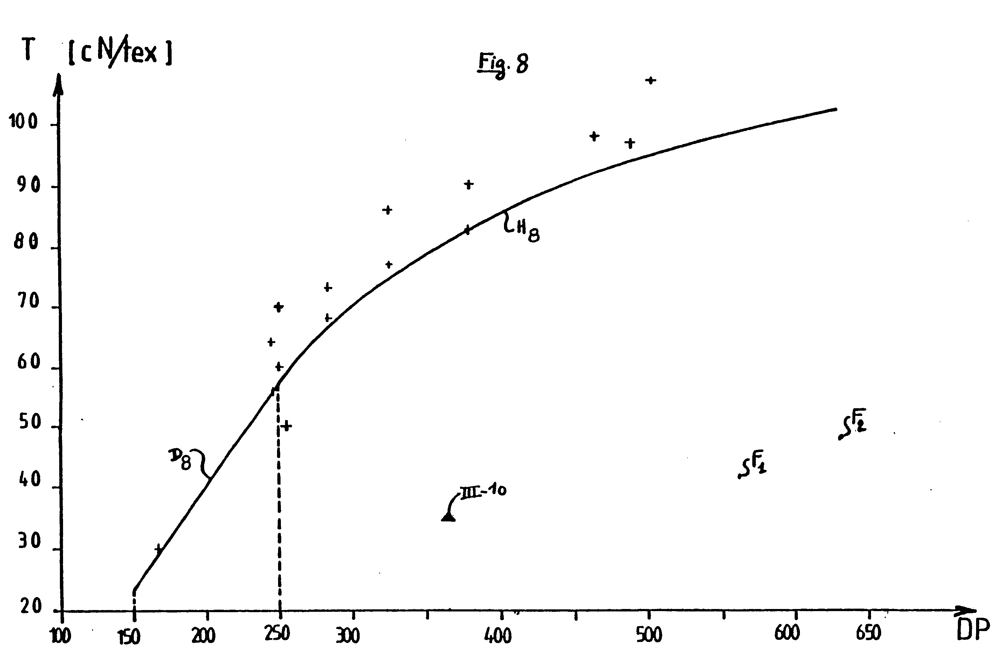

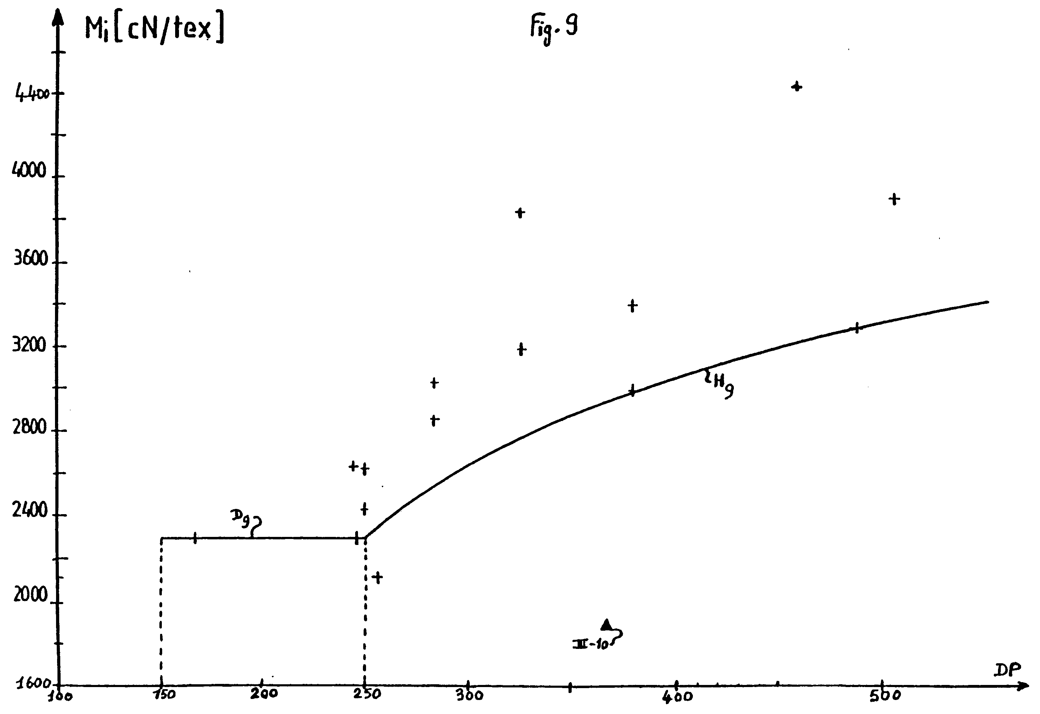

La figure 8 représente la ténacité T des fibres en fonction du degré de polymérisation DP de la cellulose de ces fibres et la figure 9 représente le module initial $M_i$ des fibres en fonction du degré de polymérisation DP de la cellulose de ces fibres. Sur les figures 8, 9, l'axe des abcisses correspond aux DP et l'axe des ordonnées correspond à T exprimé en cN/tex (figure 8) ou à $M_i$ exprimé en cN/tex (figure 9), les valeurs de DP, T, $M_i$ étant données par le tableau 18 précédent. Sur ces figures 8, 9, les fibres conformes à l'invention sont représentées par des croix, ces fibres conformes à l'invention n'étant pas référencées sur le dessin dans un but de simplification et la fibre non conforme à l'invention (exemple III-10) est représentée par un triangle noir référencé III-10. Sur la figure 8 sont représentées d'autre part sous forme de points deux fibres connues en rayonne, ces fibres connues étant référencées $F_1$ et $F_2$ sur le dessin. Les caractéristiques de ces fibres connues sont données dans le tableau 20 suivant:

*Tableau 20*

| Caractéristiques | Fibre $F_1$ | Fibre $F_2$ |
|---|---|---|
| DP | 560 | 630 |
| T | 42 | 48 |
| $M_i$ | 800 | 1000 |

Pour ces fibres connues, les caractéristiques T et $M_i$, exprimées en cN/tex sont déterminées sur des filés.

Les figures 8, 9 montrent que les fibres en cellulose régénérée conformes à l'invention vérifient les relations suivantes:

pour DP $< 200$,    on a $T > 20$ et $M_i > 1800$;
pour $200 \leqslant DP < 300$,    on a $T > 30$ et $M_i > 2000$;
pour $300 \leqslant DP < 400$,    on a $T > 40$ et $M_i > 2400$;
pour $400 \leqslant DP < 1500$,    on a $T > 60$ et $M_i > 2600$

T et $M_i$ étant exprimés en cN/tex.

On constate d'autre part sur les figures 8, 9 que toutes les fibres en cellulose régénérée conformes à l'invention sauf celle de l'exemple III-12 vérifient les relations suivantes:

pour $150 < DP < 250$,

on a $T \geqslant \dfrac{1}{3} DP - 26$ et $M_i \geqslant 2300$;

pour $250 \leqslant DP < 1500$,

on a $T \geqslant -\dfrac{18675}{DP} + 132$ et $M_i \geqslant -\dfrac{502250}{DP} + 4309$

T et $M_i$ étant exprimés en cN/tex.

Sur la figure 8, on a représenté une portion de la droite $D_8$ d'équation $T = \dfrac{1}{3} DP - 26$ et une portion de l'hyperbole $H_8$ d'équation $T = \dfrac{18675}{DP} + 132$, ces portions aboutissant à la valeur DP = 250.

Sur la figure 9, on a représenté une portion de la droite $D_9$ d'équation $M_i = 2300$ et une portion de l'hyperbole $H_9$ d'équation $M_i = -\dfrac{502250}{DP} + 4309$, ces portions aboutissant à la valeur DP = 250.

Les fibres non conformes à l'invention portées sur les figures 8, 9 ne vérifient pas l'ensemble des relations précitées.

34

Les différences importantes ainsi constatées entre les fibres en cellulose régénérée conformes à l'invention et la fibre non conforme à l'invention obtenue dans l'exemple III-10 s'expliquent par le fait suivant:

— les fibres conformes à l'invention sont obtenues à partir de solutions anisotropes, dont la concentration en dérivé cellulosique est supérieure à la concentration critique;

— la fibre de l'exemple III-10 est obtenue à partir d'une solution isotrope dont la concentration en dérivé cellulosique est inférieure à la concentration critique.

Le terme «concentration critique» a été défini précédemment.

L'étude du tableau 18 montre d'autre part que les fibres en cellulose régénérée conformes à l'invention ont un module sonique $M_s$ élevé, supérieur à 3000 cN/tex. Il faut noter que le haut niveau des propriétés mécaniques des articles en cellulose régénérée conforme à l'invention est atteint immédiatement après leur mise en forme, c'est-à-dire sans étirage supplémentaire.

L'étude du tableau 19 montre en outre les faits suivants pour les fibres en cellulose régénérée conformes à l'invention:

— L'indice d'orientation I.O. est élevé car il est supérieur à 95,5%.

— On constate l'existence d'un phénomène de longue période avec la relation inattendue: $T_l \geqslant L.P.$

La fibre non conforme à l'invention de l'exemple III-10 ne présente pas ces caractéristiques.

Lorsqu'on étudie les fibres en cellulose régénérée conformes à l'invention avec un microscope optique ou avec un microscope électronique à balayage, on constate que la morphologie de ces fibres est identique à celle précédemment décrite au chapitre II pour les fibres en dérivés cellulosiques ayant un degré de substitution DS en groupes formiate supérieur ou égal à 2%.

Le procédé conforme à l'invention précédemment décrit pour réaliser des fibres en cellulose régénérée permet de façon inattendue d'avoir la combinaison des avantages suivants:

— dissolution directe, rapide et peu coûteuse de cellulose, sans partir d'un dérivé de la cellulose pour réaliser la solution filable;

— utilisation de produits peu coûteux et non toxiques comme agents de dissolution de la cellulose;

— dégradation faible de la cellulose lors de sa mise en solution;

— régénération facile des articles filés;

— obtention de fibres en cellulose régénérée qui se caractérisent de façon surprenante par la combinaison de deux facteurs: ténacité élevée, module élevé.

De préférence, dans les fibres en cellulose régénérée conformes à l'invention, le degré de substitution DS de la cellulose en groupes ester autres que formiate est nul ou inférieur à 1,5%.

De préférence dans les fibres en cellulose régénérée conformes à l'invention le DP de la cellulose est au moins égal à 200 et au plus égal à 1200.

Bien entendu, l'invention n'est pas limitée aux exemples précédemment décrits. C'est ainsi en particulier que les compositions conformes à l'invention peuvent comporter des matières autres que celles décrites, par exemple des pigments, des charges, des polymères autres que la cellulose susceptibles éventuellement d'être estérifiés pendant la réalisation de la composition. Dans ce cas, de préférence, dans le procédé de dissolution conforme à l'invention, on réalise un mélange essentiellement à partir des matières de base précédemment décrites et les compositions conformes à l'invention ont essentiellement la constitution précédemment décrite. L'invention couvre aussi les cas où les compositions et les articles comportent un mélange de dérivés cellulosiques.

## Revendications

1. Composition à base d'au moins un dérivé cellulosique comportant des groupes ester de la cellulose, au moins une partie des groupes ester étant des groupes formiate, caractérisée en ce qu'elle est une solution anisotrope susceptible de donner des fibres ou des films et contenant:

a) le ou les dérivés cellulosiques, la concentration du dérivé cellulosique ou de l'ensemble des dérivés cellulosiques dans la solution étant au moins égale à 10,2% en poids, le degré de polymérisation DP de la cellulose dans le ou les dérivés cellulosiques étant supérieur à 150 et inférieur à 1500;

b) de l'acide formique ou au moins deux composés choisis dans le groupe constitué par les acides organiques monocarboxyliques, les anhydrides et halogénures de ces acides, un de ces composés étant l'acide formique;

c) au moins un acide phosphorique.

2. Composition selon la revendication 1 caractérisée par les points suivants:

— soient les pourcentages en poids $r_I$, $r_{II}$, $r_{III}$, $r_e$ définis par les relations suivantes:

$r_I$: pourcentage du ou des dérivés cellulosiques;

$r_{II}$: pourcentage de la phase dite «acide organique», cette phase comprenant tous les acides organiques, anhydrides d'acides organiques, halogénures d'acides organiques, éventuellement présents dans la composition;

$r_{III}$: pourcentage de la phase dite «acide phosphorique» cette phase comprenant les acides phosphoriques et l'anhydride phosphorique éventuellement présents dans la composition;

$r_e$: pourcentage d'eau éventuellement présente dans la composition, ces pourcentages étant calculés sur le poids total = poids du ou des dérivés cellulosiques + poids de la phase dite «acide organique» + poids de la phase dite «acide phosphorique» + poids de l'eau éventuelle, ces pourcentages $r_I$, $r_{II}$, $r_{III}$, $r_e$ permettant de définir un diagramme quaternaire avec la relation $r_I + r_{II} + r_{III} + r_e = 100$ (en pourcentage);

— les valeurs de $r_e$ sont réparties en intervalles; dans chaque intervalle on a $r_{ei} \leqslant r_e < r_{ej}$, $r_{ei}$ et $r_{ej}$ étant des valeurs fixes; pour chaque valeur $r_{ei}$, c'est-à-dire lorsqu'on a la relation $r_I + r_{II} + r_{III} = 100 - r_{ei}$ (en pourcentage), on définit un polygone comportant un nombre de sommets qui peut varier d'un intervalle à l'autre, chacun de ces sommets étant référencé de

façon générale $C_k$ (k étant une variable) et étant défini par ses coordonnées $r_{Ik}$, $r_{IIk}$, $r_{IIIk}$ dans le diagramme ternaire correspondant à la valeur $r_{ei}$, c'est-à-dire dans le diagramme ternaire du plan $r_{ei}$;

— dans chaque intervalle $r_{ei} \leqslant r_e < r_{ej}$, tout point du diagramme quaternaire de coordonnées $r_I$, $r_{II}$, $r_{III}$, $r_e$ correspondant à une composition conforme à la revendication 1 se projette sur le plan $r_{ei}$, et perpendiculairement à ce plan, à l'intérieur du polygone de sommets $C_k$, ou sur les côtés de ce polygone;

— ces intervalles $r_{ei} \leqslant r_e < r_{ej}$ et ces polygones de sommets $C_k$ sont donnés par les relations suivantes, les valeurs de $r_{ei}$, $r_e$, $r_{ej}$ et les valeurs des coordonnées des sommets $C_k$ étant exprimées en % :

— pour $0,0 \leqslant r_e < 1,4$ ce polygone est un pentagone de sommets :

$C_1$ $(r_{I1} = 10,8,\quad r_{II1} = 0,4,\quad r_{III1} = 88,8)$
$C_2$ $(r_{I2} = 38,9,\quad r_{II2} = 0,2,\quad r_{III2} = 60,9)$
$C_3$ $(r_{I3} = 43,6,\quad r_{II3} = 9,8,\quad r_{III3} = 46,6)$
$C_4$ $(r_{I4} = 19,0,\quad r_{II4} = 38,5,\quad r_{III4} = 42,5)$
$C_5$ $(r_{I5} = 12,8,\quad r_{II5} = 40,3,\quad r_{III5} = 46,9)$

— pour $1,4 \leqslant r_e < 3,8$ ce polygone est un hexagone de sommets :

$C_1$ $(r_{I1} = 10,8,\quad r_{II1} = 0,5,\quad r_{III1} = 87,3)$
$C_2$ $(r_{I2} = 38,9,\quad r_{II2} = 0,1,\quad r_{III2} = 59,6)$
$C_3$ $(r_{I3} = 43,6,\quad r_{II3} = 9,8,\quad r_{III3} = 45,2)$
$C_4$ $(r_{I4} = 23,6,\quad r_{II4} = 33,3,\quad r_{III4} = 41,7)$
$C_5$ $(r_{I5} = 15,2,\quad r_{II5} = 35,5,\quad r_{III5} = 47,9)$
$C_6$ $(r_{I6} = 12,7,\quad r_{II6} = 28,6,\quad r_{III6} = 57,3)$

— pour $3,8 \leqslant r_e < 6,2$ ce polygone est un heptagone de sommets :

$C_1$ $(r_{I1} = 10,9,\quad r_{II1} = 0,5,\quad r_{III1} = 84,8)$
$C_2$ $(r_{I2} = 37,9,\quad r_{II2} = 0,2,\quad r_{III2} = 58,1)$
$C_3$ $(r_{I3} = 43,1,\quad r_{II3} = 1,4,\quad r_{III3} = 51,7)$
$C_4$ $(r_{I4} = 43,0,\quad r_{II4} = 10,5,\quad r_{III4} = 42,7)$
$C_5$ $(r_{I5} = 19,3,\quad r_{II5} = 30,9,\quad r_{III5} = 46,0)$
$C_6$ $(r_{I6} = 17,4,\quad r_{II6} = 31,4,\quad r_{III6} = 47,4)$
$C_7$ $(r_{I7} = 12,4,\quad r_{II7} = 14,2,\quad r_{III7} = 69,6)$

— pour $6,2 \leqslant r_e < 8,6$ ce polygone est un hexagone de sommets :

$C_1$ $(r_{I1} = 10,6,\quad r_{II1} = 1,1,\quad r_{III1} = 82,1)$
$C_2$ $(r_{I2} = 38,1,\quad r_{II2} = 0,2,\quad r_{III2} = 55,5)$
$C_3$ $(r_{I3} = 43,0,\quad r_{II3} = 1,5,\quad r_{III3} = 49,3)$
$C_4$ $(r_{I4} = 22,7,\quad r_{II4} = 22,0,\quad r_{III4} = 49,1)$
$C_5$ $(r_{I5} = 15,6,\quad r_{II5} = 23,5,\quad r_{III5} = 54,7)$
$C_6$ $(r_{I6} = 11,7,\quad r_{II6} = 12,2,\quad r_{III6} = 69,9)$

— pour $8,6 \leqslant r_e < 11,0$ ce polygone est un pentagone de sommets :

$C_1$ $(r_{I1} = 10,5,\quad r_{II1} = 1,2,\quad r_{III1} = 79,7)$
$C_2$ $(r_{I2} = 32,1,\quad r_{II2} = 0,2,\quad r_{III2} = 59,1)$
$C_3$ $(r_{I3} = 32,8,\quad r_{II3} = 1,6,\quad r_{III3} = 57,0)$
$C_4$ $(r_{I4} = 17,7,\quad r_{II4} = 19,4,\quad r_{III4} = 54,3)$
$C_5$ $(r_{I5} = 14,2,\quad r_{II5} = 20,2,\quad r_{III5} = 57,0)$

— pour $11,0 \leqslant r_e < 13,4$ ce polygone est un pentagone de sommets :

$C_1$ $(r_{I1} = 10,4,\quad r_{II1} = 1,3,\quad r_{III1} = 77,3)$
$C_2$ $(r_{I2} = 20,1,\quad r_{II2} = 1,0,\quad r_{III2} = 67,9)$
$C_3$ $(r_{I3} = 21,5,\quad r_{II3} = 6,7,\quad r_{III3} = 60,8)$
$C_4$ $(r_{I4} = 16,2,\quad r_{II4} = 14,1,\quad r_{III4} = 58,7)$
$C_5$ $(r_{I5} = 10,9,\quad r_{II5} = 7,5,\quad r_{III5} = 70,6)$

**3.** Composition selon la revendication 2 caractérisée en ce que le degré de polymérisation DP de la cellulose dans le ou les dérivés cellulosiques est au moins égal à 200 et au plus égal à 1 200 et en ce que les intervalles $r_{ei} \leqslant r_e < r_{ej}$ et les polygones de sommets $C_k$ correspondant à ces intervalles et situés dans les diagrammes ternaires des plans $r_{ei}$, sont donnés par les relations suivantes, les valeurs de $r_{ei}$, $r_e$, $r_{ej}$ et les valeurs des coordonnées des sommets $C_k$ étant exprimées en % :

— pour $0,0 \leqslant r_e < 1,4$ ce polygone est un hexagone de sommets :

$C_1$ $(r_{I1} = 11,5,\quad r_{II1} = 1,9,\quad r_{III1} = 86,6)$
$C_2$ $(r_{I2} = 35,5,\quad r_{II2} = 0,4,\quad r_{III2} = 64,1)$
$C_3$ $(r_{I3} = 37,3,\quad r_{II3} = 4,7,\quad r_{III3} = 58,0)$
$C_4$ $(r_{I4} = 24,9,\quad r_{II4} = 27,8,\quad r_{III4} = 47,3)$
$C_5$ $(r_{I5} = 18,7,\quad r_{II5} = 28,9,\quad r_{III5} = 52,4)$
$C_6$ $(r_{I6} = 12,5,\quad r_{II6} = 14,9,\quad r_{III6} = 72,6)$

— pour $1,4 \leqslant r_e < 3,8$ ce polygone est un hexagone de sommets :

$C_1$ $(r_{I1} = 11,0,\quad r_{II1} = 2,4,\quad r_{III1} = 85,2)$
$C_2$ $(r_{I2} = 35,8,\quad r_{II2} = 0,3,\quad r_{III2} = 62,5)$
$C_3$ $(r_{I3} = 37,8,\quad r_{II3} = 9,4,\quad r_{III3} = 51,4)$
$C_4$ $(r_{I4} = 27,5,\quad r_{II4} = 27,6,\quad r_{III4} = 43,5)$
$C_5$ $(r_{I5} = 18,3,\quad r_{II5} = 29,6,\quad r_{III5} = 50,7)$
$C_6$ $(r_{I6} = 12,5,\quad r_{II6} = 14,8,\quad r_{III6} = 71,3)$

— pour $3,8 \leqslant r_e < 6,2$ ce polygone est un hexagone de sommets :

$C_1$ $(r_{I1} = 11,8,\quad r_{II1} = 2,4,\quad r_{III1} = 82,0)$
$C_2$ $(r_{I2} = 34,0,\quad r_{II2} = 0,7,\quad r_{III2} = 61,5)$
$C_3$ $(r_{I3} = 36,6,\quad r_{II3} = 7,4,\quad r_{III3} = 52,2)$
$C_4$ $(r_{I4} = 23,9,\quad r_{II4} = 24,4,\quad r_{III4} = 47,9)$
$C_5$ $(r_{I5} = 20,7,\quad r_{II5} = 24,8,\quad r_{III5} = 50,7)$
$C_6$ $(r_{I6} = 13,2,\quad r_{II6} = 11,9,\quad r_{III6} = 71,1)$

— pour $6,2 \leqslant r_e < 8,6$ ce polygone est un pentagone de sommets :

$C_1$ $(r_{I1} = 13,1,\quad r_{II1} = 1,4,\quad r_{III1} = 79,3)$
$C_2$ $(r_{I2} = 29,1,\quad r_{II2} = 1,4,\quad r_{III2} = 63,3)$
$C_3$ $(r_{I3} = 31,1,\quad r_{II3} = 5,6,\quad r_{III3} = 57,1)$
$C_4$ $(r_{I4} = 22,7,\quad r_{II4} = 18,7,\quad r_{III4} = 52,4)$
$C_5$ $(r_{I5} = 13,3,\quad r_{II5} = 10,1,\quad r_{III5} = 70,4)$

— pour $8,6 \leqslant r_e < 11,0$ ce polygone est un pentagone de sommets :

$C_1$ $(r_{I1} = 12,9,\quad r_{II1} = 3,0,\quad r_{III1} = 75,5)$
$C_2$ $(r_{I2} = 24,1,\quad r_{II2} = 2,2,\quad r_{III2} = 65,1)$
$C_3$ $(r_{I3} = 24,8,\quad r_{II3} = 9,6,\quad r_{III3} = 57,0)$
$C_4$ $(r_{I4} = 20,1,\quad r_{II4} = 16,0,\quad r_{III4} = 55,3)$
$C_5$ $(r_{I5} = 13,6,\quad r_{II5} = 7,7,\quad r_{III5} = 70,1)$

— pour $11,0 \leqslant r_e < 13,4$ ce polygone est un pentagone de sommets :

$C_1$ $(r_{I1} = 13,6,\quad r_{II1} = 3,0,\quad r_{III1} = 72,4)$
$C_2$ $(r_{I2} = 19,9,\quad r_{II2} = 2,5,\quad r_{III2} = 66,6)$
$C_3$ $(r_{I3} = 21,0,\quad r_{II3} = 6,8,\quad r_{III3} = 61,2)$
$C_4$ $(r_{I4} = 20,1,\quad r_{II4} = 8,3,\quad r_{III4} = 60,6)$
$C_5$ $(r_{I5} = 14,1,\quad r_{II5} = 5,2,\quad r_{III5} = 69,7)$

**4.** Composition selon la revendication 3 caractérisée en ce que dans chaque intervalle $r_{ei} < r_e \leqslant r_{ej}$ pour chaque valeur de $r_{ej}$, c'est-à-dire lorsqu'on a la relation $r_I + r_{II} + r_{III} = 100 - r_{ej}$ (en pourcentage), on définit un polygone comportant un nombre de sommets qui peut varier d'un intervalle à l'autre, chacun de ces sommets étant référencé de façon générale $C_q$ (q étant une variable) et étant défini par ses coordonnées $r_{Iq}$, $r_{IIq}$, $r_{IIIq}$ dans le diagramme ternaire correspondant à la valeur $r_{ej}$, c'est-à-dire dans le diagramme ternaire du plan $r_{ej}$; dans chaque intervalle $r_{ei} < r_e \leqslant r_{ej}$, tout point du diagramme quaternaire de coordonnées $r_I$, $r_{II}$, $r_{III}$, $r_e$ correspondant à une composition conforme à l'invention se projette sur le plan $r_{ej}$, et perpendiculairement à ce plan, à l'intérieur du polygone de sommets $C_q$ ou sur les côtés de ce polygone; ces intervalles $r_{ei} < r_e \leqslant r_{ej}$ et ces polygones de sommets $C_q$ sont donnés par les relations suivantes, les valeurs de $r_{ei}$, $r_e$, $r_{ej}$ et les valeurs des coordonnées des sommets $C_q$ étant exprimées en %:

— pour $0,0 < r_e \leqslant 1,4$ ce polygone est un hexagone de sommets:

$C_1$ ($r_{I1} = 11,0$,  $r_{II1} = 2,4$,  $r_{III1} = 85,2$)
$C_2$ ($r_{I2} = 35,8$,  $r_{II2} = 0,3$,  $r_{III2} = 62,5$)
$C_3$ ($r_{I3} = 37,8$,  $r_{II3} = 9,4$,  $r_{III3} = 51,4$)
$C_4$ ($r_{I4} = 27,5$,  $r_{II4} = 27,6$,  $r_{III4} = 43,5$)
$C_5$ ($r_{I5} = 18,3$,  $r_{II5} = 29,6$,  $r_{III5} = 50,7$)
$C_6$ ($r_{I6} = 12,5$,  $r_{II6} = 14,8$,  $r_{III6} = 71,3$)

— pour $1,4 < r_e \leqslant 3,8$ ce polygone est un hexagone de sommets:

$C_1$ ($r_{I1} = 11,8$,  $r_{II1} = 2,4$,  $r_{III1} = 82,0$)
$C_2$ ($r_{I2} = 34,0$,  $r_{II2} = 0,7$,  $r_{III2} = 61,5$)
$C_3$ ($r_{I3} = 36,6$,  $r_{II3} = 7,4$,  $r_{III3} = 52,2$)
$C_4$ ($r_{I4} = 23,9$,  $r_{II4} = 24,4$,  $r_{III4} = 47,9$)
$C_5$ ($r_{I5} = 20,7$,  $r_{II5} = 24,8$,  $r_{III5} = 50,7$)
$C_6$ ($r_{I6} = 13,2$,  $r_{II6} = 11,9$,  $r_{III6} = 71,1$)

— pour $3,8 < r_e \leqslant 6,2$ ce polygone est un pentagone de sommets:

$C_1$ ($r_{I1} = 13,1$,  $r_{II1} = 1,4$,  $r_{III1} = 79,3$)
$C_2$ ($r_{I2} = 29,1$,  $r_{II2} = 1,4$,  $r_{III2} = 63,3$)
$C_3$ ($r_{I3} = 31,1$,  $r_{II3} = 5,6$,  $r_{III3} = 57,1$)
$C_4$ ($r_{I4} = 22,7$,  $r_{II4} = 18,7$,  $r_{III4} = 52,4$)
$C_5$ ($r_{I5} = 13,3$,  $r_{II5} = 10,1$,  $r_{III5} = 70,4$)

— pour $6,2 < r_e \leqslant 8,6$ ce polygone est un pentagone de sommets:

$C_1$ ($r_{I1} = 12,9$,  $r_{II1} = 3,0$,  $r_{III1} = 75,5$)
$C_2$ ($r_{I2} = 24,1$,  $r_{II2} = 2,2$,  $r_{III2} = 65,1$)
$C_3$ ($r_{I3} = 24,8$,  $r_{II3} = 9,6$,  $r_{III3} = 57,0$)
$C_4$ ($r_{I4} = 20,1$,  $r_{II4} = 16,0$,  $r_{III4} = 55,3$)
$C_5$ ($r_{I5} = 13,6$,  $r_{II5} = 7,7$,  $r_{III5} = 70,1$)

— pour $8,6 < r_e \leqslant 11,0$ ce polygone est un pentagone de sommets:

$C_1$ ($r_{I1} = 13,6$,  $r_{II1} = 3,0$,  $r_{III1} = 72,4$)
$C_2$ ($r_{I2} = 19,9$,  $r_{II2} = 2,5$,  $r_{III2} = 66,6$)
$C_3$ ($r_{I3} = 21,0$,  $r_{II3} = 6,8$,  $r_{III3} = 61,2$)
$C_4$ ($r_{I4} = 20,1$,  $r_{II4} = 8,3$,  $r_{III4} = 60,6$)
$C_5$ ($r_{I5} = 14,1$,  $r_{II5} = 5,2$,  $r_{III5} = 69,7$)

5. Procédé pour obtenir une composition conforme à l'une quelconque des revendications 1 à 4 caractérisé par les points suivants:

a) on réalise un mélange à partir d'au moins trois matières:

(I) une matière cellulosique;

(II) une matière constituée par au moins un composé choisi dans le groupe formé par les acides organiques monocarboxyliques, les anhydrides et les halogénures de ces acides, cette matière étant constituée au moins en partie par l'acide formique et/ou par un anhydride de l'acide formique et d'un autre acide organique;

(III) une matière constituée soit par l'anhydride phosphorique, soit par au moins un acide phosphorique, soit par l'anhydride phosphorique et par au moins un acide phosphorique;

b) la quantité d'eau présente pour réaliser le mélange est nulle ou telle que le rapport

$$R_{er} = \frac{P_e - P_{er}}{P_I + P_{II} + P_{III} + P_e - P_{er}}$$

soit inférieur à 15,0% et supérieur à −7,5%, $P_e$ étant le poids d'eau éventuellement présente, $P_{er}$ étant le poids d'eau susceptible de réagir éventuellement avec la matière (II) et/ou la matière (III), $P_I$ étant le poids de la cellulose dans la matière (I), $P_{II}$ étant le poids de la matière (II) et $P_{III}$ étant le poids de la matière (III);

c) les rapports $R_I$, $R_{II}$, $R_{III}$ étant définis par:

$$R_I = \frac{P_I}{P_I + P_{II} + P_{III} + P_e - P_{er}} \, ,$$

$$R_{II} = \frac{P_{II}}{P_I + P_{II} + P_{III} + P_e - P_{er}} \, ,$$

$$R_{III} = \frac{P_{III}}{P_I + P_{II} + P_{III} + P_e - P_{er}} \, ,$$

les rapports $R_I$, $R_{II}$, $R_{III}$, $R_{er}$ dont la somme $R_I + R_{II} + R_{III} + R_{er}$ est par définition égale à 100% vérifient les relations suivantes dont les valeurs sont exprimées en %:

— si $R_{er}$ vérifie la relation:
  $12,5 \leqslant R_{er} < 15,0$
  on a les relations:
  $10,0 \leqslant R_I \leqslant 14,5$; $2,0 \leqslant R_{II} \leqslant 10,0$
  avec la relation: $R_{II} \leqslant 0,89 R_I - 2,89$;
— si $R_{er}$ vérifie la relation:
  $10,0 \leqslant R_{er} < 12,5$
  on a les relations:
  $10,0 \leqslant R_I \leqslant 19,5$; $2,0 \leqslant R_{II} \leqslant 17,0$
  avec la relation: $R_{II} \leqslant 1,78 R_I - 8,78$
  si $R_I$ vérifie la relation: $R_I < 14,5$,
  ou avec la relation:
  $R_{II} \leqslant -1,40 R_I + 37,30$
  si $R_I$ vérifie la relation: $R_I \geqslant 14,5$;
— si $R_{er}$ vérifie la relation:
  $7,5 \leqslant R_{er} < 10,0$
  on a les relations:
  $10,0 \leqslant R_I \leqslant 31,0$; $2,0 \leqslant R_{II} \leqslant 23,0$
  avec la relation: $R_{II} \leqslant 4,40 R_I - 32,00$
  si $R_I$ vérifie la relation $R_I \leqslant 12,5$,
  ou avec la relation:
  $R_{II} \leqslant -1,19 R_I + 41,50$
  si $R_I$ vérifie la relation: $R_I \geqslant 15,5$;

— si $R_{er}$ vérifie la relation:

    $5,0 \leqslant R_{er} < 7,5$

on a les relations:

    $10,0 \leqslant R_I \leqslant 37,0$; $2,0 \leqslant R_{II} \leqslant 27,5$

avec la relation: $R_{II} \leqslant 4,17 R_I - 26,67$

    si $R_I$ vérifie la relation: $R_I \leqslant 13,0$,

ou avec la relation:

    $R_{II} \leqslant -1,14 R_I + 49,14$

    si $R_I$ vérifie la relation: $R_I \geqslant 19,0$;

— si $R_{er}$ vérifie la relation:

    $2,5 \leqslant R_{er} < 5,0$

on a les relations:

    $10,0 \leqslant R_I \leqslant 37,0$; $2,0 \leqslant R_{II} \leqslant 36,5$

avec la relation: $R_{II} \leqslant 4,63 R_I - 28,25$

    si $R_I$ vérifie la relation: $R_I \leqslant 14,0$,

ou avec la relation:

    $R_{II} \leqslant -1,23 R_I + 55,60$

    si $R_I$ vérifie la relation: $R_I \geqslant 15,5$;

— si $R_{er}$ vérifie la relation:

    $-2,5 < R_{er} < 2,5$

on a les relations:

    $10,0 \leqslant R_I \leqslant 38,0$; $2,0 \leqslant R_{II} \leqslant 40,0$

avec la relation: $R_{II} \leqslant 2,80 R_I + 5,00$

    si $R_I$ vérifie la relation: $R_I \leqslant 12,5$,

ou avec la relation:

    $R_{II} \leqslant -1,14 R_I + 62,14$

    si $R_I$ vérifie la relation: $R_I \geqslant 19,5$;

— si $R_{er}$ vérifie la relation:

    $-5,0 < R_{er} \leqslant -2,5$

on a les relations:

    $10,0 \leqslant R_I \leqslant 35,0$; $2,0 \leqslant R_{II} \leqslant 45,0$

avec la relation: $R_{II} \leqslant -1,30 R_I + 64,50$;

— si $R_{er}$ vérifie la relation:

    $-7,5 < R_{er} \leqslant -5,0$

on a les relations:

    $10,0 \leqslant R_I \leqslant 32,0$; $2,0 \leqslant R_{II} \leqslant 36,0$

avec la relation: $R_{II} \leqslant 4,00 R_I - 22,00$

    si $R_I$ vérifie la relation: $R_I \leqslant 14,5$;

     d) le degré de polymérisation DP de la cellulose de la matière (I) est supérieur à 150 et inférieur à 1500;

     e) on laisse l'estérification de la cellulose s'effectuer dans ce mélange pendant un temps suffisant pour obtenir la solution anisotrope.

     6. Procédé selon la revendication 5 caractérisé en ce que la cellulose de la matière cellulosique (I) a un degré de polymérisation DP au moins égal à 200 et au plus égal à 1200 et en ce que l'on a les relations suivantes entre $R_I$, $R_{II}$, $R_{III}$, $R_{er}$ dont les valeurs sont exprimées en %:

— si $R_{er}$ vérifie la relation:

    $10,0 \leqslant R_{er} < 12,5$

on a les relations:

    $13,0 \leqslant R_I \leqslant 19,0$; $4,0 \leqslant R_{II} \leqslant 11,0$

avec la relation: $R_{II} \leqslant 0,73 R_I - 2,45$

    si $R_I$ vérifie la relation: $R_I < 18,5$,

ou avec la relation:

    $R_{II} \leqslant -2,00 R_I + 48,00$

    si $R_I$ vérifie la relation: $R_I \geqslant 18,5$;

— si $R_{er}$ vérifie la relation:

    $7,5 \leqslant R_{er} < 10,0$

on a les relations:

    $12,25 \leqslant R_I \leqslant 23,0$; $4,0 \leqslant R_{II} \leqslant 19,5$

avec la relation: $R_{II} \leqslant 1,65 R_I - 10,24$

    si $R_I$ vérifie la relation $R_I < 18,0$,

ou avec la relation:

    $R_{II} \leqslant -1,40 R_I + 44,70$

    si $R_I$ vérifie la relation: $R_I \geqslant 18,0$;

— si $R_{er}$ vérifie la relation:

    $5,0 \leqslant R_{er} < 7,5$

on a les relations:

    $11,5 \leqslant R_I \leqslant 27,5$; $4,0 \leqslant R_{II} \leqslant 24,0$

avec la relation: $R_{II} \leqslant 1,38 R_I - 2,81$

    si $R_I$ vérifie la relation: $R_I < 19,5$,

ou avec la relation:

    $R_{II} \leqslant -1,56 R_I + 54,47$

    si $R_I$ vérifie la relation: $R_I \geqslant 19,5$;

— si $R_{er}$ vérifie la relation:

    $2,5 \leqslant R_{er} < 5,0$

on a les relations:

    $10,75 \leqslant R_I \leqslant 32,0$; $4,0 \leqslant R_{II} \leqslant 30,0$

avec la relation: $R_{II} \leqslant 2,07 R_I - 5,80$

    si $R_I$ vérifie la relation: $R_I \leqslant 17,5$,

ou avec la relation:

    $R_{II} \leqslant -1,30 R_I + 56,74$

    si $R_I$ vérifie la relation: $R_I \geqslant 20,5$;

— si $R_{er}$ vérifie la relation:

    $-2,5 < R_{er} < 2,5$

on a les relations:

    $10,0 \leqslant R_I \leqslant 33,5$; $4,0 \leqslant R_{II} \leqslant 35,0$

avec la relation: $R_{II} \leqslant 3,20 R_I - 13,00$

    si $R_I$ vérifie la relation: $R_I \leqslant 15,0$,

ou avec la relation:

    $R_{II} \leqslant -1,76 R_I + 75,52$

    si $R_I$ vérifie la relation: $R_I \geqslant 23,0$;

— si $R_{er}$ vérifie la relation:

    $-5,0 < R_{er} \leqslant -2,5$

on a les relations:

    $10,0 \leqslant R_I \leqslant 33,5$; $4,0 \leqslant R_{II} \leqslant 35,0$

avec la relation: $R_{II} \leqslant 3,20 R_I - 13,00$

    si $R_I$ vérifie la relation: $R_I \leqslant 15,0$,

ou avec la relation:

    $R_{II} \leqslant -1,85 R_I + 72,85$

    si $R_I$ vérifie la relation: $R_I \geqslant 20,5$.

     7. Procédé selon la revendication 6 caractérisé en ce que l'on a les relations suivantes entre $R_I$, $R_{II}$, $R_{III}$, $R_{er}$ dont les valeurs sont exprimées en %:

— si $R_{er}$ vérifie la relation:

    $7,5 < R_{er} \leqslant 10,0$

on a les relations:

    $13,0 \leqslant R_I \leqslant 19,0$; $4,0 \leqslant R_{II} \leqslant 11,0$

avec la relation: $R_{II} \leqslant 0,73 R_I - 2,45$

    si $R_I$ vérifie la relation: $R_I < 18,5$,

ou avec la relation:

    $R_{II} \leqslant -2,00 R_I + 48,00$

    si $R_I$ vérifie la relation: $R_I \geqslant 18,5$;

— si $R_{er}$ vérifie la relation:

    $5,0 < R_{er} \leqslant 7,5$

on a les relations:

    $12,25 \leqslant R_I \leqslant 23,0$; $4,0 \leqslant R_{II} \leqslant 19,5$

avec la relation: $R_{II} \leqslant 1,65 R_I - 10,24$

    si $R_I$ vérifie la relation $R_I < 18,0$,

ou avec la relation:

    $R_{II} \leqslant -1,40 R_I + 44,70$

    si $R_I$ vérifie la relation: $R_I \geqslant 18,0$;

— si $R_{er}$ vérifie la relation:

    $2,5 < R_{er} \leqslant 5,0$

on a les relations:

    $11,5 \leqslant R_I \leqslant 27,5$; $4,0 \leqslant R_{II} \leqslant 24,0$

avec la relation: $R_{II} \leqslant 1,38 R_I - 2,81$

si $R_l$ vérifie la relation: $R_l < 19,5$,
ou avec la relation:
$R_{ll} \leqslant -1,56 \, R_l + 54,47$
si $R_l$ vérifie la relation: $R_l \geqslant 19,5$;
— si $R_{er}$ vérifie la relation:
$0,0 < R_{er} \leqslant 2,5$
on a les relations:
$10,75 \leqslant R_l \leqslant 32,0$; $4,0 \leqslant R_{ll} \leqslant 30,0$
avec la relation: $R_{ll} \leqslant 2,07 \, R_l - 5,80$
si $R_l$ vérifie la relation: $R_l \leqslant 17,5$,
ou avec la relation:
$R_{ll} \leqslant -1,30 \, R_l + 56,74$
si $R_l$ vérifie la relation: $R_l \geqslant 20,5$;
— si $R_{er}$ vérifie la relation:
$-2,5 \leqslant R_{er} \leqslant 0,0$
on a les relations:
$10,0 \leqslant R_l \leqslant 33,5$; $4,0 \leqslant R_{ll} \leqslant 35,0$
avec la relation: $R_{ll} \leqslant 3,20 \, R_l - 13,00$
si $R_l$ vérifie la relation: $R_l \leqslant 15,0$,
ou avec la relation:
$R_{ll} \leqslant -1,85 \, R_l + 72,85$
si $R_l$ vérifie la relation: $R_l \geqslant 20,5$.

8. Composition obtenue selon le procédé conforme à l'une quelconque des revendications 5 à 7.

9. Procédé pour obtenir un article à base d'au moins un dérivé cellulosique caractérisé en ce qu'on transforme la composition conforme à l'une quelconque des revendications 1 à 4 et 8 en un article et en ce qu'on élimine de cet article au moins une partie des produits autres que le ou les dérivés cellulosiques.

10. Procédé selon la revendication 9, caractérisé en ce qu'on utilise un bain de coagulation lors de la transformation de la composition.

11. Procédé selon la revendication 10, caractérisé en ce que le bain de coagulation est à base d'acétone.

12. Procédé selon l'une quelconque des revendications 10 ou 11, caractérisé en ce que la température du bain est au moins égal à –20°C et au plus égal à 10°C.

13. Procédé selon l'une quelconque des revendications 9 à 12 caractérisé en ce qu'on utilise un filage avec espace de fluide non coagulant (dry jet-wet).

14. Procédé pour obtenir un article à base de cellulose régénérée caractérisé en ce qu'on régénère au moins en partie la cellulose de l'article obtenu selon le procédé conforme à l'une quelconque des revendications 9 à 13.

15. Procédé selon la revendication 14, caractérisé en ce que la régénération est effectuée avec une solution aqueuse alcaline.

16. Article obtenu selon le procédé conforme à l'une quelconque des revendications 9 à 15.

17. Article selon la revendication 16 caractérisé en ce qu'il est une fibre ou un film.

18. Fibre constituée au moins en partie par un filament à base d'au moins un dérivé cellulosique comportant des groupes ester de la cellulose, au moins une partie de ces groupes ester étant des groupes formiate, caractérisé en ce qu'elle a les propriétés suivantes:

a) le degré de substitution DS de la cellulose en groupes formiate est au moins égale à 2% et le degré de polymérisation DP de la cellulose est supérieur à 150 et inférieur à 1500;

b) la ténacité T et le module initial $M_i$ de la fibre vérifient les relations suivantes, T et $M_i$ étant exprimés en cN/tex: $T > 20$; $M_i > 1000$;

c) ce filament présente une morphologie telle qu'il est constitué au moins en partie par des couches emboitées les unes dans les autres, ces couches entourant l'axe du filament et telle que dans chaque couche la direction optique et la direction de cristallisation varient de façon pseudopériodique le long de l'axe du filament.

19. Fibre selon la revendication 18, caractérisée en ce qu'elle est dépourvue d'étirage autre que celui résultant de sa mise en forme.

20. Fibre selon l'une quelconque des revendications 18 ou 19, caractérisée en ce que sa biréfringence $\Delta n$ est supérieure à 0,03.

21. Fibre selon l'une quelconque des revendications 18 à 20 caractérisée en ce que le degré de polymérisation DP de la cellulose du ou des dérivés cellulosiques est au moins égal à 200 et au plus égal à 1200.

22. Fibre constituée au moins en partie par un filament à base de cellulose et/ou d'au moins un dérivé cellulosique comportant des groupes ester de la cellulose, au moins une partie de ces groupes ester étant des groupes formiate, caractérisée en ce qu'elle a les propriétés suivantes:

a) le degré de substitution DS de la cellulose en groupes formiate est nul ou inférieur à 2% et le degré de polymérisation DP de la cellulose est supérieur à 150 et inférieur à 1500;

b) le degré de polymérisation DP de la cellulose, la ténacité T et le module initial $M_i$ de la fibre vérifient les relations suivantes, T et $M_i$ étant exprimés en cN/tex:

pour DP $< 200$,      on a $T > 20$ et $M_i > 1800$;
pour $200 \leqslant$ DP $< 300$,    on a $T > 30$ et $M_i > 2000$;
pour $300 \leqslant$ DP $< 400$,    on a $T > 40$ et $M_i > 2400$;
pour $400 \leqslant$ DP $< 1500$,   on a $T > 60$ et $M_i > 2600$

c) ce filament présente une morphologie telle qu'il est constitué au moins en partie par des couches emboîtées les unes dans les autres, ces couches entourant l'axe de filament, et telle que dans chaque couche la direction optique et la direction de cristallisation varient de façon pseudopériodique le long de l'axe du filament.

23. Fibre selon la revendication 22, caractérisée en ce que DP, T et $M_i$ vérifient les relations suivantes, T et $M_i$ étant exprimés en cN/tex:
pour $150 < DP < 250$,

on a $T \geqslant \dfrac{1}{3} DP - 26$ et $M_i \geqslant 2300$;

pour $250 \leqslant DP < 1500$,

on a $T \geqslant -\dfrac{18675}{DP} + 132$ et $M_i \geqslant -\dfrac{502250}{DP} + 4309$.

24. Fibre selon l'une quelconque des revendications 22 ou 23, caractérisée en ce que son module sonique $M_s$ vérifie la relation suivante:
$M_s > 3000$ cN/tex.

25. Fibre selon l'une quelconque des revendications 22 à 24, caractérisée en ce que son indice d'orientation I.O. vérifie la relation suivante:
I.O. > 95,5%.

26. Fibre selon l'une quelconque des revendications 22 à 25, caractérisée en ce qu'elle est dépourvue d'étirage autre que celui résultant de sa mise en forme.

27. Fibre selon l'une quelconque des revendications 22 à 26, caractérisée en ce que le degré de polymérisation DP de la cellulose qu'elle contient est au moins égal à 200 et au plus égal à 1200.

## Patentansprüche

1. Zusammensetzung auf der Basis mindestens eines Cellulosederivates, welches Celluloseestergruppen enthält, wobei zumindest ein Teil dieser Estergruppen Formiatgruppen sind, dadurch gekennzeichnet, dass sie eine anisotrope Lösung bildet, aus der Fasern oder Filme hergestellt werden können und die folgendes enthält:

a) das Cellulosederivat oder die Cellulosederivate, wobei die Konzentration des Derivats oder die Gesamtheit der Derivate in der Lösung zumindest gleich 10,2 Gew.-% beträgt und der Polymerisationsgrad DP der Cellulose im Derivat oder in den Derivaten grösser als 150 und kleiner als 1500 ist;

b) Ameisensäure oder zumindest zwei Verbindungen, gewählt aus der Gruppe, die durch die organischen Monocarboxylsäuren, deren Anhydride und Halogenide gebildet ist, wobei eine der Verbindungen Ameisensäure ist;

c) zumindest eine Phosphorsäure.

2. Zusammensetzung nach Anspruch 1, gekennzeichnet durch die folgenden Punkte:

— die Gewichtsprozentsätze $r_I$, $r_{II}$, $r_{III}$, $r_e$ sind durch die folgenden Beziehungen definiert:

$r_I$: Prozentsatz des oder der Cellulosederivate;

$r_{II}$: Prozentsatz der Phase, die «organische Säure» genannt wird; diese Phase enthält alle organischen Säuren, Anhydride organischer Säuren und Halogenide organischer Säuren, die gegebenenfalls in der Zusammensetzung enthalten sind;

$r_{III}$: Prozentsatz der Phase, die «Phosphorsäure» genannt wird; diese Phase enthält die Phosphorsäuren und Phosphorsäureanhydride, die gegebenenfalls in der Zusammensetzung vorhanden sind;

$r_e$: Prozent des gegebenenfalls in der Zusammensetzung enthaltenen Wassers; diese Prozentsätze sind auf das Gesamtgewicht bezogen = Gewicht des Cellulosederivates oder der Cellulosederivate + Gewicht der «organischen Säure» genannten Phase + Gewicht der «Phosphorsäure» genannten Phase + Gewicht des gegebenenfalls vorhandenen Wassers, diese Prozentsätze $r_I$, $r_{II}$, $r_{III}$, $r_e$ erlauben es, ein quaternäres Diagramm mit der Bedingung:
$r_I + r_{II} + r_{III} + r_e = 100$ (in Prozent) zu definieren;

— die Werte von $r_e$ sind in Intervalle unterteilt; in jedem Intervall gilt: $r_{ei} \leqslant r_e < r_{ej}$; $r_{ei}$, $r_{ej}$ sind feste Werte; für jeden Wert $r_{ei}$, d.h. solange die Bedingung: $r_I + r_{II} + r_{III} = 100 - r_{ei}$ (in Prozent) gilt, wird ein Polygon definiert, welches eine Anzahl von Ecken aufweist, die von einem Intervall zum nächsten veränderlich sein kann, wobei jedes Eck allgemein mit $C_k$ (k ist eine Variable) bezeichnet wird und durch seine Koordinaten $r_{Ik}$, $r_{IIk}$, $r_{IIIk}$ im ternären Diagramm, welches dem Wert $r_{ei}$ entspricht, definiert wird, d.h. im ternären Diagramm der Ebene $r_{ei}$;

— in jedem Intervall $r_{ei} \leqslant r_e < r_{ej}$ entspricht jeder Punkt des quaternären Diagramms mit den Koordinaten $r_I$, $r_{II}$, $r_{III}$, $r_e$ einer Zusammensetzung, die dem Anspruch 1 entspricht, die rechtwinkelig auf die Ebene $r_{ei}$ projiziert ist und im Inneren des durch die Ecke $C_k$ gebildeten Polygons oder auf die Seiten dieses Polygons;

— die Intervalle $r_{ei} \leqslant r_e < r_{ej}$ und die durch die Ecken $C_k$ gebildeten Polygone sind durch die folgenden Bedingungen gegeben, wobei die Werte $r_{ei}$, $r_e$, $r_{ej}$ und die Werte der Koordinaten der Ecken $C_k$ in Prozenten ausgedrückt sind:

— für $0,0 \leqslant r_e < 1,4$ ist das Polygon ein Fünfeck mit den Ecken:

$C_1$ ($r_{I1} = 10,8$, $r_{II1} = 0,4$, $r_{III1} = 88,8$)
$C_2$ ($r_{I2} = 38,9$, $r_{II2} = 0,2$, $r_{III2} = 60,9$)
$C_3$ ($r_{I3} = 43,6$, $r_{II3} = 9,8$, $r_{III3} = 46,6$)
$C_4$ ($r_{I4} = 19,0$, $r_{II4} = 38,5$, $r_{III4} = 42,5$)
$C_5$ ($r_{I5} = 12,8$, $r_{II5} = 40,3$, $r_{III5} = 46,9$)

— für $1,4 \leqslant r_e < 3,8$ ist das Polygon ein Sechseck mit den Ecken:

$C_1$ ($r_{I1} = 10,8$, $r_{II1} = 0,5$, $r_{III1} = 87,3$)
$C_2$ ($r_{I2} = 38,9$, $r_{II2} = 0,1$, $r_{III2} = 59,6$)
$C_3$ ($r_{I3} = 43,6$, $r_{II3} = 9,8$, $r_{III3} = 45,2$)
$C_4$ ($r_{I4} = 23,6$, $r_{II4} = 33,3$, $r_{III4} = 41,7$)
$C_5$ ($r_{I5} = 15,2$, $r_{II5} = 35,5$, $r_{III5} = 47,9$)
$C_6$ ($r_{I6} = 12,7$, $r_{II6} = 28,6$, $r_{III6} = 57,3$)

— für $3,8 \leqslant r_e < 6,2$ ist das Polygon ein Siebeneck mit den Ecken:

$C_1$ ($r_{I1} = 10,9$, $r_{II1} = 0,5$, $r_{III1} = 84,8$)
$C_2$ ($r_{I2} = 37,9$, $r_{II2} = 0,2$, $r_{III2} = 58,1$)
$C_3$ ($r_{I3} = 43,1$, $r_{II3} = 1,4$, $r_{III3} = 51,7$)
$C_4$ ($r_{I4} = 43,0$, $r_{II4} = 10,5$, $r_{III4} = 42,7$)
$C_5$ ($r_{I5} = 19,3$, $r_{II5} = 30,9$, $r_{III5} = 46,0$)
$C_6$ ($r_{I6} = 17,4$, $r_{II6} = 31,4$, $r_{III6} = 47,4$)
$C_7$ ($r_{I7} = 12,4$, $r_{II7} = 14,2$, $r_{III7} = 69,6$)

— für $6,2 \leqslant r_e < 8,6$ ist das Polygone ein Sechseck mit den Ecken:

$C_1$ ($r_{I1} = 10,6$, $r_{II1} = 1,1$, $r_{III1} = 82,1$)
$C_2$ ($r_{I2} = 38,1$, $r_{II2} = 0,2$, $r_{III2} = 55,5$)
$C_3$ ($r_{I3} = 43,0$, $r_{II3} = 1,5$, $r_{III3} = 49,3$)
$C_4$ ($r_{I4} = 22,7$, $r_{II4} = 22,0$, $r_{III4} = 49,1$)
$C_5$ ($r_{I5} = 15,6$, $r_{II5} = 23,5$, $r_{III5} = 54,7$)
$C_6$ ($r_{I6} = 11,7$, $r_{II6} = 12,2$, $r_{III6} = 69,9$)

— für $8,6 \leqslant r_e < 11,0$ ist das Polygon ein Fünfeck mit den Ecken:

$C_1$ ($r_{I1} = 10,5$, $r_{II1} = 1,2$, $r_{III1} = 79,7$)
$C_2$ ($r_{I2} = 32,1$, $r_{II2} = 0,2$, $r_{III2} = 59,1$)
$C_3$ ($r_{I3} = 32,8$, $r_{II3} = 1,6$, $r_{III3} = 57,0$)
$C_4$ ($r_{I4} = 17,7$, $r_{II4} = 19,4$, $r_{III4} = 54,3$)
$C_5$ ($r_{I5} = 14,2$, $r_{II5} = 20,2$, $r_{III5} = 57,0$)

— für $11,0 \leqslant r_e < 13,4$ ist das Polygon ein Fünfeck mit den Ecken:

$C_1$ ($r_{I1} = 10,4$, $r_{II1} = 1,3$, $r_{III1} = 77,3$)
$C_2$ ($r_{I2} = 20,1$, $r_{II2} = 1,0$, $r_{III2} = 67,9$)

$C_3$ ($r_{I3} = 21,5$,   $r_{II3} = 6,7$,   $r_{III3} = 60,8$)
$C_4$ ($r_{I4} = 16,2$,   $r_{II4} = 14,1$,   $r_{III4} = 58,7$)
$C_5$ ($r_{I5} = 10,9$,   $r_{II5} = 7,5$,   $r_{III5} = 70,6$)

3. Zusammensetzung nach Anspruch 2, dadurch gekennzeichnet, dass der Polymerisationsgrad DP der Cellulose in ihrem Derivat oder ihren Derivaten zumindest gleich 200 und höchstens gleich 1200 ist und dass die Intervalle: $r_{ei} \leqslant r_e < r_{ej}$ und die durch die Ecken $C_k$ gebildeten Polygone, die diesen Intervallen entsprechen und die in den ternären Diagrammen der Ebenen $r_{ei}$ liegen, durch die folgenden Bedingungen gegeben sind, wobei die Werte $r_{ei}$, $r_e$, $r_{ej}$ und die Werte der Koordinaten der Ecken $C_k$ in Prozenten ausgedrückt sind:

— für $0,0 \leqslant r_e < 1,4$ ist das Polygon ein Sechseck mit den Ecken:

$C_1$ ($r_{I1} = 11,5$,   $r_{II1} = 1,9$,   $r_{III1} = 86,6$)
$C_2$ ($r_{I2} = 35,5$,   $r_{II2} = 0,4$,   $r_{III2} = 64,1$)
$C_3$ ($r_{I3} = 37,3$,   $r_{II3} = 4,7$,   $r_{III3} = 58,0$)
$C_4$ ($r_{I4} = 24,9$,   $r_{II4} = 27,8$,   $r_{III4} = 47,3$)
$C_5$ ($r_{I5} = 18,7$,   $r_{II5} = 28,9$,   $r_{III5} = 52,4$)
$C_6$ ($r_{I6} = 12,5$,   $r_{II6} = 14,9$,   $r_{III6} = 72,6$)

— für $1,4 \leqslant r_e < 3,8$ ist das Polygon ein Sechseck mit den Ecken:

$C_1$ ($r_{I1} = 11,0$,   $r_{II1} = 2,4$,   $r_{III1} = 85,2$)
$C_2$ ($r_{I2} = 35,8$,   $r_{II2} = 0,3$,   $r_{III2} = 62,5$)
$C_3$ ($r_{I3} = 37,8$,   $r_{II3} = 9,4$,   $r_{III3} = 51,4$)
$C_4$ ($r_{I4} = 27,5$,   $r_{II4} = 27,6$,   $r_{III4} = 43,5$)
$C_5$ ($r_{I5} = 18,3$,   $r_{II5} = 29,6$,   $r_{III5} = 50,7$)
$C_6$ ($r_{I6} = 12,5$,   $r_{II6} = 14,8$,   $r_{III6} = 71,3$)

— für $3,8 \leqslant r_e < 6,2$ ist das Polygon ein Sechseck mit den Ecken:

$C_1$ ($r_{I1} = 11,8$,   $r_{II1} = 2,4$,   $r_{III1} = 82,0$)
$C_2$ ($r_{I2} = 34,0$,   $r_{II2} = 0,7$,   $r_{III2} = 61,5$)
$C_3$ ($r_{I3} = 36,6$,   $r_{II3} = 7,4$,   $r_{III3} = 52,2$)
$C_4$ ($r_{I4} = 23,9$,   $r_{II4} = 24,4$,   $r_{III4} = 47,9$)
$C_5$ ($r_{I5} = 20,7$,   $r_{II5} = 24,8$,   $r_{III5} = 50,7$)
$C_6$ ($r_{I6} = 13,2$,   $r_{II6} = 11,9$,   $r_{III6} = 71,1$)

— für $6,2 \leqslant r_e < 8,6$ ist das Polygon ein Fünfeck mit den Ecken:

$C_1$ ($r_{I1} = 13,1$,   $r_{II1} = 1,4$,   $r_{III1} = 79,3$)
$C_2$ ($r_{I2} = 29,1$,   $r_{II2} = 1,4$,   $r_{III2} = 63,3$)
$C_3$ ($r_{I3} = 31,1$,   $r_{II3} = 5,6$,   $r_{III3} = 57,1$)
$C_4$ ($r_{I4} = 22,7$,   $r_{II4} = 18,7$,   $r_{III4} = 52,4$)
$C_5$ ($r_{I5} = 13,3$,   $r_{II5} = 10,1$,   $r_{III5} = 70,4$)

— für $8,6 \leqslant r_e < 11,0$ ist das Polygon ein Fünfeck mit den Ecken:

$C_1$ ($r_{I1} = 12,9$,   $r_{II1} = 3,0$,   $r_{III1} = 75,5$)
$C_2$ ($r_{I2} = 24,1$,   $r_{II2} = 2,2$,   $r_{III2} = 65,1$)
$C_3$ ($r_{I3} = 24,8$,   $r_{II3} = 9,6$,   $r_{III3} = 57,0$)
$C_4$ ($r_{I4} = 20,1$,   $r_{II4} = 16,0$,   $r_{III4} = 55,3$)
$C_5$ ($r_{I5} = 13,6$,   $r_{II5} = 7,7$,   $r_{III5} = 70,1$)

— für $11,0 \leqslant r_e < 13,4$ ist das Polygon ein Fünfeck mit den Ecken:

$C_1$ ($r_{I1} = 13,6$,   $r_{II1} = 3,0$,   $r_{III1} = 72,4$)
$C_2$ ($r_{I2} = 19,9$,   $r_{II2} = 2,5$,   $r_{III2} = 66,6$)
$C_3$ ($r_{I3} = 21,0$,   $r_{II3} = 6,8$,   $r_{III3} = 61,2$)
$C_4$ ($r_{I4} = 20,1$,   $r_{II4} = 8,3$,   $r_{III4} = 60,6$)
$C_5$ ($r_{I5} = 14,1$,   $r_{II5} = 5,2$,   $r_{III5} = 69,7$)

4. Zusammensetzung nach Anspruch 3, dadurch gekennzeichnet, dass in jedem Intervall $r_{ei} < r_e \leqslant r_{ej}$ für jeden Wert von $r_{ej}$, das heisst, solange die Bedingung: $r_I + r_{II} + r_{III} = 100 - r_{ej}$ (in Prozenten) erfüllt ist, man ein Polygon mit einer von Intervall zu Intervall gegebenenfalls veränderlichen Anzahl von Ecken definiert, wobei die Ecken allgemein als $C_q$ (q ist eine Variable) bezeichnet werden, die durch ihre Koordinaten $r_{Iq}$, $r_{IIq}$, $r_{IIIq}$ im ternären Diagramm, das dem Wert $r_{ej}$ entspricht, das heisst im ternären Diagramm der Ebene $r_{ej}$ festgelegt werden; in jedem Intervall $r_{ei} < r_e \leqslant r_{ej}$ projizieren sich alle Punkte des quaternären Diagrammes mit den Koordinaten $r_I$, $r_{II}$, $r_{III}$, $r_e$, die einer erfindungsgemässen Zusammensetzung entsprechen, lotrecht auf die Ebene $r_{ej}$ ins Innere des Polygons mit den Ecken $C_q$ oder auf dessen Seiten; diese Intervalle $r_{ei} < r_e \leqslant r_{ej}$ und die durch die Ecken $C_q$ gebildeten Polygone erfüllen die folgenden Bedingungen, wobei die Werte $r_{ei}$, $r_e$, $r_{ej}$ und die Werte der Koordinaten der Ecken $C_q$ in Prozenten ausgedrückt sind:

— für $0,0 < r_e \leqslant 1,4$ ist das Polygon ein Sechseck mit den Ecken:

$C_1$ ($r_{I1} = 11,0$,   $r_{II1} = 2,4$,   $r_{III1} = 85,2$)
$C_2$ ($r_{I2} = 35,8$,   $r_{II2} = 0,3$,   $r_{III2} = 62,5$)
$C_3$ ($r_{I3} = 37,8$,   $r_{II3} = 9,4$,   $r_{III3} = 51,4$)
$C_4$ ($r_{I4} = 27,5$,   $r_{II4} = 27,6$,   $r_{III4} = 43,5$)
$C_5$ ($r_{I5} = 18,3$,   $r_{II5} = 29,6$,   $r_{III5} = 50,7$)
$C_6$ ($r_{I6} = 12,5$,   $r_{II6} = 14,8$,   $r_{III6} = 71,3$)

— für $1,4 < r_e \leqslant 3,8$ ist das Polygon ein Sechseck mit den Ecken:

$C_1$ ($r_{I1} = 11,8$,   $r_{II1} = 2,4$,   $r_{III1} = 82,0$)
$C_2$ ($r_{I2} = 34,0$,   $r_{II2} = 0,7$,   $r_{III2} = 61,5$)
$C_3$ ($r_{I3} = 36,6$,   $r_{II3} = 7,4$,   $r_{III3} = 52,2$)
$C_4$ ($r_{I4} = 23,9$,   $r_{II4} = 24,4$,   $r_{III4} = 47,9$)
$C_5$ ($r_{I5} = 20,7$,   $r_{II5} = 24,8$,   $r_{III5} = 50,7$)
$C_6$ ($r_{I6} = 13,2$,   $r_{II6} = 11,9$,   $r_{III6} = 71,1$)

— für $3,8 < r_e \leqslant 6,2$ ist das Polygon ein Fünfeck mit den Ecken:

$C_1$ ($r_{I1} = 13,1$,   $r_{II1} = 1,4$,   $r_{III1} = 79,3$)
$C_2$ ($r_{I2} = 29,1$,   $r_{II2} = 1,4$,   $r_{III2} = 63,3$)
$C_3$ ($r_{I3} = 31,1$,   $r_{II3} = 5,6$,   $r_{III3} = 57,1$)
$C_4$ ($r_{I4} = 22,7$,   $r_{II4} = 18,7$,   $r_{III4} = 52,4$)
$C_5$ ($r_{I5} = 13,3$,   $r_{II5} = 10,1$,   $r_{III5} = 70,4$)

— für $6,2 < r_e \leqslant 8,6$ ist das Polygon ein Fünfeck mit den Ecken:

$C_1$ ($r_{I1} = 12,9$,   $r_{II1} = 3,0$,   $r_{III1} = 75,5$)
$C_2$ ($r_{I2} = 24,1$,   $r_{II2} = 2,2$,   $r_{III2} = 65,1$)
$C_3$ ($r_{I3} = 24,8$,   $r_{II3} = 9,6$,   $r_{III3} = 57,0$)
$C_4$ ($r_{I4} = 20,1$,   $r_{II4} = 16,0$,   $r_{III4} = 55,3$)
$C_5$ ($r_{I5} = 13,6$,   $r_{II5} = 7,7$,   $r_{III5} = 70,1$)

— für $8,6 < r_e \leqslant 11,0$ ist das Polygon ein Fünfeck mit den Ecken:

$C_1$ ($r_{I1} = 13,6$,   $r_{II1} = 3,0$,   $r_{III1} = 72,4$)
$C_2$ ($r_{I2} = 19,9$,   $r_{II2} = 2,5$,   $r_{III2} = 66,6$)
$C_3$ ($r_{I3} = 21,0$,   $r_{II3} = 6,8$,   $r_{III3} = 61,2$)
$C_4$ ($r_{I4} = 20,1$,   $r_{II4} = 8,3$,   $r_{III4} = 60,6$)
$C_5$ ($r_{I5} = 14,1$,   $r_{II5} = 5,2$,   $r_{III5} = 69,7$)

5. Verfahren um eine Zusammensetzung entsprechend einem der Ansprüche 1 bis 4 zu erhalten, gekennzeichnet durch die folgenden Punkte:

41

a) Man stellt eine Mischung, ausgehend von zumindest drei Materialien her:

(I) einem Cellulosematerial;

(II) einem Material, bestehend aus zumindest einer Verbindung, gewählt aus der Gruppe, die durch die organischen Monocarboxylsäuren, die Anhydride und Halogenide dieser Säuren gebildet wird, wobei dieses Material zumindest zum Teil aus Ameisensäure und/oder einem Anhydrid der Ameisensäure und einer anderen organischen Säure gebildet wird;

(III) einem Material, welches entweder aus Phosphorsäureanhydrid, oder aus zumindest einer Phosphorsäure oder aus Phosphorsäureanhydrid und zumindest einer Phosphorsäure besteht;

b) die Menge Wassers, die um die Mischung durchzuführen, anwesend ist, ist entweder Null oder so, dass das Verhältnis:

$$R_{er} = \frac{P_e - P_{er}}{P_I + P_{II} + P_{III} + P_e - P_{er}}$$

kleiner als 15,0% und grösser als –7,5% ist, wobei $P_e$ das Gewicht des gegebenenfalls vorhandenen Wassers ist, $P_{er}$ das Gewicht des Wassers, welches fähig ist, gegebenenfalls mit dem Material (II) und/oder dem Material (III) zu reagieren, $P_I$ das Gewicht der Cellulose im Material (I), $P_{II}$ das Gewicht des Materials (II) und $P_{III}$ das Gewicht des Materials (III) ist;

c) die Verhältnisse $R_I$, $R_{II}$, $R_{III}$ werden definiert durch:

$$R_I = \frac{P_I}{P_I + P_{II} + P_{III} + P_e - P_{er}} \, ,$$

$$R_{II} = \frac{P_{II}}{P_I + P_{II} + P_{III} + P_e - P_{er}} \, ,$$

$$R_{III} = \frac{P_{III}}{P_I + P_{II} + P_{III} + P_e - P_{er}} \, ,$$

die Verhältnisse $R_I$, $R_{II}$, $R_{III}$, $R_{er}$, deren Summe: $R_I + R_{II} + R_{III} + R_{er}$ definitionsgemäss gleich 100% ist, erfüllen die folgenden Bedingungen, deren Werte in % angegeben sind:

— wenn $R_{er}$ die Bedingung:
$12,5 \leqslant R_{er} < 15,0$ erfüllt,
erhält man die Bedingungen:
$10,0 \leqslant R_I \leqslant 14,5; 2,0 \leqslant R_{II} \leqslant 10,0$
mit der Bedingung: $R_{II} \leqslant 0,89 R_I - 2,89$;

— wenn $R_{er}$ die Bedingung:
$10,0 \leqslant R_{er} < 12,5$ erfüllt,
erhält man die Bedingungen:
$10,0 \leqslant R_I \leqslant 19,5; 2,0 \leqslant R_{II} \leqslant 17,0$
mit der Bedingung: $R_{II} \leqslant 1,78 R_I - 8,78$
wenn $R_I$ die Bedingung: $R_I < 14,5$, erfüllt,
oder mit der Bedingung:
$R_{II} \leqslant -1,40 R_I + 37,30$
wenn $R_I$ die Bedingung: $R_I \geqslant 14,5$ erfüllt;

— wenn $R_{er}$ die Bedingung:
$7,5 \leqslant R_{er} < 10,0$ erfüllt,

erhält man die Bedingungen:
$10,0 \leqslant R_I \leqslant 31,0; 2,0 \leqslant R_{II} \leqslant 23,0$
mit der Bedingung: $R_{II} \leqslant 4,40 R_I - 32,00$
wenn $R_I$ die Bedingung $R_I \leqslant 12,5$ erfüllt,
oder mit der Bedingung:
$R_{II} \leqslant -1,19 R_I + 41,50$
wenn $R_I$ die Bedingung: $R_I \geqslant 15,5$ erfüllt;

— wenn $R_{er}$ die Bedingung:
$5,0 \leqslant R_{er} < 7,5$ erfüllt,
erhält man die Bedingungen:
$10,0 \leqslant R_I \leqslant 37,0; 2,0 \leqslant R_{II} \leqslant 27,5$
mit der Bedingung: $R_{II} \leqslant 4,17 R_I - 26,67$
wenn $R_I$ die Bedingung: $R_I \leqslant 13,0$ erfüllt,
oder mit der Bedingung:
$R_{II} \leqslant -1,14 R_I + 49,14$
wenn $R_I$ die Bedingung: $R_I \geqslant 19,0$ erfüllt;

— wenn $R_{er}$ die Bedingung:
$2,5 \leqslant R_{er} < 5,0$ erfüllt,
erhält man die Bedingungen:
$10,0 \leqslant R_I \leqslant 37,0; 2,0 \leqslant R_{II} \leqslant 36,5$
mit der Bedingung: $R_{II} \leqslant 4,63 R_I - 28,25$
wenn $R_I$ die Bedingung: $R_I \leqslant 14,0$ erfüllt,
oder mit der Bedingung:
$R_{II} \leqslant -1,23 R_I + 55,60$
wenn $R_I$ die Bedingung: $R_I \geqslant 15,5$ erfüllt;

— wenn $R_{er}$ die Bedingung:
$-2,5 < R_{er} < 2,5$ erfüllt,
erhält man die Bedingungen:
$10,0 \leqslant R_I \leqslant 38,0; 2,0 \leqslant R_{II} \leqslant 40,0$
mit der Bedingung: $R_{II} \leqslant 2,80 R_I + 5,00$
wenn $R_I$ die Bedingung: $R_I \leqslant 12,5$ erfüllt,
oder mit der Bedingung:
$R_{II} \leqslant -1,14 R_I + 62,14$
wenn $R_I$ die Bedingung: $R_I \geqslant 19,5$ erfüllt;

— wenn $R_{er}$ die Bedingung:
$-5,0 < R_{er} \leqslant -2,5$ erfüllt,
erhält man die Bedingungen:
$10,0 \leqslant R_I \leqslant 35,0; 2,0 \leqslant R_{II} \leqslant 45,0$
mit der Bedingung: $R_{II} \leqslant -1,30 R_I + 64,50$;

— wenn $R_{er}$ die Bedingung:
$-7,5 < R_{er} \leqslant -5,0$ erfüllt,
erhält man die Bedingungen:
$10,0 \leqslant R_I \leqslant 32,0; 2,0 \leqslant R_{II} \leqslant 36,0$
mit der Bedingung: $R_{II} \leqslant 4,00 R_I - 22,00$
wenn $R_I$ die Bedingung: $R_I \leqslant 14,5$ erfüllt;

d) der Polymerisationsgrad DP der Cellulose des Materials (I) ist grösser als 150 und kleiner als 1500;

e) man lässt die Veresterung der Cellulose in dieser Mischung während einer Zeit durchführen, die ausreicht um die anisotrope Lösung zu erhalten.

6. Verfahren nach Anspruch 5, dadurch gekennzeichnet, dass die Cellulose des Cellulosematerials (I) einen Polymerisationsgrad DP von zumindest 200 und von höchstens 1200 aufweist, und dass die folgenden Bedingungen zwischen $R_I$, $R_{II}$, $R_{III}$, $R_{er}$, deren Werte in % angegeben sind, erfüllt sind:

— wenn $R_{er}$ die Bedingung:
$10,0 \leqslant R_{er} < 12,5$ erfüllt,
erhält man die Bedingungen:
$13,0 \leqslant R_I \leqslant 19,0; 4,0 \leqslant R_{II} \leqslant 11,0$
mit der Bedingung: $R_{II} \leqslant 0,73 R_I - 2,45$
wenn $R_I$ die Bedingung: $R_I < 18,5$ erfüllt,
oder mit der Bedingung:
$R_{II} \leqslant -2,00 R_I + 48,00$
wenn $R_I$ die Bedingung: $R_I \geqslant 18,5$ erfüllt;

— wenn $R_{er}$ die Bedingung:
$7,5 \leqslant R_{er} < 10,0$ erfüllt,
erhält man die Bedingungen:
$12,25 \leqslant R_I \leqslant 23,0$; $4,0 \leqslant R_{II} \leqslant 19,5$
mit der Bedingung: $R_{II} \leqslant 1,65 R_I - 10,24$
wenn $R_I$ die Bedingung: $R_I < 18,0$ erfüllt,
oder mit der Bedingung:
$R_{II} \leqslant -1,40 R_I + 44,70$
wenn $R_I$ die Bedingung: $R_I \geqslant 18,0$ erfüllt;

— wenn $R_{er}$ die Bedingung:
$5,0 \leqslant R_{er} < 7,5$ erfüllt,
erhält man die Bedingungen:
$11,5 \leqslant R_I \leqslant 27,5$; $4,0 \leqslant R_{II} \leqslant 24,0$
mit der Bedingung: $R_{II} \leqslant 1,38 R_I - 2,81$
wenn $R_I$ die Bedingung: $R_I < 19,5$ erfüllt,
oder mit der Bedingung:
$R_{II} \leqslant -1,56 R_I + 54,47$
wenn $R_I$ die Bedingung: $R_I \geqslant 19,5$ erfüllt;

— wenn $R_{er}$ die Bedingung:
$2,5 \leqslant R_{er} < 5,0$ erfüllt,
erhält man die Bedingungen:
$10,75 \leqslant R_I \leqslant 32,0$; $4,0 \leqslant R_{II} \leqslant 30,0$
mit der Bedingung: $R_{II} \leqslant 2,07 R_I - 5,80$
wenn $R_I$ die Bedingung: $R_I \leqslant 17,5$ erfüllt,
oder mit der Bedingung:
$R_{II} \leqslant -1,30 R_I + 56,74$
wenn $R_I$ die Bedingung: $R_I \geqslant 20,5$ erfüllt;

— wenn $R_{er}$ die Bedingung:
$-2,5 < R_{er} < 2,5$ erfüllt,
erhält man die Bedingungen:
$10,0 \leqslant R_I \leqslant 33,5$; $4,0 \leqslant R_{II} \leqslant 35,0$
mit der Bedingung: $R_{II} \leqslant 3,20 R_I - 13,00$
wenn $R_I$ die Bedingung: $R_I \leqslant 15,0$ erfüllt,
oder mit der Bedingung:
$R_{II} \leqslant -1,76 R_I + 75,52$
wenn $R_I$ die Bedingung: $R_I \geqslant 23,0$ erfüllt;

— wenn $R_{er}$ die Bedingung:
$-5,0 < R_{er} \leqslant -2,5$ erfüllt,
erhält man die Bedingungen:
$10,0 \leqslant R_I \leqslant 33,5$; $4,0 \leqslant R_{II} \leqslant 35,0$
mit der Bedingung: $R_{II} \leqslant 3,20 R_I - 13,00$
wenn $R_I$ die Bedingung: $R_I \leqslant 15,0$ erfüllt,
oder mit der Bedingung:
$R_{II} \leqslant -1,85 R_I + 72,85$
wenn $R_I$ die Bedingung: $R_I \geqslant 20,5$ erfüllt.

7. Verfahren nach Anspruch 6, dadurch gekennzeichnet, dass man die folgenden Beziehungen zwischen $R_I$, $R_{II}$, $R_{III}$, $R_{er}$, deren Werte in % ausgedrückt sind, hat:
— wenn $R_{er}$ die Bedingung:
$7,5 < R_{er} \leqslant 10,0$ erfüllt,
erhält man die Bedingungen:
$13,0 \leqslant R_I \leqslant 19,0$; $4,0 \leqslant R_{II} \leqslant 11,0$
mit der Bedingung: $R_{II} \leqslant 0,73 R_I - 2,45$
wenn $R_I$ die Bedingung: $R_I < 18,5$ erfüllt,
oder mit der Bedingung:
$R_{II} \leqslant -2,00 R_I + 48,00$
wenn $R_I$ die Bedingung: $R_I \geqslant 18,5$ erfüllt;

— wenn $R_{er}$ die Bedingung:
$5,0 < R_{er} \leqslant 7,5$ erfüllt,
erhält man die Bedingungen:
$12,25 \leqslant R_I \leqslant 23,0$; $4,0 \leqslant R_{II} \leqslant 19,5$
mit der Bedingung: $R_{II} \leqslant 1,65 R_I - 10,24$
wenn $R_I$ die Bedingung: $R_I < 18,0$ erfüllt,
oder mit der Bedingung:

$R_{II} \leqslant -1,40 R_I + 44,70$
wenn $R_I$ die Bedingung: $R_I \geqslant 18,0$ erfüllt;
— wenn $R_{er}$ die Bedingung:
$2,5 < R_{er} \leqslant 5,0$ erfüllt,
erhält man die Bedingungen:
$11,5 \leqslant R_I \leqslant 27,5$; $4,0 \leqslant R_{II} \leqslant 24,0$
mit der Bedingung: $R_{II} \leqslant 1,38 R_I - 2,81$
wenn $R_I$ die Bedingung: $R_I < 19,5$ erfüllt,
oder mit der Bedingung:
$R_{II} \leqslant -1,56 R_I + 54,47$
wenn $R_I$ die Bedingung: $R_I \geqslant 19,5$ erfüllt;
— wenn $R_{er}$ die Bedingung:
$0,0 < R_{er} \leqslant 2,5$ erfüllt,
erhält man die Bedingungen:
$10,75 \leqslant R_I \leqslant 32,0$; $4,0 \leqslant R_{II} \leqslant 30,0$
mit der Bedingung: $R_{II} \leqslant 2,07 R_I - 5,80$
wenn $R_I$ die Bedingung: $R_I \leqslant 17,5$ erfüllt,
oder mit der Bedingung:
$R_{II} \leqslant -1,30 R_I + 56,74$
wenn $R_I$ die Bedingung: $R_I \geqslant 20,5$ erfüllt;
— wenn $R_{er}$ die Bedingung:
$-2,5 \leqslant R_{er} \leqslant 0,0$ erfüllt,
erhält man die Bedingungen:
$10,0 \leqslant R_I \leqslant 33,5$; $4,0 \leqslant R_{II} \leqslant 35,0$
mit der Bedingung: $R_{II} \leqslant 3,20 R_I - 13,00$
wenn $R_I$ die Bedingung: $R_I \leqslant 15,0$ erfüllt,
oder mit der Bedingung:
$R_{II} \leqslant -1,85 R_I + 72,85$
wenn $R_I$ die Bedingung: $R_I \geqslant 20,5$ erfüllt.

8. Zusammensetzung, die man nach einem der Verfahren gemäss einem der Ansprüche 5 bis 7 erhält.

9. Verfahren, um einen Gegenstand auf der Basis zumindest eines Cellulosederivates zu erhalten, dadurch gekennzeichnet, dass man eine Zusammensetzung nach einem der Ansprüche 1 bis 4 und 8 in einen Gegenstand umwandelt, und dass man aus diesem Gegenstand zumindest einen Teil der Bestandteile, der nicht das oder die Cellulosederivat(e) ist (sind) entfernt.

10. Verfahren nach Anspruch 9, dadurch gekennzeichnet, dass man während der Umwandlung der Zusammensetzung ein Koagulationsbad verwendet.

11. Verfahren nach Anspruch 10, dadurch gekennzeichnet, dass das Koagulationsbad auf Acetonbasis beruht.

12. Verfahren nach einem der Ansprüche 10 oder 11, dadurch gekennzeichnet, dass die Badtemperatur zumindest gleich $-20\,°C$ und höchstens gleich $10\,°C$ ist.

13. Verfahren nach einem der Ansprüche 9 bis 12, dadurch gekennzeichnet, dass man ein Spinnverfahren mit Fluidspalt von nichtkoagulierendem Fluid (dry jet-wet) verwendet.

14. Verfahren um einen Gegenstand auf der Basis regenerierter Cellulose zu erhalten, dadurch gekennzeichnet, dass man zumindest einen Teil der Cellulose des nach einem Verfahren gemäss einem der Ansprüche 9 bis 13 erhaltenen Gegenstandes regeneriert.

15. Verfahren nach Anspruch 14, dadurch gekennzeichnet, dass die Regeneration mit einer wässrigen Alkalilösung durchgeführt wird.

16. Gegenstand, der nach einem Verfahren gemäss einem der Ansprüche 9 bis 15 erhalten wurde.

17. Gegenstand nach Anspruch 16, dadurch gekennzeichnet, dass er eine Faser oder ein Film ist.

18. Faser, die zumindest zum Teil aus einem Filament auf der Basis zumindest eines Cellulosederivats besteht, welches Celluloseestergruppen enthält, wobei zumindest ein Teil dieser Estergruppen Formiatgruppen sind, dadurch gekennzeichnet, dass sie die folgenden Eigenschaften aufweist:

a) der Substitutionsgrad DS der Cellulose mit Formiatgruppe ist zumindest gleich 2% und der Polymerisationsgrad DP der Cellulose ist grösser als 150 und kleiner als 1500;

b) die Zähigkeit T und der Ausgangsmodul $M_i$ der Faser erfüllen die folgenden Bedingungen, wobei T und $M_i$ in cN/tex ausgedrückt sind:

$T > 20$; $M_i > 1000$;

c) das Filament weist eine solche Morphologie auf, dass es zumindest zum Teil aus ineinander geschachtelten Schichten besteht, wobei die Schichten die Filamentachse umhüllen und sich die optische Richtung und die Kristallisationsrichtung pseudoperiodisch entlang der Filamentachse in jeder Schicht verändern.

19. Faser nach Anspruch 18, dadurch gekennzeichnet, dass sie keinerlei Streckung, ausser der, die von ihrer Formgebung herrührt, unterworfen ist.

20. Faser nach einem der Ansprüche 18 oder 19, dadurch gekennzeichnet, dass ihre Doppelbrechung $\Delta n$ grösser als 0,03 ist.

21. Faser nach einem der Ansprüche 18 bis 20 dadurch gekennzeichnet, dass der Polymerisationsgrad DP der Cellulose des Derivates oder der Derivate zumindest gleich 200 und höchstens gleich 1200 ist.

22. Faser, die zumindest zum Teil aus einem Filament auf Cellulosebasis und/oder mindestens einem Cellulosederivat beruht, welches Celluloseestergruppen aufweist, wobei zumindest ein Teil dieser Estergruppen Formiatgruppen sind, dadurch gekennzeichnet, dass sie die folgenden Eigenschaften aufweist:

a) der Substitutionsgrad DS der Cellulose mit Formiatgruppen ist Null oder kleiner 2% und der Polymerisationsgrad DP der Cellulose ist grösser als 150 und kleiner als 1500;

b) der Polymerisationsgrad DP der Cellulose, die Zähigkeit T und der Ausgangsmodul $M_i$ der Faser erfüllen die folgenden Bedingungen, wobei T und $M_i$ in cN/tex angegeben sind:

für

$DP < 200$, hat man $T > 20$ und $M_i > 1800$;

für

$200 \leqslant DP < 300$, hat man $T > 30$ und $M_i > 2000$;

für

$300 \leqslant DP < 400$, hat man $T > 40$ und $M_i > 2400$;

für

$400 \leqslant DP < 1500$, hat man $T > 60$ und $M_i > 2600$

c) das Filament weist eine solche Morphologie auf, dass es zumindest zum Teil aus ineinandergeschachtelten Schichten besteht, wobei die Schichten die Filamentachse umhüllen, und dass in jeder Schicht die optische Richtung und die Kristallisationsrichtung entlang der Filamentachse pseudoperiodisch variieren.

23. Faser nach Anspruch 22, dadurch gekennzeichnet, dass DP, T und $M_i$ die folgenden Bedingungen erfüllen, wobei T und $M_i$ in cN/tex angegeben sind:

für $150 < DP < 250$,

hat man $T \geqslant \dfrac{1}{3} DP - 26$ und $M_i \geqslant 2300$;

für $250 \leqslant DP < 1500$, hat man

$T \geqslant -\dfrac{18675}{DP} + 132$ und $M_i \geqslant -\dfrac{502250}{DP} + 4309$.

24. Faser nach einem der Ansprüche 22 oder 23, dadurch gekennzeichnet, dass ihr Schallmodul $M_s$ die Bedingung:

$M_s > 3000$ cN/tex erfüllt.

25. Faser nach einem der Ansprüche 22 bis 24, dadurch gekennzeichnet, dass ihr Orientationsindex I.O. die Bedingung

I.O. $> 95,5\%$ erfüllt.

26. Faser nach einem der Ansprüche 22 bis 25, dadurch gekennzeichnet, dass sie keinerlei Streckung, ausser der, die von ihrer Formgebung herrührt, unterworfen ist.

27. Faser nach einem der Ansprüche 22 bis 26, dadurch gekennzeichnet, dass der Polymerisationsgrad DP der in ihr enthaltenen Cellulose zumindest 200 und höchstens 1200 beträgt.

**Claims**

1. Composition having a base of at least one cellulose derivative containing cellulose ester groups, at least a part of the ester groups being formate groups, characterized in that it is an anisotropic solution which can give fibres or films and contains:

a) the cellulose derivative or derivatives, the concentration of the cellulose derivative or of all of the cellulose derivatives in the solution being at least equal to 10.2% by weight, the degree of polymerization DP of the cellulose in the cellulose derivative or derivatives being greater than 150 and less than 1500;

b) formic acid or at least two compounds selected from the group consisting of monocarboxylic organic acids, the anhydrides and halides of these acids, one of these compounds being formic acid;

c) at least one phosphoric acid.

2. Composition according to Claim 1, characterized by the following features:

— the percentages by weight $r_I$, $r_{II}$, $r_{III}$, $r_e$ are defined by the following relationships:

$r_I$: percentage of the cellulose derivative or derivatives;

$r_{II}$: percentage of the so-called «organic acid» phase, this phase comprising all the organic acids, organic acid anhydrides, organic acid halides possibly present in the composition;

$r_{III}$: percentage of the so-called «phosphoric acid» phase, this phase comprising the phosphoric acids and the phosphoric anhydride which are possibly present in the composition;

$r_e$: percentage of water possibly present in the composition, these percentages being calculated on the total weight = weight of the cellulose derivative or derivatives + weight of the so-called «organic acid» phase + weight of the so-called «phosphoric acid» phase + weight of any water, these percentages $r_I$, $r_{II}$, $r_{III}$, $r_e$ making it possible to define a quaternary diagram with the relationship $r_I + r_{II} + r_{III} + r_e = 100$ (in percentage);

— the values of $r_e$ are distributed in intervals; in each interval one has $r_{ei} \leqslant r_e < r_{ej}$, $r_{ei}$ and $r_{ej}$ being fixed values; for each value $r_{ei}$, that is to say when one has the relationship $r_I + r_{II} + r_{III} = 100 - r_{ei}$ (in percentage), a polygon is defined comprising a number of vertices which may vary from one interval to the other, each of these vertices being designated generally as $C_k$ (k being a variable) and being defined by its coordinates $r_{Ik}$, $r_{IIk}$, $r_{IIIk}$ in the ternary diagram corresponding to the value $r_{ei}$, that is to say in the ternary diagram of the plane $r_{ei}$;

— in each interval $r_{ei} \leqslant r_e < r_{ej}$, every point of the quaternary diagram of coordinates $r_I$, $r_{II}$, $r_{III}$, $r_e$ corresponding to a composition according to Claim 1 is projected onto the plane $r_{ei}$, and perpendicular to this plane, within the polygon of vertices $C_k$ or on the sides of this polygon;

— these intervals $r_{ei} \leqslant r_e < r_{ej}$ and these polygons of vertices $C_k$ are given by the following relationships, the values of $r_{ei}$, $r_e$, $r_{ej}$ and the values of coordinates of vertices $C_k$ being expressed in %:

— for $0.0 \leqslant r_e < 1.4$, this polygon is a pentagon of vertices:
$C_1$ ($r_{I1} = 10.8$,   $r_{II1} = 0.4$,   $r_{III1} = 88.8$)
$C_2$ ($r_{I2} = 38.9$,   $r_{II2} = 0.2$,   $r_{III2} = 60.9$)
$C_3$ ($r_{I3} = 43.6$,   $r_{II3} = 9.8$,   $r_{III3} = 46.6$)
$C_4$ ($r_{I4} = 19.0$,   $r_{II4} = 38.5$,   $r_{III4} = 42.5$)
$C_5$ ($r_{I5} = 12.8$,   $r_{II5} = 40.3$,   $r_{III5} = 46.9$)

— for $1.4 \leqslant r_e < 3.8$, this polygon is a hexagon of vertices:
$C_1$ ($r_{I1} = 10.8$,   $r_{II1} = 0.5$,   $r_{III1} = 87.3$)
$C_2$ ($r_{I2} = 38.9$,   $r_{II2} = 0.1$,   $r_{III2} = 59.6$)
$C_3$ ($r_{I3} = 43.6$,   $r_{II3} = 9.8$,   $r_{III3} = 45.2$)
$C_4$ ($r_{I4} = 23.6$,   $r_{II4} = 33.3$,   $r_{III4} = 41.7$)
$C_5$ ($r_{I5} = 15.2$,   $r_{II5} = 35.5$,   $r_{III5} = 47.9$)
$C_6$ ($r_{I6} = 12.7$,   $r_{II6} = 28.6$,   $r_{III6} = 57.3$)

— for $3.8 \leqslant r_e < 6.2$, this polygon is a heptagon of vertices:
$C_1$ ($r_{I1} = 10.9$,   $r_{II1} = 0.5$,   $r_{III1} = 84.8$)
$C_2$ ($r_{I2} = 37.9$,   $r_{II2} = 0.2$,   $r_{III2} = 58.1$)
$C_3$ ($r_{I3} = 43.1$,   $r_{II3} = 1.4$,   $r_{III3} = 51.7$)
$C_4$ ($r_{I4} = 43.0$,   $r_{II4} = 10.5$,   $r_{III4} = 42.7$)
$C_5$ ($r_{I5} = 19.3$,   $r_{II5} = 30.9$,   $r_{III5} = 46.0$)
$C_6$ ($r_{I6} = 17.4$,   $r_{II6} = 31.4$,   $r_{III6} = 47.4$)
$C_7$ ($r_{I7} = 12.4$,   $r_{II7} = 14.2$,   $r_{III7} = 69.6$)

— for $6.2 \leqslant r_e < 8.6$, this polygon is a hexagon of vertices:
$C_1$ ($r_{I1} = 10.6$,   $r_{II1} = 1.1$,   $r_{III1} = 82.1$)
$C_2$ ($r_{I2} = 38.1$,   $r_{II2} = 0.2$,   $r_{III2} = 55.5$)
$C_3$ ($r_{I3} = 43.0$,   $r_{II3} = 1.5$,   $r_{III3} = 49.3$)
$C_4$ ($r_{I4} = 22.7$,   $r_{II4} = 22.0$,   $r_{III4} = 49.1$)
$C_5$ ($r_{I5} = 15.6$,   $r_{II5} = 23.5$,   $r_{III5} = 54.7$)
$C_6$ ($r_{I6} = 11.7$,   $r_{II6} = 12.2$,   $r_{III6} = 69.9$)

— for $8.6 \leqslant r_e < 11.0$, this polygon is a pentagon of vertices:
$C_1$ ($r_{I1} = 10.5$,   $r_{II1} = 1.2$,   $r_{III1} = 79.7$)
$C_2$ ($r_{I2} = 32.1$,   $r_{II2} = 0.2$,   $r_{III2} = 59.1$)
$C_3$ ($r_{I3} = 32.8$,   $r_{II3} = 1.6$,   $r_{III3} = 57.0$)
$C_4$ ($r_{I4} = 17.7$,   $r_{II4} = 19.4$,   $r_{III4} = 54.3$)
$C_5$ ($r_{I5} = 14.2$,   $r_{II5} = 20.2$,   $r_{III5} = 57.0$)

— for $11.0 \leqslant r_e < 13.4$, this polygon is a pentagon of vertices:
$C_1$ ($r_{I1} = 10.4$,   $r_{II1} = 1.3$,   $r_{III1} = 77.3$)
$C_2$ ($r_{I2} = 20.1$,   $r_{II2} = 1.0$,   $r_{III2} = 67.9$)
$C_3$ ($r_{I3} = 21.5$,   $r_{II3} = 6.7$,   $r_{III3} = 60.8$)
$C_4$ ($r_{I4} = 16.2$,   $r_{II4} = 14.1$,   $r_{III4} = 58.7$)
$C_5$ ($r_{I5} = 10.9$,   $r_{II5} = 7.5$,   $r_{III5} = 70.6$)

3. Composition according to Claim 2, characterized in that the degree of polymerization DP of the cellulose in the cellulose derivative or derivatives is at least equal to 200 and at most equal to 1200 and in that the intervals $r_{ei} \leqslant r_e < r_{ej}$ and the polygons of vertices $C_k$ corresponding to these intervals and located within the ternary diagrams of the $r_{ei}$ planes are given by the following relationships, the values of $r_{ei}$, $r_e$, $r_{ej}$ and the values of the coordinates of the vertices $C_k$ being expressed in %:

— for $0.0 \leqslant r_e < 1.4$, this polygon is a hexagon of vertices:
$C_1$ ($r_{I1} = 11.5$,   $r_{II1} = 1.9$,   $r_{III1} = 86.6$)
$C_2$ ($r_{I2} = 35.5$,   $r_{II2} = 0.4$,   $r_{III2} = 64.1$)
$C_3$ ($r_{I3} = 37.3$,   $r_{II3} = 4.7$,   $r_{III3} = 58.0$)
$C_4$ ($r_{I4} = 24.9$,   $r_{II4} = 27.8$,   $r_{III4} = 47.3$)
$C_5$ ($r_{I5} = 18.7$,   $r_{II5} = 28.9$,   $r_{III5} = 52.4$)
$C_6$ ($r_{I6} = 12.5$,   $r_{II6} = 14.9$,   $r_{III6} = 72.6$)

— for $1.4 \leqslant r_e < 3.8$, this polygon is a hexagon of vertices:
$C_1$ ($r_{I1} = 11.0$,   $r_{II1} = 2.4$,   $r_{III1} = 85.2$)
$C_2$ ($r_{I2} = 35.8$,   $r_{II2} = 0.3$,   $r_{III2} = 62.5$)
$C_3$ ($r_{I3} = 37.8$,   $r_{II3} = 9.4$,   $r_{III3} = 51.4$)
$C_4$ ($r_{I4} = 27.5$,   $r_{II4} = 27.6$,   $r_{III4} = 43.5$)
$C_5$ ($r_{I5} = 18.3$,   $r_{II5} = 29.6$,   $r_{III5} = 50.7$)
$C_6$ ($r_{I6} = 12.5$,   $r_{II6} = 14.8$,   $r_{III6} = 71.3$)

— for $3.8 \leqslant r_e < 6.2$, this polygon is a hexagon of vertices:
$C_1$ ($r_{I1} = 11.8$,   $r_{II1} = 2.4$,   $r_{III1} = 82.0$)
$C_2$ ($r_{I2} = 34.0$,   $r_{II2} = 0.7$,   $r_{III2} = 61.5$)
$C_3$ ($r_{I3} = 36.6$,   $r_{II3} = 7.4$,   $r_{III3} = 52.2$)
$C_4$ ($r_{I4} = 23.9$,   $r_{II4} = 24.4$,   $r_{III4} = 47.9$)
$C_5$ ($r_{I5} = 20.7$,   $r_{II5} = 24.8$,   $r_{III5} = 50.7$)
$C_6$ ($r_{I6} = 13.2$,   $r_{II6} = 11.9$,   $r_{III6} = 71.1$)

— for $6.2 \leqslant r_e < 8.6$, this polygon is a pentagon of vertices:
$C_1$ ($r_{I1} = 13.1$,   $r_{II1} = 1.4$,   $r_{III1} = 79.3$)
$C_2$ ($r_{I2} = 29.1$,   $r_{II2} = 1.4$,   $r_{III2} = 63.3$)
$C_3$ ($r_{I3} = 31.1$,   $r_{II3} = 5.6$,   $r_{III3} = 57.1$)
$C_4$ ($r_{I4} = 22.7$,   $r_{II4} = 18.7$,   $r_{III4} = 52.4$)
$C_5$ ($r_{I5} = 13.3$,   $r_{II5} = 10.1$,   $r_{III5} = 70.4$)

— for $8.6 \leqslant r_e < 11.0$, this polygon is a pentagon of vertices:
$C_1$ ($r_{I1} = 12.9$,   $r_{II1} = 3.0$,   $r_{III1} = 75.5$)

$C_2$ ($r_{I2}=24.1$, $r_{II2}=$ 2.2, $r_{III2}=65.1$)
$C_3$ ($r_{I3}=24.8$, $r_{II3}=$ 9.6, $r_{III3}=57.0$)
$C_4$ ($r_{I4}=20.1$, $r_{II4}=16.0$, $r_{III4}=55.3$)
$C_5$ ($r_{I5}=13.6$, $r_{II5}=$ 7.7, $r_{III5}=70.1$)

— for $11.0 \leqslant r_e < 13.4$, this polygon is a pentagon of vertices:

$C_1$ ($r_{I1}=13.6$, $r_{II1}=$ 3.0, $r_{III1}=72.4$)
$C_2$ ($r_{I2}=19.9$, $r_{II2}=$ 2.5, $r_{III2}=66.6$)
$C_3$ ($r_{I3}=21.0$, $r_{II3}=$ 6.8, $r_{III3}=61.2$)
$C_4$ ($r_{I4}=20.1$, $r_{II4}=$ 8.3, $r_{III4}=60.6$)
$C_5$ ($r_{I5}=14.1$, $r_{II5}=$ 5.2, $r_{III5}=69.7$)

4. Composition according to Claim 3, characterized in that in each interval $r_{ei} < r_e \leqslant r_{ej}$ for each value of $r_{ej}$, that is to say when one has the relationship $r_I + r_{II} + r_{III} = 100 - r_{ej}$ (in percentage), one defines a polygon comprising a number of vertices which may vary from one interval to the other, each of these vertices being referenced in general as $C_q$ (q being a variable) and being defined by its coordinates $r_{Iq}$, $r_{IIq}$, $r_{IIIq}$ in the ternary diagram corresponding to the value $r_{ej}$, that is to say in the ternary diagram of the plane $r_{ej}$; in each interval $r_{ei} < r_e \leqslant r_{ej}$, every point of the quaternary diagram of coordinates $r_I$, $r_{II}$, $r_{III}$, $r_e$ corresponding to a composition according to the invention is projected onto the plane $r_{ej}$ and perpendicular to this plane within the polygon of vertices $C_q$ or on the sides of this polygon; these intervals $r_{ei} < r_e \leqslant r_{ej}$ and these polygons of vertices $C_q$ are given by the following relationships, the values of $r_{ei}$, $r_e$, $r_{ej}$ and the values of the coordinates of the vertices $C_q$ being expressed in %:

— for $0.0 < r_e \leqslant 1.4$, this polygon is a hexagon of vertices:

$C_1$ ($r_{I1}=11.0$, $r_{II1}=$ 2.4, $r_{III1}=85.2$)
$C_2$ ($r_{I2}=35.8$, $r_{II2}=$ 0.3, $r_{III2}=62.5$)
$C_3$ ($r_{I3}=37.8$, $r_{II3}=$ 9.4, $r_{III3}=51.4$)
$C_4$ ($r_{I4}=27.5$, $r_{II4}=27.6$, $r_{III4}=43.5$)
$C_5$ ($r_{I5}=18.3$, $r_{II5}=29.6$, $r_{III5}=50.7$)
$C_6$ ($r_{I6}=12.5$, $r_{II6}=14.8$, $r_{III6}=71.3$)

— for $1.4 < r_e \leqslant 3.8$, this polygon is a hexagon of vertices:

$C_1$ ($r_{I1}=11.8$, $r_{II1}=$ 2.4, $r_{III1}=82.0$)
$C_2$ ($r_{I2}=34.0$, $r_{II2}=$ 0.7, $r_{III2}=61.5$)
$C_3$ ($r_{I3}=36.6$, $r_{II3}=$ 7.4, $r_{III3}=52.2$)
$C_4$ ($r_{I4}=23.9$, $r_{II4}=24.4$, $r_{III4}=47.9$)
$C_5$ ($r_{I5}=20.7$, $r_{II5}=24.8$, $r_{III5}=50.7$)
$C_6$ ($r_{I6}=13.2$, $r_{II6}=11.9$, $r_{III6}=71.1$)

— for $3.8 < r_e \leqslant 6.2$, this polygon is a pentagon of vertices:

$C_1$ ($r_{I1}=13.1$, $r_{II1}=$ 1.4, $r_{III1}=79.3$)
$C_2$ ($r_{I2}=29.1$, $r_{II2}=$ 1.4, $r_{III2}=63.3$)
$C_3$ ($r_{I3}=31.1$, $r_{II3}=$ 5.6, $r_{III3}=57.1$)
$C_4$ ($r_{I4}=22.7$, $r_{II4}=18.7$, $r_{III4}=52.4$)
$C_5$ ($r_{I5}=13.3$, $r_{II5}=10.1$, $r_{III5}=70.4$)

— for $6.2 < r_e \leqslant 8.6$, this polygon is a pentagon of vertices:

$C_1$ ($r_{I1}=12.9$, $r_{II1}=$ 3.0, $r_{III1}=75.5$)
$C_2$ ($r_{I2}=24.1$, $r_{II2}=$ 2.2, $r_{III2}=65.1$)
$C_3$ ($r_{I3}=24.8$, $r_{II3}=$ 9.6, $r_{III3}=57.0$)
$C_4$ ($r_{I4}=20.1$, $r_{II4}=16.0$, $r_{III4}=55.3$)
$C_5$ ($r_{I5}=13.6$, $r_{II5}=$ 7.7, $r_{III5}=70.1$)

— for $8.6 < r_e \leqslant 11.0$, this polygon is a pentagon of vertices:

$C_1$ ($r_{I1}=13.6$, $r_{II1}=$ 3.0, $r_{III1}=72.4$)
$C_2$ ($r_{I2}=19.9$, $r_{II2}=$ 2.5, $r_{III2}=66.6$)
$C_3$ ($r_{I3}=21.0$, $r_{II3}=$ 6.8, $r_{III3}=61.2$)
$C_4$ ($r_{I4}=20.1$, $r_{II4}=$ 8.3, $r_{III4}=60.6$)
$C_5$ ($r_{I5}=14.1$, $r_{II5}=$ 5.2, $r_{III5}=69.7$)

5. Method of obtaining a composition according to any one of Claims 1 to 4, characterized by the following features:

a) a mixture is formed from at least three materials:

(I) a cellulose material;

(II) a material consisting of at least one compound selected from the group consisting of monocarboxylic organic acids, the anhydrides and halides of these acids, this material consisting at least in part of formic acid and/or an anhydride of formic acid and another organic acid;

(III) a material consisting either of phosphoric anhydride or at least one phosphoric acid, or of phosphoric anhydride and at least one phosphoric acid;

b) the amount of water present to form the mixture is zero or such that the ratio

$$R_{er} = \frac{P_e - P_{er}}{P_I + P_{II} + P_{III} + P_e - P_{er}}$$

is less than 15% and greater than $-7,5\%$, $P_e$ being the weight of water possibly present, $P_{er}$ being the weight of water capable of possible reacting with material (II) and/or material (III), $P_I$ being the weight of cellulose in material (I), $P_{II}$ being the weight of material (II) and $P_{III}$ being the weight of the material (III);

c) the ratios $R_I$, $R_{II}$, $R_{III}$ being defined by:

$$R_I = \frac{P_I}{P_I + P_{II} + P_{III} + P_e - P_{er}},$$

$$R_{II} = \frac{P_{II}}{P_I + P_{II} + P_{III} + P_e - P_{er}},$$

$$R_{III} = \frac{P_{III}}{P_I + P_{II} + P_{III} + P_e - P_{er}},$$

the ratios $R_I$, $R_{II}$, $R_{III}$, $R_{er}$, the sum of which $R_I + R_{II} + R_{III} + R_{er}$ is equal by definition to 100%, will verify the following relationships, the values of which are expressed in %:

— if $R_{er}$ verifies the relationship:
$12.5 \leqslant R_{er} < 15.0$
one has the relationships:
$10.0 \leqslant R_I \leqslant 14.5$; $2.0 \leqslant R_{II} \leqslant 10.0$
with the relationship: $R_{II} \leqslant 0.89\ R_I - 2.89$;

— if $R_{er}$ verifies the relationship:

$10.0 \leqslant R_{er} < 12.5$

one has the relationships:

$10.0 \leqslant R_I \leqslant 19.5; 2.0 \leqslant R_{II} \leqslant 17.0$

with the relationship: $R_{II} \leqslant 1.78\, R_I - 8.78$

if $R_I$ verifies the relationship: $R_I < 14.5$,

or with the relationship:

$R_{II} \leqslant -1.40\, R_I + 37.30$

if $R_I$ verifies the relationship: $R_I \geqslant 14.5$;

— if $R_{er}$ verifies the relationship:

$7.5 \leqslant R_{er} < 10.0$

one has the relationships:

$10.0 \leqslant R_I \leqslant 31.0; 2.0 \leqslant R_{II} \leqslant 23.0$

with the relationship: $R_{II} \leqslant 4.40\, R_I - 32.00$

if $R_I$ verifies the relationship: $R_I \leqslant 12.5$,

or with the relationship:

$R_{II} \leqslant -1.19\, R_I + 41.50$

if $R_I$ verifies the relationship: $R_I \geqslant 15.5$;

— if $R_{er}$ verifies the relationship:

$5.0 \leqslant R_{er} < 7.5$

one has the relationships:

$10.0 \leqslant R_I \leqslant 37.0; 2.0 \leqslant R_{II} \leqslant 27.5$

with the relationship: $R_{II} \leqslant 4.17\, R_I - 26.67$

if $R_I$ verifies the relationship: $R_I \leqslant 13.0$,

or with the relationship:

$R_{II} \leqslant -1.14\, R_I + 49.14$

if $R_I$ verifies the relationship: $R_I \geqslant 19.0$;

— if $R_{er}$ verifies the relationship:

$2.5 \leqslant R_{er} < 5.0$

one has the relationships:

$10.0 \leqslant R_I \leqslant 37.0; 2.0 \leqslant R_{II} \leqslant 36.5$

with the relationship: $R_{II} \leqslant 4.63\, R_I - 28.25$

if $R_I$ verifies the relationship: $R_I \leqslant 14.0$,

or with the relationship:

$R_{II} \leqslant -1.23\, R_I + 55.60$

if $R_I$ verifies the relationship: $R_I \geqslant 15.5$;

— if $R_{er}$ verifies the relationship:

$-2.5 < R_{er} < 2.5$

one has the relationships:

$10.0 \leqslant R_I \leqslant 38.0; 2.0 \leqslant R_{II} \leqslant 40.0$

with the relationship: $R_{II} \leqslant 2.80\, R_I + 5.00$

if $R_I$ verifies the relationship: $R_I \leqslant 12.5$,

or with the relationship:

$R_{II} \leqslant -1.14\, R_I + 62.14$

if $R_I$ verifies the relationship: $R_I \geqslant 19.5$;

— if $R_{er}$ verifies the relationship:

$-5.0 < R_{er} \leqslant -2.5$

one has the relationships:

$10.0 \leqslant R_I \leqslant 35.0; 2.0 \leqslant R_{II} \leqslant 45.0$

with the relationship: $R_{II} \leqslant -1.30\, R_I + 64.50$;

— if $R_{er}$ verifies the relationship:

$-7.5 < R_{er} \leqslant -5.0$

one has the relationships:

$10.0 \leqslant R_I \leqslant 32.0; 2.0 \leqslant R_{II} \leqslant 36.0$

with the relationship: $R_{II} \leqslant 4.00\, R_I - 22.00$

if $R_I$ verifies the relationship: $R_I \leqslant 14.5$;

d) the degree of polymerization DP of the cellulose of material (I) is greater than 150 and less than 1500;

e) the esterification of the cellulose is allowed to proceed in this mixture for a period of time sufficient to obtain the anisotropic solution.

6. Method according to Claim 5, characterized in that the cellulose of cellulose material (I) has a degree of polymerization DP at least equal to 200 and at most equal to 1200 and in that one has the following relationships between $R_I$, $R_{II}$, $R_{III}$, $R_{er}$ the values of which are expressed in %:

— if $R_{er}$ verifies the relationship:

$10.0 \leqslant R_{er} < 12.5$

one has the relationships:

$13.0 \leqslant R_I \leqslant 19.0; 4.0 \leqslant R_{II} \leqslant 11.0$

with the relationship: $R_{II} \leqslant 0.73\, R_I - 2.45$

if $R_I$ verifies the relationship: $R_I < 18.5$,

or with the relationship:

$R_{II} \leqslant -2.00\, R_I + 48.00$

if $R_I$ verifies the relationship: $R_I \geqslant 18.5$;

— if $R_{er}$ verifies the relationship:

$7.5 \leqslant R_{er} < 10.0$

one has the relationships:

$12.25 \leqslant R_I \leqslant 23.0; 4.0 \leqslant R_{II} \leqslant 19.5$

with the relationship: $R_{II} \leqslant 1.65\, R_I - 10.24$

if $R_I$ verifies the relationship: $R_I < 18.0$,

or with the relationship:

$R_{II} \leqslant -1.40\, R_I + 44.70$

if $R_I$ verifies the relationship: $R_I \geqslant 18.0$;

— if $R_{er}$ verifies the relationship:

$5.0 \leqslant R_{er} < 7.5$

one has the relationships:

$11.5 \leqslant R_I \leqslant 27.5; 4.0 \leqslant R_{II} \leqslant 24.0$

with the relationship: $R_{II} \leqslant 1.38\, R_I - 2.81$

if $R_I$ verifies the relationship: $R_I < 19.5$,

or with the relationship:

$R_{II} \leqslant -1.56\, R_I + 54.47$

if $R_I$ verifies the relationship: $R_I \geqslant 19.5$;

— if $R_{er}$ verifies the relationship:

$2.5 \leqslant R_{er} < 5.0$

one has the relationships:

$10.75 \leqslant R_I \leqslant 32.0; 4.0 \leqslant R_{II} \leqslant 30.0$

with the relationship: $R_{II} \leqslant 2.07\, R_I - 5.80$

if $R_I$ verifies the relationship: $R_I \leqslant 17.5$,

or with the relationship:

$R_{II} \leqslant -1.30\, R_I + 56.74$

if $R_I$ verifies the relationship: $R_I \geqslant 20.5$;

— if $R_{er}$ verifies the relationship:

$-2.5 < R_{er} < 2.5$

one has the relationships:

$10.0 \leqslant R_I \leqslant 33.5; 4.0 \leqslant R_{II} \leqslant 35.0$

with the relationship: $R_{II} \leqslant 3.20\, R_I - 13.00$

if $R_I$ verifies the relationship: $R_I \leqslant 15.0$,

or with the relationship:

$R_{II} \leqslant -1.76\, R_I + 75.52$

if $R_I$ verifies the relationship: $R_I \geqslant 23.0$;

— if $R_{er}$ verifies the relationship:

$-5.0 < R_{er} \leqslant -2.5$

one has the relationships:

$10.0 \leqslant R_I \leqslant 33.5; 4.0 \leqslant R_{II} \leqslant 35.0$

with the relationship: $R_{II} \leqslant 3.20\, R_I - 13.00$

if $R_I$ verifies the relationship: $R_I \leqslant 15.0$,

or with the relationship:

$R_{II} \leqslant -1.85\, R_I + 72.85$

if $R_I$ verifies the relationship: $R_I \geqslant 20.5$.

7. Method according to Claim 6, characterized in that one has the following relationships between $R_I$, $R_{II}$, $R_{III}$, $R_{er}$, the values of which are expressed in %:

— if $R_{er}$ verifies the relationship:

$7.5 < R_{er} \leqslant 10.0$

one has the relationships:

$13.0 \leqslant R_I \leqslant 19.0; 4.0 \leqslant R_{II} \leqslant 11.0$

with the relationship: $R_{II} \leqslant 0.73 R_I - 2.45$

if $R_I$ verifies the relationship: $R_I < 18.5$,

or with the relationship:

$R_{II} \leqslant - 2.00 R_I + 48.00$

if $R_I$ verifies the relationship: $R_I \geqslant 18.5$;

— if $R_{er}$ verifies the relationship:

$5.0 < R_{er} \leqslant 7.5$

one has the relationships:

$12.25 \leqslant R_I \leqslant 23.0; 4.0 \leqslant R_{II} \leqslant 19.5$

with the relationship: $R_{II} \leqslant 1.65 R_I - 10.24$

if $R_I$ verifies the relationship: $R_I < 18.0$,

or with the relationship:

$R_{II} \leqslant - 1.40 R_I + 44.70$

if $R_I$ verifies the relationship: $R_I \geqslant 18.0$;

— if $R_{er}$ verifies the relationship:

$2.5 < R_{er} \leqslant 5.0$

one has the relationships:

$11.5 \leqslant R_I \leqslant 27.5; 4.0 \leqslant R_{II} \leqslant 24.0$

with the relationship: $R_{II} \leqslant 1.38 R_I - 2.81$

if $R_I$ verifies the relationship: $R_I < 19.5$,

or with the relationship:

$R_{II} \leqslant - 1.56 R_I + 54.47$

if $R_I$ verifies the relationship: $R_I \geqslant 19.5$;

— if $R_{er}$ verifies the relationship:

$0.0 < R_{er} \leqslant 2.5$

one has the relationships:

$10.75 \leqslant R_I \leqslant 32.0; 4.0 \leqslant R_{II} \leqslant 30.0$

with the relationship: $R_{II} \leqslant 2.07 R_I - 5.80$

if $R_I$ verifies the relationship: $R_I \leqslant 17.5$,

or with the relationship:

$R_{II} \leqslant - 1.30 R_I + 56.74$

if $R_I$ verifies the relationship: $R_I \geqslant 20.5$;

— if $R_{er}$ verifies the relationship:

$- 2.5 \leqslant R_{er} \leqslant 0.0$

one has the relationships:

$10.0 \leqslant R_I \leqslant 33.5; 4.0 \leqslant R_{II} \leqslant 35.0$

with the relationship: $R_{II} \leqslant 3.20 R_I - 13.00$

if $R_I$ verifies the relationship: $R_I \leqslant 15.0$,

or with the relationship:

$R_{II} \leqslant - 1.85 R_I + 72.85$

if $R_I$ verifies the relationship: $R_I \geqslant 20.5$.

8. Composition obtained according to the method in accordance with any one of Claims 5 to 7.

9. Method of obtaining an article having a base of at least one cellulose derivative, characterized by transforming the composition according to any one of Claims 1 to 4 and 8 into an article and eliminating from this article at least a part of the products other than the cellulose derivative or derivatives.

10. Method according to Claim 9, characterized in that a coagulation bath is used upon the transformation of the composition.

11. Method according to Claim 10, characterized in that the coagulation bath has a base of acetone.

12. Method according to any one of Claims 10 or 11, characterized in that the temperature of the bath is at least equal to $-20°C$ and at most equal to $10°C$.

13. Method according to any one of Claims 9 to 12, characterized in that spinning with non-coagulant fluid space (dry jet-wet) is used.

14. Method of obtaining an article having a base of regenerated cellulose, characterized by at least partly regenerating the cellulose of the article obtained according to the method in accordance with any one of Claims 9 to 13.

15. Method according to Claim 14, characterized in that the regeneration is effected with an aqueous alkaline solution.

16. Article obtained by the method according to any one of Claims 9 to 15.

17. Article according to Claim 16, characterized in that it is a fibre or a film.

18. Fibre formed at least in part of a filament having a base of at least one cellulose derivative containing cellulose ester groups, at least a part of these ester groups being formate groups, characterized in that it has the following properties:

a) the degree of substitution DS of the cellulose by formate groups is at least equal to 2% and the degree of polymerization DP of the cellulose is greater than 150 and less than 1500;

b) the tenacity T and the initial modulus $M_i$ of the fibre verify the following relationships, $T$ and $M_i$ being expressed in cN/tex: $T > 20; M_i > 1000$;

c) this filament has a morphology such that it is formed at least in part by layers embedded in each other, these layers surrounding the axis of the filament, and such that in each layer the optical direction and the direction of crystallization vary pseudoperiodically along the axis of the filament.

19. Fibre according to Claim 18, characterized in that it is without any drawing other than that resulting from its shaping.

20. Fibre according to any one of Claims 18 or 19, characterized in that its double refraction $\Delta n$ is greater than 0.03.

21. Fibre according to any of Claims 18 to 20, characterized in that the degree of polymerization DP of the cellulose of the cellulose derivative or derivatives is at least equal to 200 and at most equal to 1200.

22. Fibre formed at least in part of a filament having a base of cellulose and/or of at least one cellulose derivative containing cellulose ester groups, at least a part of these ester groups being formate groups, characterized in that it has the following properties:

a) the degree of substitution DS of the cellulose by formate groups is zero or less than 2% and the degree of polymerization DP of the cellulose is greater than 150 and less than 1500;

b) the degree of polymerization DP of the cellulose, the tenacity T and the initial modulus $M_i$ of the fibre verify the following relationships, T and $M_i$ being expressed in cN/tex:

for

$DP < 200$, one has $T > 20$ and $M_i > 1800$;

for

$200 \leqslant DP < 300$, one has $T > 30$ and $M_i > 2000$;

for

$300 \leqslant DP < 400$, one has $T > 40$ and $M_i > 2400$;

for

$400 \leqslant DP < 1500$, one has $T > 60$ and $M_i > 2600$

c) this filament has a morphology such that it is formed at least in part by layers which are embedded in each other, these layers surrounding the axis of the filament, and such that in each layer the optical direction and the direction of crystallization vary pseudoperiodically along the axis of the filament.

23. Fibre according to Claim 22, characterized in that DP, T and $M_i$ verify the following relationships, T and $M_i$ being expressed in cN/tex:

for $150 < DP < 250$,

one has $T \geqslant \dfrac{1}{3} DP - 26$ and $M_i \geqslant 2300$;

for $250 \leqslant DP < 1500$, one has

$T \geqslant - \dfrac{18675}{DP} + 132$ and $M_i \geqslant - \dfrac{502250}{DP} + 4309$.

24. Fibre according to any one of Claims 22 or 23, characterized in that its sonic modulus $M_s$ verifies the following relationship:

$M_s > 3000$ cN/tex.

25. Fibre according to any one of Claims 22 to 24, characterized in that its index of orientation I.O. verifies the following relationship:

I.O. $> 95.5\%$.

26. Fibre according to any one of Claims 22 to 25, characterized in that it is without any drawing other than that resulting from its shaping.

27. Fibre according to any one of Claims 22 to 26, characterized in that the degree of polymerization DP of the cellulose which it contains is at least equal to 200 and at most equal to 1200.

## Fig. 1

## Fig. 2

Fig. 3

## Fig. 4

Fig. 5

## fig.6

## fig.7

Fig. 8

Fig. 9